# EUROPEAN PATENT APPLICATION

(11) **EP 4 794 421 A1**
(43) Date of publication of application: **19.08.2026**
(21) Application number: 23955095.7
(22) Date of filing: 10.10.2023
(51) Int. Cl.: H04W 72/1273

(54) **HARQ-ACK FEEDBACK METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); LIN, Yanan, Dongguan, Guangdong 523860 (CN)
(74) Representative: RGTH
(86) International application number: PCT/CN2023/123864
(87) International publication number: WO 2025/076707

(57) **Abstract**

The present application belongs to the technical field of communications. Disclosed are an HARQ-ACK feedback method and apparatus, and a device and a storage medium. The method comprises: receiving first control information, wherein the first control information is used for scheduling a plurality of data transmissions; and sending HARQ-ACK information of k data transmissions among the plurality of data transmissions, a time-domain position of the HARQ-ACK information being determined on the basis of a first data transmission, wherein the first data transmission is at least one of the k data transmissions, k being a positive integer. In the technical solution provided in the embodiments of the present application, by means of at least one of k data transmissions among a plurality of data transmissions, a time-domain position for sending HARQ-ACK information of the k data transmissions is determined, such that a terminal can uniquely determine the time-domain position for sending the HARQ-ACK information of the k data transmissions, thereby improving the accuracy of HARQ-ACK feedback.

## Description

### TECHNICAL FIELD

The present disclosure relates to the technical field of communications, and in particular, to a hybrid automatic repeat request acknowledgement (HARQ-ACK) feedback method and apparatus, a device, and a storage medium.

### BACKGROUND

In a new radio (NR) system, a terminal detects control information for scheduling a data transmission and receives the corresponding data transmission; and after receiving the data transmission, the terminal needs to transmit acknowledgment information (e.g., a HARQ-ACK information) for the data transmission to a network device, to acknowledge that the data transmission has been received.

In the related art, the terminal determines a time-domain position of transmitting the HARQ-ACK information based on a time-domain position of the received data transmission. For example, the terminal detects that downlink control information (DCI) schedules a data transmission on a physical downlink shared channel (PDSCH) and the PDSCH reception ends at the end of a downlink slot (DL slot) n_{D}, then the terminal, after receiving the PDSCH, provides the HARQ-ACK information in a physical uplink control channel (PUCCH) transmission on an uplink slot (UL slot) n+k. Here, an uplink slot n is the last uplink slot overlapping with the downlink slot n_{D} where end time of the PDSCH reception is located, and k is a value indicated by an indicator field (e.g., an indicator field of PDSCH-to-HARQ_feedback timing indicator) in the DCI.

However, in a case where a piece of control information schedules multiple data transmissions, time-domain positions of the HARQ-ACK information determined based on different data transmissions may be different, resulting in the ambiguity of the HARQ-ACK feedback. How to accurately determine the time-domain position of the HARQ-ACK feedback is an issue that needs to be solved.

### SUMMARY

The present disclosure provides a HARQ-ACK feedback method and apparatus, a device, and a storage medium. The technical solutions are as follows.

In an aspect, embodiments of the present disclosure provide a HARQ-ACK feedback method, which is applied in a terminal and includes:
receiving first control information, the first control information being used to schedule a plurality of data transmissions; and
transmitting HARQ-ACK information for k data transmissions among the plurality of data transmissions, a time-domain position of the HARQ-ACK information being determined based on a first data transmission,
where the first data transmission includes at least one data transmission of the k data transmissions, k being a positive integer.

In another aspect, the embodiments of the present disclosure provide a HARQ-ACK feedback method, which is applied in a terminal and includes:
receiving first control information, the first control information being used to schedule a plurality of time-domain units; and
transmitting HARQ-ACK information, the HARQ-ACK information corresponding to data transmissions in k time-domain units among the plurality of time-domain units, and a time-domain position of the HARQ-ACK information being determined based on a first time-domain unit,
where the first time-domain unit includes at least one time-domain unit of the k time-domain units, k being a positive integer.

In another aspect, the embodiments of the present disclosure provide a HARQ-ACK feedback method, which is applied in a network device and includes:
transmitting first control information, the first control information being used to schedule a plurality of data transmissions; and
receiving HARQ-ACK information for k data transmissions among the plurality of data transmissions, a time-domain position of the HARQ-ACK information being determined based on a first data transmission,
where the first data transmission includes at least one data transmission of the k data transmissions, k being a positive integer.

In another aspect, the embodiments of the present disclosure provide a HARQ-ACK feedback method, which is applied in a network device and includes:
transmitting first control information, the first control information being used to schedule a plurality of time-domain units; and
receiving HARQ-ACK information, the HARQ-ACK information corresponding to data transmissions in k time-domain units among the plurality of time-domain units, and a time-domain position of the HARQ-ACK information being determined based on a first time-domain unit,
where the first time-domain unit includes at least one time-domain unit of the k time-domain units, k being a positive integer.

In still another aspect, the embodiments of the present disclosure provide a HARQ-ACK feedback apparatus, which is applied in a terminal and includes:
a receiving module, configured to receive first control information, the first control information being used to schedule a plurality of data transmissions; and
a transmitting module, configured to transmit HARQ-ACK information for k data transmissions among the plurality of data transmissions, a time-domain position of the HARQ-ACK information being determined based on a first data transmission,
where the first data transmission includes at least one data transmission of the k data transmissions, k being a positive integer.

In still another aspect, the embodiments of the present disclosure provide a HARQ-ACK feedback apparatus, which is applied in a terminal and includes:
a receiving module, configured to receive first control information, the first control information being used to schedule a plurality of time-domain units; and
a transmitting module, configured to transmit HARQ-ACK information, the HARQ-ACK information corresponding to data transmissions in k time-domain units among the plurality of time-domain units, and a time-domain position of the HARQ-ACK information being determined based on a first time-domain unit,
where the first time-domain unit includes at least one time-domain unit of the k time-domain units, k being a positive integer.

In a further aspect, the embodiments of the present disclosure provide a HARQ-ACK feedback apparatus, which is applied in a network device and includes:
a transmitting module, configured to transmit first control information, the first control information being used to schedule a plurality of data transmissions; and
a receiving module, configured to receive HARQ-ACK information for k data transmissions among the plurality of data transmissions, a time-domain position of the HARQ-ACK information being determined based on a first data transmission,
where the first data transmission includes at least one data transmission of the k data transmissions, k being a positive integer.

In a further aspect, the embodiments of the present disclosure provide a HARQ-ACK feedback apparatus, which is applied in a network device and includes:
a transmitting module, configured to transmit first control information, the first control information being used to schedule a plurality of time-domain units; and
a receiving module, configured to receive HARQ-ACK information, the HARQ-ACK information corresponding to data transmissions in k time-domain units among the plurality of time-domain units, and a time-domain position of the HARQ-ACK information being determined based on a first time-domain unit,
where the first time-domain unit includes at least one time-domain unit of the k time-domain units, k being a positive integer.

In a further aspect, the embodiments of the present disclosure provide a terminal, the terminal includes: a processor, a receiver and a transmitter that are connected to the processor; where
the receiver is configured to receive first control information, the first control information being used to schedule a plurality of data transmissions; and
the transmitter is configured to transmit HARQ-ACK information for k data transmissions among the plurality of data transmissions, a time-domain position of the HARQ-ACK information being determined based on a first data transmission,
where the first data transmission includes at least one data transmission of the k data transmissions, k being a positive integer.

In a further aspect, the embodiments of the present disclosure provide a terminal, the terminal includes: a processor, a receiver and a transmitter that are connected to the processor; where
the receiver is configured to receive first control information, the first control information being used to schedule a plurality of time-domain units; and
the transmitter is configured to transmit HARQ-ACK information, the HARQ-ACK information corresponding to data transmissions in k time-domain units among the plurality of time-domain units, and a time-domain position of the HARQ-ACK information being determined based on a first time-domain unit,
where the first time-domain unit includes at least one time-domain unit of the k time-domain units, k being a positive integer.

In a further aspect, the embodiments of the present disclosure provide a network device, the network device includes: a processor, a receiver and a transmitter that are connected to the processor; where
the transmitter is configured to transmit first control information, the first control information being used to schedule a plurality of data transmissions; and
the receiver is configured to receive HARQ-ACK information for k data transmissions among the plurality of data transmissions, a time-domain position of the HARQ-ACK information being determined based on a first data transmission,
where the first data transmission includes at least one data transmission of the k data transmissions, k being a positive integer.

In a further aspect, the embodiments of the present disclosure provide a network device, the network device includes: a processor, a receiver and a transmitter that are connected to the processor; where
the transmitter is configured to transmit first control information, the first control information being used to schedule a plurality of time-domain units; and
the receiver is configured to receive HARQ-ACK information, the HARQ-ACK information corresponding to data transmissions in k time-domain units among the plurality of time-domain units, and a time-domain position of the HARQ-ACK information being determined based on a first time-domain unit,
where the first time-domain unit includes at least one time-domain unit of the k time-domain units, k being a positive integer.

In a further aspect, the embodiments of the present disclosure provide a computer-readable storage medium, where the computer-readable storage medium stores computer program(s), and the computer program(s) is executed by a processor of a terminal to implement the above-mentioned HARQ-ACK feedback method on a terminal side.

In a further aspect, the embodiments of the present disclosure provide a computer-readable storage medium, where the computer-readable storage medium stores computer program(s), and the computer program(s) is executed by a processor of a network device to implement the above-mentioned HARQ-ACK feedback method on a network device side.

In a further aspect, the embodiments of the present disclosure provide a chip, including programmable logic circuits and/or program instructions, where the chip, when run on a terminal, implements the above-mentioned HARQ-ACK feedback method on a terminal side.

In a further aspect, the embodiments of the present disclosure provide a chip, including programmable logic circuits and/or program instructions, where the chip, when run on a network device, implements the above-mentioned HARQ-ACK feedback method on a network device side.

The technical solutions provided in the embodiments of the present disclosure can have the following beneficial effects.

After receiving multiple data transmissions, a terminal determines a time-domain position of transmitting HARQ-ACK information for k data transmissions based on at least one data transmission of the k data transmissions among the multiple data transmissions, and transmits the HARQ-ACK information to a network device. Since the time-domain position of the HARQ-ACK information determined based on the at least one data transmission is unique, the terminal can uniquely determine the time-domain position of transmitting the HARQ-ACK information for the k data transmissions, thereby improving the accuracy of the HARQ-ACK feedback and ensuring the consistency in understanding between the network device and the terminal.

### BRIEF DESCRIPTION OF THE DRAWINGS

FIG. 1 is a schematic diagram of determining a time-domain position of transmitting HARQ-ACK based on PDSCHs in the related art.
FIG. 2 is a schematic diagram of a communication system provided in an embodiment of the present disclosure.
FIG. 3 is a flowchart of a HARQ-ACK feedback method provided in an embodiment of the present disclosure.
FIG. 4 is a flowchart of a HARQ-ACK feedback method provided in an embodiment of the present disclosure.
FIG. 5 is a schematic diagram of a HARQ-ACK feedback method provided in an embodiment of the present disclosure.
FIG. 6 is a schematic diagram of a HARQ-ACK feedback method provided in an embodiment of the present disclosure.
FIG. 7 is a flowchart of a HARQ-ACK feedback method provided in an embodiment of the present disclosure.
FIG. 8 is a flowchart of a HARQ-ACK feedback method provided in an embodiment of the present disclosure.
FIG. 9 is a flowchart of a HARQ-ACK feedback method provided in an embodiment of the present disclosure.
FIG. 10 is a flowchart of a HARQ-ACK feedback method provided in an embodiment of the present disclosure.
FIG. 11 is a block diagram of a HARQ-ACK feedback apparatus provided in an embodiment of the present disclosure.
FIG. 12 is a block diagram of a HARQ-ACK feedback apparatus provided in an embodiment of the present disclosure.
FIG. 13 is a structural block diagram of a computer device provided in an embodiment of the present disclosure.

### DETAILED EMBODIMENTS

To make the objectives, technical solutions, and advantages of the present disclosure clearer, the embodiments of the present disclosure are described more specifically below with reference to the drawings.

In the related art, for HARQ-ACK feedback in single-cell scheduling, when a terminal detects a DCI format scheduling a PDSCH reception and the PDSCH reception ends within a downlink slot nD, the terminal provides HARQ-ACK information for the PDSCH in a PUCCH transmission within an uplink slot n+k. The determination manner of n and k is as follows.

Determination manner of n: for slot-based transmission, that is, a subslot length for the PUCCH (subslotLengthForPUCCH) is not configured, the uplink slot n is the last uplink slot that overlaps with the downlink slot nD where the PDSCH reception is located; and for sub-slot based transmission, that is, the subslotLengthForPUCCH is configured, the uplink slot n is the last uplink slot that overlaps with the PDSCH transmission.

Determination manner of k: k is a value indicated by an indicator field in the DCI format that schedules the PDSCH. For example, k is a value indicated by an indicator field of PDSCH-to-HARQ_feedback timing indicator, and the value indicated is mapped to multiple k values configured by the higher layer, such as dl-DataToUL-ACK, or dl-DataToUL-ACK-r16, or dl-DataToUL-ACK-DCI-1-2, or dl-DataToUL-ACK-r17.

For HARQ-ACK feedback in multi-cell scheduling, it supports the feature that a piece of DCI (DCI format 0_3/DCI format 1_3) schedules PDSCH(s)/physical uplink shared channel(s) (PUSCH(s)) of N cells; and N PDSCHs are transmitted on N serving cells and when N serving cells/N PDSCHs have the same subcarrier spacing, the N PDSCHs scheduled by the same DCI format 1_3 belong to the same set of PUCCHs, and thus, the HARQ-ACK feedback for multiple PDSCH is performed on the same PUCCH.

Determination manner of the time-domain position of the HARQ-ACK feedback is as follows.

In a case where the terminal detects that the DCI format 1_3 schedules a set of PDSCHs, the terminal feeds back the HARQ-ACK information on the uplink slot n+k. k is determined based on the indicator field of PDSCH-to-HARQ_feedback timing indicator in the DCI format 1_3; the determination manner of the uplink slot n is as follows: for the slot-based transmission, the uplink slot n is the last uplink slot that overlaps with the downlink slot nD where a reference PDSCH reception is located; and for the subslot-based transmission, the uplink slot n is the last uplink slot that overlaps with a reference PDSCH transmission; where a reference PDSCH is a PDSCH with a latest end time in the set of PDSCHs scheduled by the DCI format 1_3.

However, in a case where a piece of DCI schedules PDSCHs of multiple cells, and the multiple cells/multiple PDSCHs have different subcarrier spacings, there may exist a situation where at least two PDSCHs have the same end position and are all the PDSCHs with the latest end time, as such, time-domain positions for the HARQ-ACK feedback determined based on the at least two PDSCHs may be different, resulting in the ambiguity in the HARQ-ACK feedback timing.

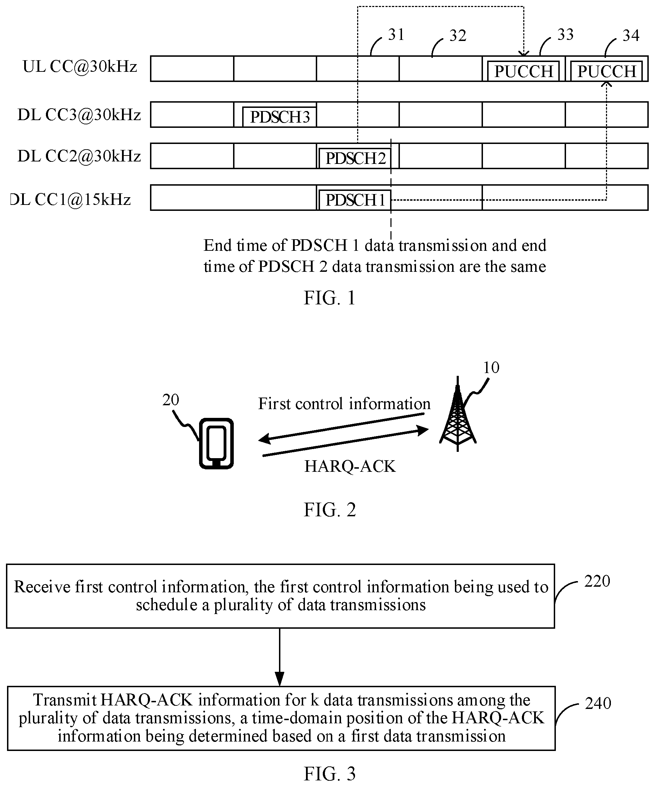

FIG. 1 illustrates a schematic diagram of determining the time-domain position of the PUCCH used for transmitting the HARQ-ACK based on the PDSCH with the latest end time in the related art. As illustrated in the figure, the DCI schedules PDSCH 1 to PDSCH 3 on cell 1 to cell 3 respectively (DL CC1 to DL CC3 as illustrated in the figure), where the DL CC1 is 15 kHz, and the DL CC2 and the DL CC3 are 30kHz. The PDSCH 1 and the PDSCH 2 have the same end position and all have the latest end time among the three PDSCHs. It is assumed that a DCI-indicated time interval between the PDSCH to the HARQ-ACK is k=2.

In a case where the PDSCH 1 is used as the reference PDSCH, the last uplink slot that overlaps with the DL slot where the PDSCH 1 is located is an uplink slot 32, and when k=2, the time-domain position of transmitting the HARQ-ACK information is determined to be an uplink slot 34. In a case where the PDSCH 2 is used as the reference PDSCH, the last uplink slot that overlaps with the DL slot where the PDSCH 2 is located is an uplink slot 31, and when k=2, the time-domain position of transmitting the HARQ-ACK information is determined to be an uplink slot 33. Therefore, it can be seen that in the case where the subcarrier spacings corresponding to the multiple cells/multiple PDSCHs are different, there is a certain degree of ambiguity in the HARQ-ACK feedback timing.

The communication system and the service scenario described in the embodiments of the present disclosure are for the purpose of more clearly describing the technical solutions in the embodiments of the present disclosure, and do not constitute a limitation on the technical solutions provided in the embodiments of the present disclosure. As those skilled in the art will understand that with the evolution of the communication system and the emergence of new service scenarios, the technical solutions provided in the embodiments of the present disclosure are also applicable to similar technical problems.

FIG. 2 illustrates a schematic diagram of a communication system provided in an embodiment of the present disclosure. The communication system may include: a network device 10 and a terminal 20.

The network device 10 is an apparatus deployed in an access network for the purpose of providing a wireless communication function to the terminal 20. The network device 10 may include macro base stations, micro base stations, relay stations, and access points or the like in various forms. In systems employing different wireless access technologies, the names of devices having functions of the network device may differ. For example, in a 5G NR (New Radio) system, these devices are referred to as gNodeB or gNB, but with the evolution of communication technologies, the name "base station" may change. For ease of description, in the embodiments of the present disclosure, the above-mentioned apparatuses that provide the wireless communication function to the terminal 20 are collectively referred to as the network device.

The terminal 20 involved in the embodiments of the present disclosure may include various handheld devices, vehicle-mounted devices, wearable devices, or computing devices having the wireless communication function or other processing devices connected to a wireless modem, as well as user equipment (UE), mobile stations (MS), terminal devices or the like in various forms. For ease of description, in the embodiments of the present disclosure, the above-mentioned devices are collectively referred to as terminals.

The network device 10 is a device for providing wireless communication services to the terminal 20. The network device 10 and the terminal 20 may establish a connection via an air interface, thereby performing communication including an exchange of signaling and data through the connection. There may be multiple network devices 10, and two neighboring network devices 10 may perform communication with each other via a wired or wireless manner. The terminal 20 may perform switch between different network devices 10. That is, the terminal 20 may establish connection with different network devices 10.

In some embodiments, the terminal 20 receives first control information transmitted by the network device 10, and the first control information is used to schedule multiple data transmissions.

In some embodiments, the terminal 20 transmits HARQ-ACK information for k data transmissions among the multiple data transmissions to the network device 10, and the time-domain position of the HARQ-ACK information is determined based on a first data transmission, where the first data transmission includes at least one data transmission of the k data transmissions.

In some embodiments, the network device 10 may also be replaced by another terminal 20. For example, in a sidelink communication system in which two terminals performs communication with each other.

It should be noted that the term "5G NR system" in the embodiments of the present disclosure may also be referred to as a 5G system or an NR system, but those skilled in the art may understand its meaning. The technical solutions described in the embodiments of the present disclosure may be applied to the 5G NR system, as well as to subsequent evolved systems of the 5G NR system.

The technical solutions of the present disclosure are introduced and described below with reference to some exemplary embodiments.

FIG. 3 illustrates a flowchart of a HARQ-ACK feedback method provided in an embodiment of the present disclosure, and the method may be applied to the communication system as illustrated in FIG. 2 and performed by the terminal 20 in FIG. 2. The method may include some operations as follows.

**In operation 220, first control information is received, where the first control information is used to schedule multiple data transmissions.**

The first control information is control information transmitted by a network device to the terminal for scheduling data transmissions. For example, the first control information is DCI transmitted by the network device to the terminal for scheduling PDSCH transmissions. For still another example, the first control information is sidelink control information (SCI) transmitted by a first terminal to a second terminal in a sidelink.

In some embodiments, the first control information includes a first indicator field, and the first indicator field is used to indicate timing from a first data transmission to HARQ-ACK information.

In some embodiments, the terminal receives the first control information transmitted by the network device, and the first control information is used to schedule the multiple data transmissions; and after receiving the first control information, the terminal receives the multiple data transmissions in accordance with a manner indicated by the first control information.

In some embodiments, the terminal receives the first control information in a blind detection manner. For example, the terminal receives the DCI in the blind detection manner.

In some embodiments, the multiple data transmissions correspond to at least two carriers, for example, N data transmissions correspond to N carriers in a one-to-one manner; or N data transmissions correspond to M carriers, and M is less than or equal to N.

In some embodiments, subcarrier spacings of the at least two carriers corresponding to the multiple data transmissions are different; or the subcarrier spacings of the at least two carriers corresponding to the multiple data transmissions are the same.

In some embodiments, the multiple data transmissions correspond to at least three carriers, and part of subcarrier spacings of the at least three carriers are the same. For example, the subcarrier spacings of the three carriers corresponding to the multiple data transmissions are 15 Hz, 30 Hz and 30 Hz, respectively.

**In operation 240, HARQ-ACK information for k data transmissions among the multiple data transmissions is transmitted, where a time-domain position of the HARQ-ACK information is determined based on the first data transmission.**

The HARQ-ACK information is feedback information transmitted by the terminal to the network device, and is used to acknowledge that the terminal has received the downlink data transmission. For example, the terminal feeds back 1 in response to successfully receiving the downlink data transmission, and feeds back 0 in response to unsuccessfully receiving the downlink data transmission. For another example, the terminal feeds back 0 in response to successfully receiving the downlink data transmission, and feeds back 1 in response to unsuccessfully receiving the downlink data transmission.

In some embodiments, the HARQ-ACK information may also be referred to as HARQ-ACK codebook, which is not limited in the present disclosure.

In some embodiments, after receiving the multiple data transmissions, the terminal transmits the HARQ-ACK information for the k data transmissions among the multiple data transmissions to the network device. For example, the terminal provides the HARQ-ACK information for the k data transmissions in a PUCCH transmission, where k is a positive integer.

The first data transmission includes at least one data transmission of the k data transmissions. That is, the time-domain position of the HARQ-ACK information for the k data transmissions is determined based on the at least one data transmission of the k data transmissions.

The first data transmission may be one data transmission of the k data transmissions, and the time-domain position of the HARQ-ACK information may be uniquely determined based on this data transmission. Alternatively, the first data transmission may include multiple data transmissions among the k data transmissions, and the time-domain position of the HARQ-ACK information may be uniquely determined based on the multiple data transmissions, for example, the end times of the multiple data transmissions are the same and subcarrier spacings corresponding to the multiple data transmissions are the same.

In some embodiments, the first data transmission is determined according to at least one of the following:
- end times corresponding respectively to all or part of data transmissions among the k data transmissions;
- subcarrier spacings corresponding respectively to all or part of data transmissions among the k data transmissions;
- serving cell indexes corresponding respectively to all or part of data transmissions among the k data transmissions;
- numbers of time-domain units corresponding respectively to all or part of data transmissions among the k data transmissions; or
- start times corresponding respectively to all or part of data transmissions among the k data transmissions.

Here, an end time of a data transmission is an end resource position of the data transmission, a start time of a data transmission is a start resource position of the data transmission, and the number of time-domain units of a data transmission is the number of time-domain resources occupied by the data transmission.

It should be noted that it is a one-to-one correspondence between the data transmission and the above-mentioned transmission feature; that is, each data transmission has its respective corresponding end time, subcarrier spacing, serving cell index, number of time-domain units, and start time.

It should be noted that the first data transmission is determined according to one of the above-mentioned transmission features; or the first data transmission is determined by combining at least two of the above-mentioned transmission features. In a case where the first data transmission is determined by combining the at least two of the above-mentioned transmission features, there is a priority among different transmission features. That is, the first data transmission is determined first by using a transmission feature with a higher priority, and when the first data transmission cannot be determined by using the transmission feature with the higher priority, the first data transmission is further determined by combining a transmission feature with a sub-higher priority. In other words, the first data transmission is determined in a multi-level determination manner according to the priority order.

In some embodiments, the first data transmission is a data transmission with a latest end time among the k data transmissions.

In some embodiments, the data transmission with the latest end time among the k data transmissions includes at least two data transmissions, that is, the at least two data transmissions end at the same time and all have the latest end time. In a case where the subcarrier spacings corresponding to the at least two data transmissions are the same, the time-domain positions of the HARQ-ACK information determined based on the at least two data transmissions are the same; and in a case where the subcarrier spacings corresponding to the at least two data transmissions are different, the time-domain positions of the HARQ-ACK information determined based on the at least two data transmissions are different. Therefore, in the case where the subcarrier spacings corresponding to the at least two data transmissions are different, it is necessary to determine the first data transmission through other transmission features. In some possible implementations, the first data transmission is determined by at least one of the following manners.
- Subcarrier spacing-based: in the case where the data transmission with the latest end time among the k data transmissions includes at least two data transmissions, the first data transmission is determined based on the subcarrier spacings corresponding to the at least two data transmissions. For example, the first data transmission is a data transmission with a smallest subcarrier spacing among the at least two data transmissions; or the first data transmission is a data transmission with a largest subcarrier spacing among the at least two data transmissions.
- Serving cell index-based: in the case where the data transmission with the latest end time among the k data transmissions includes at least two data transmissions, the first data transmission is determined based on serving cell indexes corresponding to the at least two data transmissions. For example, the first data transmission is a data transmission with a smallest serving cell index among the at least two data transmissions; or the first data transmission is a data transmission with a largest serving cell index among the at least two data transmissions.
- Number of time-domain resources-based: in the case where the data transmission with the latest end time among the k data transmissions includes at least two data transmissions, the first data transmission is determined based on numbers of time-domain resources corresponding to the at least two data transmissions. For example, the first data transmission is a data transmission with a greatest number of time-domain resources among the at least two data transmissions; or the first data transmission is a data transmission with a least number of time-domain resources among the at least two data transmissions.
- Start time-based: in the case where the data transmission with the latest end time among the k data transmissions includes at least two data transmissions, the first data transmission is determined based on start times of the at least two data transmissions. For example, the first data transmission is a data transmission with an earliest start time among the at least two data transmissions; or the first data transmission is a data transmission with a latest start time among the at least two data transmissions.

In still other embodiments, the terminal does not expect that there is more than one data transmission with the latest end time among the k data transmissions, that is, the terminal expects that there is only one data transmission with the latest end time among the k data transmissions; alternatively, the terminal does not expect that there are at least two data transmissions with the latest end time among the k data transmissions and that the subcarrier spacings corresponding to the at least two data transmissions are different, that is, the terminal expects that there is only one data transmission with the latest end time among the k data transmissions, or the terminal expects that there are at least two data transmissions with the latest end time among the k data transmissions and that the subcarrier spacings corresponding to the at least two data transmissions are the same.

That is, through a configuration or scheduling limit from the network device, when the situation where there is more than one data transmission with the latest end time and the corresponding subcarrier spacings are different is avoided, the problem that the time-domain position of HARQ-ACK feedback is ambiguous will not occur.

It should be noted that the network device would try to avoid the situation where there is more than one data transmission with the latest end time and the corresponding subcarrier spacings are different during the configuration process or scheduling process, but the network device is not bound to avoid the situation where there is more than one data transmission with the latest end time and the corresponding subcarrier spacings are different. The network device may also configure or schedule more than one data transmission with the latest end time according to other factors. The terminal's "non-expectation" may be considered the expected configuration or scheduling of the terminal, and the network device may or may not follow this expectation. However, in most cases, the network device would try to follow this expectation.

In still other embodiments, the first data transmission is determined based on serving cell indexes corresponding to the k data transmissions. That is, the first data transmission is a data transmission with the smallest serving cell index among the k data transmissions; or the first data transmission is a data transmission with the largest serving cell index among the k data transmissions.

In still other embodiments, in the case where the data transmission with the latest end time among the k data transmissions includes at least two data transmissions and the subcarrier spacings corresponding to the at least two data transmissions are different, the first data transmission is the data transmission with the smallest serving cell index among the k data transmissions; alternatively, in the case where the data transmission with the latest end time among the k data transmissions includes at least two data transmissions and the subcarrier spacings corresponding to the at least two data transmissions are different, the first data transmission is the data transmission with the largest serving cell index among the k data transmissions.

In still other embodiments, in the case where there is only one data transmission with the latest end time among the k data transmissions, the first data transmission is the data transmission with the latest end time among the k data transmissions. That is, when the data transmission with the latest end time among the k data transmissions may be uniquely determined, the first data transmission is the data transmission with the latest end time.

In still other embodiments, in the case where there are at least two data transmissions with the latest end time among the k data transmissions and the subcarrier spacings corresponding to the at least two data transmissions are the same, the first data transmission is the data transmission with the latest end time among the k data transmissions. That is, since the subcarrier spacings corresponding to the at least two data transmissions with the latest end time are the same, the time-domain positions of feed backing the HARQ-ACK information determined based on the at least two data transmissions with the latest end time are the same, and thus, the first data transmission includes all or part of data transmissions among the at least two data transmissions with the latest end time. For example, the first data transmission is any data transmission of the at least two data transmissions with the latest end time.

In some embodiments, the terminal determines the time-domain position of the HARQ-ACK information based on the first data transmission and information carried in the first control information. For example, the terminal determines the time-domain position of the HARQ-ACK information in the uplink transmission based on the first data transmission and a value indicated by the first indicator field in the DCI, where the first indicator field in the DCI is used to indicate timing from the first data transmission to the HARQ-ACK information.

In summary, in the technical solutions provided by the embodiments of the present disclosure, the terminal determines the time-domain position of the HARQ-ACK information for the k data transmissions based on at least one data transmission of the k data transmissions, so that a way to uniquely determine the time-domain position of the HARQ-ACK information is provided, thereby avoiding the problem that the time-domain positions of the HARQ-ACK information obtained based on different data transmissions are different, and thus ensuring an accurate feedback of the HARQ-ACK information. Furthermore, the consistency in the understanding of the HARQ-ACK feedback between the terminal and the network device is ensured, thereby improving the accuracy and transmission efficiency of the HARQ-ACK feedback.

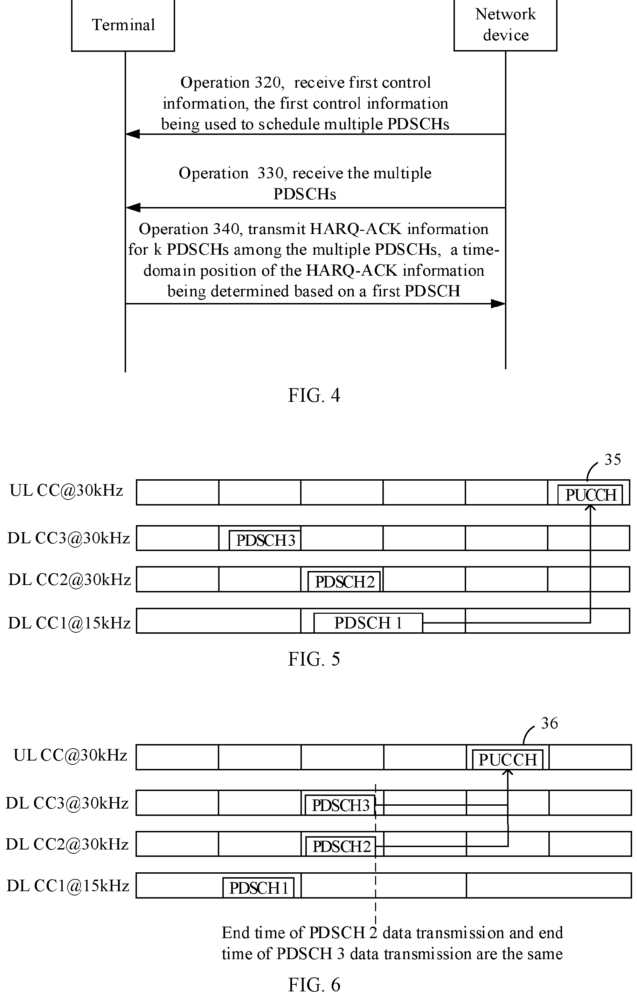

FIG. 4 illustrates a flowchart of a HARQ-ACK feedback method provided in an embodiment of the present disclosure. The method takes the example in which the data transmission is a PDSCH, and the method may be applied to the communication system as illustrated in FIG. 2 and performed by the terminal 20 in FIG. 2. The method may include some operations as follows.

**In operation 320, first control information is received, where the first control information is used to schedule multiple PDSCHs.**

The first control information is control information transmitted by a network device to the terminal for scheduling PDSCHs. For example, the first control information is DCI transmitted by the network device to the terminal for scheduling the PDSCHs.

In some embodiments, the first control information includes a first indicator field, and the first indicator field is used to indicate timing from a first PDSCH to HARQ-ACK information.

In some embodiments, the terminal receives first DCI transmitted by the network device, and the first DCI is used to schedule the multiple PDSCHs; and after receiving the first DCI, the terminal receives the PDSCHs in accordance with a manner indicated by the first DCI.

In some embodiments, the first DCI is further used to indicate an interval time from a PDSCH to a HARQ feedback; for example, an indicator field of PDSCH-to-HARQ_feedback timing indicator in the first DCI indicates an interval time from a PDSCH transmission or a PDSCH reception to the HARQ feedback.

In some embodiments, the multiple PDSCHs correspond to at least two carriers.

In some embodiments, the subcarrier spacings of the at least two carriers corresponding to the multiple PDSCHs are different; or the subcarrier spacings of the at least two carriers corresponding to the multiple PDSCHs are the same.

In some embodiments, the multiple PDSCHs correspond to at least three carriers, and part of the subcarrier spacings of the at least three carriers are the same. For example, the subcarrier spacings of the three carriers corresponding to the multiple PDSCHs are 15 Hz, 30 Hz and 30 Hz, respectively.

**In operation 330, the multiple PDSCHs are received.**

In some embodiments, the terminal receives the multiple PDSCHs according to an indication of the first control information.

For example, the terminal receives a PDSCH on a corresponding resource block according to an indication of resource (e.g., subcarrier, slot, symbol, etc.) allocation in the first control information; and for still another example, the terminal receives a PDSCH at a corresponding time according to an indication of scheduling period information in the first control information, and so on.

**In operation 340, HARQ-ACK information for k PDSCHs among the multiple PDSCHs is transmitted, where a time-domain position of the HARQ-ACK information is determined based on a first PDSCH.**

The HARQ-ACK information is feedback information transmitted by the terminal to the network device, and is used to acknowledge that the terminal has received the PDSCH.

In some embodiments, after receiving the multiple PDSCHs, the terminal transmits the HARQ-ACK information for the k PDSCHs among the multiple PDSCHs to the network device. For example, the terminal provides the HARQ-ACK information for the k PDSCHs in a PUCCH transmission, where k is a positive integer.

In some embodiments, the terminal determines the time-domain position of the HARQ-ACK information based on the first PDSCH and information carried in the first control information. For example, the terminal determines the time-domain position of the HARQ-ACK information in the uplink transmission based on the first PDSCH and a value indicated by an indicator field in the DCI.

The first PDSCH includes at least one PDSCH of the k PDSCHs. That is, the time-domain position of the HARQ-ACK information for the k PDSCHs is determined based on the at least one PDSCH of the k PDSCHs.

It should be noted that the first PDSCH refers to a PDSCH used for determining the time-domain position of the HARQ-ACK information for the k PDSCHs; and the first PDSCH may have different names in different embodiments, such as a reference PDSCH, which is not limited in the embodiments of the present disclosure.

In some embodiments, the first PDSCH is determined based on at least one of the following:
- end times corresponding respectively to all or part of PDSCHs among the k PDSCHs;
- subcarrier spacings corresponding respectively to all or part of PDSCHs among the k PDSCHs;
- serving cell indexes corresponding respectively to all or part of PDSCHs among the k PDSCHs;
- numbers of time-domain units corresponding respectively to all or part of PDSCHs among the k PDSCHs; or
- start times corresponding respectively to all or part of PDSCHs among the k PDSCHs.

Here, an end time of a PDSCH is an end resource position of the PDSCH, a start time of a PDSCH is a start resource position of the PDSCH, and the number of time-domain units of a PDSCH is the number of time-domain resources occupied by the PDSCH.

It should be noted that the first PDSCH is determined based on one of the above-mentioned transmission features; or the first PDSCH is determined by combining at least two of the above-mentioned transmission features. In a case where the first PDSCH is determined by combining the at least two of the above-mentioned transmission features, there is a priority among different transmission features. That is, the first PDSCH is determined first by using a transmission feature with a higher priority, and when the first PDSCH cannot be determined by using the transmission feature with the higher priority, the first PDSCH is further determined by combining a transmission feature with a sub-higher priority. In other words, the first PDSCH is determined by using a multi-level determination manner according to the priority order.

The manners of determining the first PDSCH are explained below.

**Manner I: the first PDSCH is a PDSCH with a latest end time among the k PDSCHs. In a case where there are at least two PDSCHs with the latest end time among the k PDSCHs and the subcarrier spacings corresponding to the at least two PDSCHs are different, the following scheme is adopted to determine the first PDSCH among the at least two PDSCHs.**
- Scheme I-1: the first PDSCH is determined based on the subcarrier spacing (SCS).

That is, in the case where the PDSCH with the latest end time among the k PDSCHs includes at least two PDSCHs and the subcarrier spacings corresponding to the at least two PDSCHs are different, the first PDSCH is determined based on the subcarrier spacings corresponding to the at least two PDSCHs.

In some embodiments, the first PDSCH is a PDSCH with a smallest subcarrier spacing among the at least two PDSCHs. Since a relatively smaller subcarrier spacing means a smaller frequency interval between subcarriers, more subcarrier symbols may be included in a symbol period, and thus, a relatively smaller subcarrier spacing corresponds to a relatively longer symbol period. By selecting a PDSCH corresponding to the smallest subcarrier spacing, the determined time-domain position of the HARQ-ACK information is relatively late, which may ensure that the terminal has enough processing time, where the symbol period is a slot or sub-slot, etc.

In still other embodiments, the first PDSCH is a PDSCH with a largest subcarrier spacing among the at least two PDSCHs. By selecting the PDSCH with the largest subcarrier spacing, the determined time-domain position of the HARQ-ACK information is relatively early, which may ensure that a delay of the HARQ-ACK feedback is short.

For the HARQ-ACK feedback for the PDSCH transmission as illustrated in FIG. 1, there are two PDSCHs with the latest end time, i.e., PDSCH 1 corresponding to DL CC1 (15Hz) and PDSCH 2 corresponding to DL CC2 (30Hz). In the case where the first PDSCH is the PDSCH with the smallest subcarrier spacing (i.e., the PDSCH 1) among the at least two PDSCHs, the HARQ-ACK is fed back on a UL slot 34 of UL CC; and in a case where the first PDSCH is the PDSCH with the largest subcarrier spacing (i.e., the PDSCH 2) among the at least two PDSCHs, the HARQ-ACK is fed back on a UL slot 33 of UL CC.
- Scheme I-2: the first PDSCH is determined based on the serving cell index.

That is, in the case where the PDSCH with the latest end time among the k PDSCHs includes at least two PDSCHs and the subcarrier spacings corresponding to the at least two PDSCHs are different, the first PDSCH is determined based on the serving cell indexes corresponding to the at least two PDSCHs. This scheme is relatively simple and the first PDSCH is determined quickly from the at least two PDSCHs with the latest end time.

In some embodiments, the first PDSCH is a PDSCH with a smallest serving cell index among the at least two PDSCHs.

In still other embodiments, the first PDSCH is a PDSCH with a largest serving cell index among the at least two PDSCHs.

For the HARQ-ACK feedback for the PDSCH transmission as illustrated in FIG. 1, there are two PDSCHs with the latest end time, i.e., the PDSCH 1 corresponding to the DL CC1 (15Hz) and the PDSCH 2 corresponding to the DL CC2 (30Hz). In the case where the first PDSCH is the PDSCH with the smallest serving cell index (i.e., the PDSCH 1) among the at least two PDSCHs, the HARQ-ACK is fed back on the UL slot 34 of UL CC; and in a case where the first PDSCH is the PDSCH with the largest serving cell index (i.e., the PDSCH 2) among the at least two PDSCHs, the HARQ-ACK is fed back on the UL slot 33 of UL CC.
- Scheme I-3: the first PDSCH is determined based on the number of time-domain resources.

That is, in the case where the PDSCH with the latest end time among the k PDSCHs includes at least two PDSCHs and the subcarrier spacings corresponding to the at least two PDSCHs are different, the first PDSCH is determined based on the numbers of time-domain resources corresponding to the at least two PDSCHs. The time-domain resources may include symbols, subframes, slots, etc.

In some embodiments, the first PDSCH is a PDSCH with a greatest number of time-domain resources among the at least two PDSCHs. Taking the time-domain resource being the symbol as an example, the first PDSCH is the PDSCH that occupies the greatest number of symbols among the at least two PDSCHs.

In still other embodiments, the first PDSCH is a PDSCH with a least number of time-domain resources among the at least two PDSCHs. Taking the time-domain resource being the symbol as an example, the first PDSCH is the PDSCH that occupies the least number of symbols among the at least two PDSCHs.
- Scheme I-4: the first PDSCH is determined based on the start time.

That is, in the case where the PDSCH with the latest end time among the k PDSCHs includes at least two PDSCHs and the subcarrier spacings corresponding to the at least two PDSCHs are different, the first PDSCH is determined based on start times corresponding to the at least two PDSCHs.

In some embodiments, the first PDSCH is a PDSCH with an earliest start time among the at least two PDSCHs. That is, the first PDSCH is a PDSCH corresponding to an earliest start resource position (a position where a start symbol is located) among the at least two PDSCHs.

In still other embodiments, the first PDSCH is a PDSCH with a latest start time among the at least two PDSCHs. That is, the first PDSCH is a PDSCH corresponding to a latest start resource position among the at least two PDSCHs.

It should be noted that in Manner I, the first PDSCH is the PDSCH with the latest end time among the k PDSCHs, and schemes I-1 to I-4 list the schemes for determining the first PDSCH when there are at least two PDSCHs with the latest end time among the k PDSCHs and their corresponding subcarrier spacings are different, that is, performing a second selection through other transmission features except the end time. In addition to the transmission features listed in schemes I-1 to I-4, other transmission features may also be used to the determination of the first PDSCH, such as frequency-domain resources of the PDSCH, a modulation mode or a encoding mode of the PDSCH transmission, which are not limited in the present disclosure.

**Manner II: the first PDSCH is the PDSCH with the latest end time among the k PDSCHs. The terminal does not expect that there is more than one PDSCH with the latest end time among the k PDSCHs and that the corresponding subcarrier spacings are different.**
- Scheme II-1: the terminal does not expect that there is more than one PDSCH with the latest end time among the k PDSCHs.

In some embodiments, through a configuration or scheduling limit from the network device, the situation where there is more than one PDSCH with the latest end time can be avoided. That is, in a case where the terminal does not expect that there is more than one PDSCH with the latest end time among the k PDSCHs, the problem that the time-domain position of the HARQ-ACK feedback is ambiguous will not occur.

FIG. 5 illustrates a schematic diagram of PDSCH transmissions provided in an embodiment of the present disclosure. As illustrated in FIG. 5, a piece of DCI schedules three PDSCHs: PDSCH 1, PDSCH 2, and PDSCH 3, and there is only one PDSCH with the latest end time, i.e., the PDSCH 1. Therefore, the first PDSCH is the PDSCH 1, and the time-domain position of the HARQ-ACK feedback determined based on the PDSCH 1 is UL slot 35 of UL CC.
- Scheme II-2: the terminal does not expect that the PDSCH with the latest end time among the k PDSCHs includes at least two PDSCHs, and the terminal does not expect that the subcarrier spacings corresponding to the at least two PDSCHs are different.

In some embodiments, through the configuration or scheduling limit from the network device, the situation where there is more than one PDSCH with the latest end time can be avoided, or the situation where there are at least two PDSCHs with the latest end time and the subcarrier spacings corresponding to the at least two PDSCHs are different can be avoided. That is, the terminal expects that there is only one PDSCH with the latest end time among the k PDSCHs; or the terminal expects that there are at least two PDSCHs with the latest end time and the subcarrier spacings corresponding to the at least two PDSCHs are the same, then the problem that the time-domain position of HARQ-ACK feedback is ambiguous will not occur.

The above-mentioned PDSCH transmission illustrated in FIG. 5 also applies to scheme II-2.

Furthermore, FIG. 6 illustrates another schematic diagram of PDSCH transmissions provided in an embodiment of the present disclosure. As illustrated in the figure, there may be more than one PDSCH among PDSCH 1, PDSCH 2 and PDSCH 3 scheduled by the DCI has the same end time, and all of the more than one PDSCH is latest to end, e.g., the PDSCH 2 and the PDSCH 3. However, since subcarrier spacings corresponding to the PDSCH 2 and PDSCH 3 are the same, the time-domain positions of the HARQ-ACK feedback determined based on the PDSCH 2 and PDSCH 3 are the same, i.e., UL slot 36 of UL CC.

**Manner III: the first PDSCH is determined based on the serving cell indexes corresponding to the k PDSCHs.**
- Scheme III-1: the first PDSCH is determined directly based on the serving cell indexes corresponding to the k PDSCHs.

The first PDSCH is a PDSCH with a smallest serving cell index among the k PDSCHs; or the first PDSCH is a PDSCH with a largest serving cell index among the k PDSCHs.

Through determining the first PDSCH based on the corresponding serving cell index, the determined first PDSCH is unique, so that the time-domain position of the HARQ-ACK information determined based on the first PDSCH is also unique, thereby avoiding the ambiguity problem of the HARQ-ACK feedback and improving the accuracy of the HARQ-ACK feedback. Meanwhile, the problem that the at least two PDSCHs is determined first and a PDSCH is determined later from the at least two PDSCHs in another manner (e.g., the two-level determination manner described in Manner I) is avoided, thereby avoiding the complexity of the two-level determination manner and improving the efficiency of the HARQ-ACK feedback.

In some embodiments, the first PDSCH is the PDSCH with the smallest serving cell index among the k PDSCHs; or the first PDSCH is the PDSCH with the largest serving cell index among the k PDSCHs. That is, the first PDSCH is determined solely based on the serving cell index, without considering other transmission features.

For the HARQ-ACK feedback for the PDSCH transmissions as illustrated in FIG. 1, the determination of the first PDSCH is not related to the end times of the three PDSCHs, instead, the PDSCH 1 with the smallest serving cell index or the PDSCH 3 with the largest serving cell index is directly selected, that is, a first PDSCH is uniquely determined, so that the time-domain position of the HARQ-ACK information is further determined based on the unique first PDSCH.
- Scheme III-2: in a case where there are at least two PDSCHs with the latest end time among the k PDSCHs and the subcarrier spacings corresponding to the at least two PDSCHs are not completely the same, the first PDSCH is determined based on the serving cell indexes corresponding to the k PDSCHs; otherwise, the first PDSCH is the PDSCH with the latest end time.

In some embodiments, in a case where there are at least two PDSCHs with the latest end time among the k PDSCHs and the subcarrier spacings corresponding to the at least two PDSCHs are different, the first PDSCH is the PDSCH with the smallest serving cell index among the k PDSCHs; alternatively, in the case where there are at least two PDSCHs with the latest end time among the k PDSCHs and the subcarrier spacings corresponding to the at least two PDSCHs are different, the first PDSCH is the PDSCH with the largest serving cell index among the k PDSCHs. That is, when there are at least two PDSCHs with the latest end time among the k PDSCHs and the subcarrier spacings corresponding to the at least two PDSCHs are different, the first PDSCH is determined based on the corresponding serving cell index; in other words, when the time-domain position of the HARQ-ACK information cannot be uniquely determined based on the first PDSCH that is determined based on the end time of the PDSCH, the first PDSCH is uniquely determined based on the serving cell index.

In still other embodiments, in the case where there is only one PDSCH with the latest end time among the k PDSCHs, the first PDSCH is the PDSCH with the latest end time among the k PDSCHs. That is, when the PDSCH with the latest end time among the k PDSCHs may be uniquely determined, the first PDSCH is the PDSCH with the latest end time, and there is no need to determine the first PDSCH via the serving cell index.

In still other embodiments, in the case where there are at least two PDSCHs with the latest end time among the k PDSCHs and the subcarrier spacings corresponding to the at least two PDSCHs are the same, the first PDSCH is the PDSCH with the latest end time among the k PDSCHs. That is, since the subcarrier spacings corresponding to the at least two PDSCHs with the latest end time are the same, the time-domain positions of feed backing the HARQ-ACK information determined based on the at least two PDSCHs with the latest end time are the same, and thus, the first PDSCH includes all or part of PDSCHs among the at least two PDSCHs with the latest end time, and there is no need to determine the first PDSCH via the serving cell index.

It should be noted that schemes I-1 to I-4, II-1 to II-2, and III-1 to III-2 in the embodiments as illustrated in FIG. 4 may be implemented as independent embodiments, that is, the first PDSCH may be determined based on different schemes, respectively. Alternatively, different schemes may be combined into an embodiment, for example, when there is only one PDSCH with the latest end time, the first PDSCH is the PDSCH with the latest end time; when there are at least two PDSCHs with the latest end time, the first PDSCH is the PDSCH with the largest serving cell index; for another example, in a case where the terminal does not expect that there is more than one PDSCH with the latest end time among the k PDSCHs, the first PDSCH is determined using the Manner II, otherwise, the first PDSCH is determined using the Manner III, and so on, which is not limited in the present disclosure.

In some embodiments, in a case where a start of a first symbol of a PUCCH carrying the HARQ-ACK, determined according to Manner I or Manner III, is not earlier than a first time after an end symbol (last symbol) of each of the k PDSCHs, the time-domain position of the PUCCH carrying the HARQ-ACK is determined according to Manner I or Manner III; otherwise, the time-domain position of the PUCCH is determined according to Manner II. Alternatively, through the configuration or scheduling limit from the network device, the terminal does not expect that the time-domain position of the PUCCH determined according to Manner I or Manner III not meet a processing time of the PDSCH. The switching or combination of different manners among Manners I to III is not limited in the present disclosure.

In summary, in the technical solutions provided by the embodiments of the present disclosure, the terminal determines the time-domain position of the HARQ-ACK information for the k PDSCHs based on at least one PDSCH of the k PDSCHs, so that a way to uniquely determine the time-domain position of the HARQ-ACK information is provided, thereby avoiding the problem that the time-domain positions of the HARQ-ACK information obtained based on different PDSCHs are different, and thus ensuring accurate feedback of the HARQ-ACK information. Furthermore, the consistency in the understanding of HARQ-ACK feedback between the terminal and the network device is ensured, thereby improving the accuracy and transmission efficiency of the HARQ-ACK feedback.

Furthermore, in the technical solution provided by the Manner I, when there are at least two PDSCHs with the latest end time and their corresponding subcarrier spacings are different, the first PDSCH is determined based on other transmission features, and the time-domain position of the HARQ-ACK information is uniquely determined through the two-level determination manner, thereby avoiding the problem that different time-domain positions of the HARQ-ACK information are determined caused by the situation where there are at least two PDSCHs with the latest end time, so that the ambiguity of the HARQ-ACK feedback is avoided and the accuracy of the HARQ-ACK feedback is improved.

Furthermore, in the technical solution provided by Scheme I-1 in Manner I, different effects may be achieved by the selection manner of the subcarrier spacing. For example, by selecting the PDSCH corresponding to the smallest corresponding subcarrier spacing, the determined time-domain position of the HARQ-ACK information is relatively late, which may ensure that the terminal has enough processing time; and by selecting the PDSCH corresponding to the largest corresponding subcarrier spacing, the determined time-domain position of the HARQ-ACK information is relatively early, which may ensure that a delay of the HARQ-ACK feedback is short.

Furthermore, in the technical solution provided by Manner II, through the configuration or scheduling limit from the network device, the situation where there is more than one PDSCH with the latest end time and the subcarrier spacings corresponding to the PDSCHs are different can be avoided, so that there is no need to determine the first PDSCH through the two-level determination manner, which makes it simpler and more efficient to determine the first PDSCH so as to determine the unique time-domain position of the HARQ-ACK information.

Furthermore, in the technical solution provided by Manner III, the first PDSCH is determined based on the serving cell index, and the first PDSCH determined by this solution is unique, avoiding the ambiguity of the HARQ-ACK feedback and eliminating the complexity of the two-level determination manner, so that the first PDSCH is determined more efficiently and the efficiency of the HARQ-ACK feedback is improved.

Furthermore, in the technical solutions provided by Scheme III-2 in Manner III, the manner of determining the first PDSCH is switched according to the number of PDSCHs with the latest end time, so that the first PDSCH is determined more flexibly, and the flexibility and transmission efficiency of the HARQ-ACK feedback are improved.

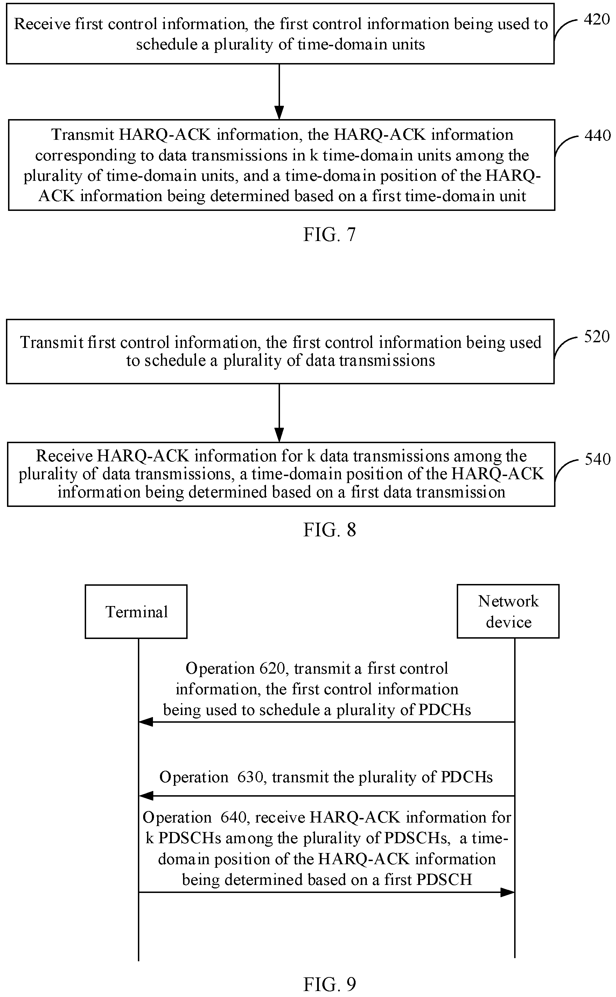

In the embodiments as illustrated in FIG. 3 and FIG. 4, the time-domain position of the HARQ-ACK information is determined by the first data transmission, but the time-domain position of the HARQ-ACK information may also be determined by a first time-domain unit. FIG. 7 illustrates a flowchart of a HARQ-ACK feedback method provided in an embodiment of the present disclosure, the method may be applied to the communication system illustrated in FIG. 2 and performed by the terminal 20 in FIG. 2. The method may include some operations as follows.

**In operation 420, first control information is received, where the first control information is used to schedule multiple time-domain units.**

The first control information is control information transmitted by a network device to the terminal for scheduling the time-domain units. For example, the first control information is DCI transmitted by the network device to the terminal for scheduling the time-domain units, and there is data transmission (e.g., PDSCH) in the time-domain unit. For another example, the first control information is SCI transmitted by the first terminal to the second terminal in a sidelink.

Here, the time-domain unit may be a subframe, a slot, a sub-slot, a set of symbols, a symbol, etc.

In some embodiments, the first control information includes a first indicator field, and the first indicator field is used to indicate timing from a time-domain unit to HARQ-ACK information.

In some embodiments, the terminal receives the first control information transmitted by the network device, and the first control information is used to schedule the multiple time-domain units; and after receiving the first control information, the terminal receives data transmissions in the multiple time-domain units in accordance with a manner indicated by the first control information.

In some embodiments, the terminal receives the first control information in a blind detection manner. For example, the terminal receives the DCI in the blind detection manner.

In some embodiments, the multiple time-domain units correspond to at least two carriers, for example, N data transmissions correspond to N carriers in a one-to-one manner; or N data transmissions correspond to M carriers, and M is less than or equal to N.

In some embodiments, subcarrier spacings of the at least two carriers corresponding to the multiple time-domain units are different; or the subcarrier spacings of the at least two carriers corresponding to the multiple time-domain units are the same.

In some embodiments, the multiple time-domain units correspond to at least three carriers, and part of subcarrier spacings of the at least three carriers are the same. For example, the subcarrier spacings of the three carriers corresponding to the multiple time-domain units are 15 Hz, 30 Hz and 30 Hz, respectively.

**In operation 440, HARQ-ACK information corresponding to k time-domain units among the multiple time-domain units is transmitted, where the HARQ-ACK information corresponds to data transmissions of the k time-domain units among the multiple time-domain units, and a time-domain position of the HARQ-ACK information is determined based on the first time-domain unit.**

The HARQ-ACK information is feedback information transmitted by the terminal to the network device, and is used to acknowledge that the terminal has received the downlink data transmission on the time-domain unit. For example, the terminal feeds back 1 in response to successfully receiving the downlink data transmission, and feeds back 0 in response to unsuccessfully receiving the downlink data transmission. For still another example, the terminal feeds back 0 in response to successfully receiving the downlink data transmission, and feeds back 1 in response to unsuccessfully receiving the downlink data transmission.

In some embodiments, the HARQ-ACK information may also be referred to as HARQ-ACK codebook, which is not limited in the present disclosure.

In some embodiments, after receiving the data transmissions in the multiple time-domain units, the terminal transmits the HARQ-ACK information for the data transmissions in the k time-domain units among the multiple time-domain units to the network device. For example, the terminal provides the HARQ-ACK information for the data transmissions in the k time-domain units in a PUCCH transmission, where k is a positive integer.

The first time-domain unit includes at least one time-domain unit of the k time-domain units. That is, the time-domain position of the HARQ-ACK information for the data transmissions in the k time-domain units is determined based on at least one time-domain unit of the k time-domain units.

The first time-domain unit may be one time-domain unit of the k time-domain units, and the time-domain position of the HARQ-ACK information may be uniquely determined based on this time-domain unit. Alternatively, the first time-domain unit may include multiple time-domain units among the k time-domain units, and the time-domain position of the HARQ-ACK information may be uniquely determined based on the multiple time-domain units, for example, the end times of the multiple time-domain units are the same and subcarrier spacings corresponding to the multiple time-domain units are the same.

In some embodiments, the first time-domain unit is determined according to at least one of the following:
end times corresponding respectively to all or part of time-domain units among the k time-domain units;
subcarrier spacings corresponding respectively to all or part of time-domain units among the k time-domain units;
serving cell indexes corresponding respectively to all or part of time-domain units among the k time-domain units;
numbers of time-domain units corresponding respectively to data transmissions in all or part of time-domain units among the k time-domain units; or
start times corresponding respectively to data transmissions in all or part of time-domain units among the k time-domain units.

Here, an end time of a data transmission is an end resource position of the data transmission, a start time of a data transmission is a start resource position of the data transmission, and the number of time-domain units of a data transmission is the number of time-domain resources occupied by the data transmission.

It should be noted that it is a one-to-one correspondence between the time-domain unit or the data transmission in the time-domain unit and the above-mentioned transmission feature; that is, each time-domain unit has its respective corresponding end time, subcarrier spacing, and serving cell index, and the data transmission in each time-domain unit has its respective corresponding number of time-domain units, and start time.

It should be noted that the first time-domain unit is determined according to one of the above-mentioned transmission features; or the first time-domain unit is determined by combining at least two of the above-mentioned transmission features. In a case where the first time-domain unit is determined by combining the at least two of the above-mentioned transmission features, there is a priority among different transmission features. That is, the first time-domain unit is determined first by using a transmission feature with a higher priority, and when the first time-domain unit cannot be determined by using the transmission feature with the higher priority, the first time-domain unit is further determined by combining a transmission feature with a sub-higher priority. In other words, the first time-domain unit is determined in a multi-level determination manner according to the priority order.

In some embodiments, the first time-domain unit is a time-domain unit with a latest end time among the k time-domain units.

In some embodiments, the time-domain unit with the latest end time among the k time-domain units includes at least two time-domain units, that is, the at least two time-domain units end at the same time and all have the latest end time. In a case where the subcarrier spacings corresponding to the at least two time-domain units are the same, the time-domain positions of the HARQ-ACK information determined based on the at least two time-domain unit are the same; and in a case where the subcarrier spacings corresponding to the at least two time-domain units are different, the time-domain positions of the HARQ-ACK information determined based on the at least two time-domain units are different. Therefore, in the case where the subcarrier spacings corresponding to the at least two time-domain units are different, it is necessary to determine the first time-domain unit through other transmission features. In some possible implementations, the first time-domain unit is determined by at least one of the following manners.
- Subcarrier spacing-based: in the case where the time-domain unit with the latest end time among the k time-domain units includes at least two time-domain units, the first time-domain unit is determined based on the subcarrier spacings corresponding to the at least two time-domain units. For example, the first time-domain unit is a time-domain unit with a smallest subcarrier spacing among the at least two time-domain units; or the first time-domain unit is a time-domain unit with a largest subcarrier spacing among the at least two time-domain units.
- Serving cell index-based: in the case where the time-domain unit with the latest end time among the k time-domain units includes at least two time-domain units, the first time-domain unit is determined based on serving cell indexes corresponding to the at least two time-domain units. For example, the first time-domain unit is a time-domain unit with a smallest serving cell index among the at least two time-domain units; or the first data transmission is a time-domain unit with a largest serving cell index among the at least two time-domain units.
- Number of time-domain resources-based: in the case where the time-domain unit with the latest end time among the k time-domain units includes at least two time-domain units, the first time-domain unit is determined based on numbers of time-domain resources corresponding to data transmissions in the at least two time-domain units. For example, the first time-domain unit is a time-domain unit where a data transmission with a greatest number of time-domain resources is located among the at least two time-domain units; or the first time-domain unit is a time-domain unit where a data transmission with a least number of time-domain resources is located among the at least two time-domain units.
- Start time-based: in the case where the time-domain unit with the latest end time among the k time-domain units includes at least two time-domain units, the first time-domain unit is determined based on start times corresponding to data transmissions in the at least two time-domain units. For example, the first time-domain unit is a time-domain unit where a data transmission with an earliest start time is located among the at least two time-domain units; or the first time-domain unit is a time-domain unit where a data transmission with a latest start time is located among the at least two time-domain units.

In still other embodiments, the terminal does not expect that there is more than one time-domain unit with the latest end time among the k time-domain units, that is, the terminal expects that there is only one time-domain unit with the latest end time among the k time-domain units; alternatively, the terminal does not expect that there are at least two time-domain units with the latest end time among the k time-domain units and that the subcarrier spacings corresponding to the at least two time-domain units are different, that is, the terminal expects that there is only one time-domain unit with the latest end time among the k time-domain units, or the terminal expects that there are at least two time-domain units with the latest end time among the k time-domain units and that the subcarrier spacings corresponding to the at least two time-domain units are the same.

That is, through a configuration or scheduling limit from the network device, when the situation where there is more than one time-domain unit where the data transmission with the latest end time is located and the corresponding subcarrier spacings are different is avoided, the problem that the time-domain position of HARQ-ACK feedback is ambiguous will not occur.

It should be noted that the network device would try to avoid the situation where there is more than one data transmission with the latest end time and the corresponding subcarrier spacings are different during the configuration process or scheduling process, but the network device is not bound to avoid the situation where there is more than one data transmission with the latest end time and the corresponding subcarrier spacings are different. The network device may also configure or schedule more than one data transmission with the latest end time according to other factors. The terminal's "non-expectation" may be considered the expected configuration or scheduling of the terminal, and the network device may or may not follow this expectation. However, in most cases, the network device would try to follow this expectation.

In still other embodiments, the first time-domain unit is determined based on serving cell indexes corresponding to the k time-domain units. That is, the first time-domain unit is a time-domain unit with the smallest serving cell index among the k time-domain units; or the first time-domain unit is a time-domain unit with the largest serving cell index among the k time-domain units.

In still other embodiments, in the case where the time-domain unit with the latest end time among the k time-domain units includes at least two time-domain units and the subcarrier spacings corresponding to the at least two time-domain units are different, the first time-domain unit is the time-domain unit with the smallest serving cell index among the k time-domain units; alternatively, in the case where the time-domain unit with the latest end time among the k time-domain units includes at least two time-domain units and the subcarrier spacings corresponding to the at least two time-domain units are different, the first time-domain unit is the time-domain unit with the largest serving cell index among the k time-domain units. That is, when the time-domain position of the HARQ-ACK information cannot be uniquely determined by the time-domain unit that is determined by the end time, the first time-domain unit is determined using the serving cell index.

In still other embodiments, in the case where there is only one time-domain unit with the latest end time among the k time-domain units, the first time-domain unit is the time-domain unit with the latest end time among the k time-domain units. That is, when the time-domain unit with the latest end time among the k time-domain units may be uniquely determined, the first time-domain unit is the time-domain unit with the latest end time.

In still other embodiments, in the case where there are at least two time-domain units with the latest end time among the k time-domain units and the subcarrier spacings corresponding to the at least two time-domain units are the same, the first time-domain unit is the time-domain unit with the latest end time among the k time-domain units. That is, since the subcarrier spacings corresponding to the at least two time-domain units with the latest end time are the same, the time-domain positions of feed backing the HARQ-ACK information determined based on the at least two time-domain units with the latest end time are the same, and thus, the first time-domain unit includes all or part of time-domain units among the at least two time-domain units with the latest end time.

In some embodiments, the terminal determines the time-domain position of the HARQ-ACK information based on the first time-domain unit and information carried in the first control information. For example, the terminal determines the time-domain position of the HARQ-ACK information in the uplink transmission based on the first time-domain unit and a value indicated by the first indicator field in the DCI, where the first indicator field in the DCI is used to indicate timing from the first time-domain unit to the HARQ-ACK information.

In summary, in the technical solutions provided by the embodiments of the present disclosure, the terminal determines the time-domain position of the HARQ-ACK information for data transmissions in the k time-domain units based on at least one time-domain unit of the k time-domain units, so that a way to uniquely determine the time-domain position of the HARQ-ACK information is provided, thereby avoiding the problem that the time-domain positions of the HARQ-ACK information obtained based on different time-domain units are different, and thus ensuring an accurate feedback of the HARQ-ACK information. Furthermore, the consistency in the understanding of the HARQ-ACK feedback between the terminal and the network device is ensured, thereby improving the accuracy and transmission efficiency of the HARQ-ACK feedback.

FIG. 8 illustrates a flowchart of a HARQ-ACK feedback method provided in an embodiment of the present disclosure, the method may be applied to the communication system as illustrated in FIG. 2 and performed by the network device 10 in FIG. 2. The method may include some operations as follows.

**In operation 520, first control information is transmitted, where the first control information is used to schedule multiple data transmissions.**

The first control information is control information for scheduling data transmissions transmitted by a network device to the terminal. For example, the first control information is DCI transmitted by the network device to the terminal for scheduling PDSCH transmissions.

In some embodiments, the first control information includes a first indicator field, and the first indicator field is used to indicate timing from a first data transmission to HARQ-ACK information.

In some embodiments, the network device transmits the first control information to the terminal, and the first control information is used to schedule the multiple data transmissions; and the first control information is used to indicate the terminal, after receiving first control information, to receive the multiple data transmissions in accordance with a manner indicated by the first control information.

In some embodiments, the first control information is received by the terminal in a blind detection manner. For example, the terminal receives the DCI in the blind detection manner.

In some embodiments, the multiple data transmissions correspond to at least two carriers. For example, N data transmissions correspond to N carriers in a one-to-one manner; or N data transmissions correspond to M carriers, and M is less than or equal to N.

In some embodiments, subcarrier spacings of the at least two carriers corresponding to the multiple data transmissions are different; or the subcarrier spacings of the at least two carriers corresponding to the multiple data transmissions are the same.

In some embodiments, the multiple data transmissions correspond to at least three carriers, and part of subcarrier spacings of the at least three carriers are the same. For example, the subcarrier spacings of the three carriers corresponding to the multiple data transmissions are 15 Hz, 30 Hz and 30 Hz, respectively.

**In operation 540, HARQ-ACK information for k data transmissions among the multiple data transmissions is received, where a time-domain position of the HARQ-ACK information is determined based on a first data transmission.**

The HARQ-ACK information is feedback information transmitted by the terminal to the network device, and is used to acknowledge that the terminal has received the downlink data transmission. For example, the terminal feeds back 1 in response to successfully receiving the downlink data transmission, and feeds back 0 in response to unsuccessfully receiving the downlink data transmission. For another example, the terminal feeds back 0 in response to successfully receiving the downlink data transmission, and feeds back 1 in response to unsuccessfully receiving the downlink data transmission.

In some embodiments, the HARQ-ACK information may also be referred to as HARQ-ACK codebook, which is not limited in the present disclosure.

In some embodiments, the network device receives the HARQ-ACK information for the k data transmissions among the multiple data transmissions transmitted by the terminal. For example, the terminal provides the HARQ-ACK information for the k data transmissions in a PUCCH transmission; and the network device receives the HARQ-ACK information carried in the PUCCH, where k is a positive integer.

The first data transmission may include at least one data transmission of the k data transmissions. That is, the time-domain position of the HARQ-ACK information for the k data transmissions is determined based on the at least one data transmission of the k data transmissions.

The first data transmission may be one data transmission of the k data transmissions, and the time-domain position of the HARQ-ACK information may be uniquely determined based on this data transmission. Alternatively, the first data transmission may include multiple data transmissions among the k data transmissions, and the time-domain position of the HARQ-ACK information may be uniquely determined based on the multiple data transmissions, for example, the end times of the multiple data transmissions are the same and subcarrier spacings corresponding to the multiple data transmissions are the same.

In some embodiments, the first data transmission is determined according to at least one of the following:
- end times corresponding respectively to all or part of data transmissions among the k data transmissions;
- subcarrier spacings corresponding respectively to all or part of data transmissions among the k data transmissions;
- serving cell indexes corresponding respectively to all or part of data transmissions among the k data transmissions;
- numbers of time-domain units corresponding respectively to all or part of data transmissions among the k data transmissions; or
- start times corresponding respectively to all or part of data transmissions among the k data transmissions.

Here, an end time of a data transmission is an end resource position of the data transmission, a start time of a data transmission is a start resource position of the data transmission, and the number of time-domain units of a data transmission is the number of time-domain resources occupied by the data transmission.

It should be noted that it is a one-to-one correspondence between the data transmission and the above-mentioned transmission feature; that is, each data transmission has its respective corresponding end time, subcarrier spacing, serving cell index, number of time-domain units, and start time.

It should be noted that the first data transmission is determined according to one of the above-mentioned transmission features; or the first data transmission is determined by combining at least two of the above-mentioned transmission features. In a case where the first data transmission is determined by combining the at least two of the above-mentioned transmission features, there is a priority among different transmission features. That is, the first data transmission is determined first by using a transmission feature with a higher priority, and when the first data transmission cannot be determined by using the transmission feature with the higher priority, the first data transmission is further determined by combining a transmission feature with a sub-higher priority. In other words, the first data transmission is determined in a multi-level determination manner according to the priority order.

In some embodiments, the first data transmission is a data transmission with a latest end time among the k data transmissions.

In some embodiments, the data transmission with the latest end time among the k data transmissions includes at least two data transmissions, that is, the at least two data transmissions end at the same time and all have the latest end time. In a case where the subcarrier spacings corresponding to the at least two data transmissions are the same, the time-domain positions of the HARQ-ACK information determined based on the at least two data transmissions are the same; and in a case where the subcarrier spacings corresponding to the at least two data transmissions are different, the time-domain positions of the HARQ-ACK information determined based on the at least two data transmissions are different. Therefore, in the case where the subcarrier spacings corresponding to the at least two data transmissions are different, it is necessary to determine the first data transmission through other transmission features. In some possible implementations, the first data transmission is determined by at least one of the following manners.
- Subcarrier spacing-based: in the case where the data transmission with the latest end time among the k data transmissions includes at least two data transmissions, the first data transmission is determined based on the subcarrier spacings corresponding to the at least two data transmissions. For example, the first data transmission is a data transmission with a smallest subcarrier spacing among the at least two data transmissions; or the first data transmission is a data transmission with a largest subcarrier spacing among the at least two data transmissions.
- Serving cell index-based: in the case where the data transmission with the latest end time among the k data transmissions includes at least two data transmissions, the first data transmission is determined based on serving cell indexes corresponding to the at least two data transmissions. For example, the first data transmission is a data transmission with a smallest serving cell index among the at least two data transmissions; or the first data transmission is a data transmission with a largest serving cell index among the at least two data transmissions.
- Number of time-domain resources-based: in the case where the data transmission with the latest end time among the k data transmissions includes at least two data transmissions, the first data transmission is determined based on numbers of time-domain resources corresponding to the at least two data transmissions. For example, the first data transmission is a data transmission with a greatest number of time-domain resources among the at least two data transmissions; or the first data transmission is a data transmission with a least number of time-domain resources among the at least two data transmissions.
- Start time-based: in the case where the data transmission with the latest end time among the k data transmissions includes at least two data transmissions, the first data transmission is determined based on start times of the at least two data transmissions. For example, the first data transmission is a data transmission with an earliest start time among the at least two data transmissions; or the first data transmission is a data transmission with a latest start time among the at least two data transmissions.

In still other embodiments, the terminal does not expect that there is more than one data transmission with the latest end time among the k data transmissions, that is, the terminal expects that there is only one data transmission with the latest end time among the k data transmissions; alternatively, the terminal does not expect that there are at least two data transmissions with the latest end time among the k data transmissions and that the subcarrier spacings corresponding to the at least two data transmissions are different, that is, the terminal expects that there is only one data transmission with the latest end time among the k data transmissions, or the terminal expects that there are at least two data transmissions with the latest end time among the k data transmissions and that the subcarrier spacings corresponding to the at least two data transmissions are the same.

That is, through a configuration or scheduling limit from the network device, when the situation where there is more than one data transmission with the latest end time and the corresponding subcarrier spacings are different is avoided, the problem that the time-domain position of HARQ-ACK feedback is ambiguous will not occur.

It should be noted that the network device would try to avoid the situation where there is more than one data transmission with the latest end time and the corresponding subcarrier spacings are different during the configuration process or scheduling process, but the network device is not bound to avoid the situation where there is more than one data transmission with the latest end time and the corresponding subcarrier spacings are different. The network device may also configure or schedule more than one data transmission with the latest end time according to other factors. The terminal's "non-expectation" may be considered the expected configuration or scheduling of the terminal, and the network device may or may not follow this expectation. However, in most cases, the network device would try to follow this expectation.

In still other embodiments, the first data transmission is determined based on serving cell indexes corresponding to the k data transmissions. That is, the first data transmission is a data transmission with the smallest serving cell index among the k data transmissions; or the first data transmission is a data transmission with the largest serving cell index among the k data transmissions.

In still other embodiments, in the case where the data transmission with the latest end time among the k data transmissions includes at least two data transmissions and the subcarrier spacings corresponding to the at least two data transmissions are different, the first data transmission is the data transmission with the smallest serving cell index among the k data transmissions; alternatively, in the case where the data transmission with the latest end time among the k data transmissions includes at least two data transmissions and the subcarrier spacings corresponding to the at least two data transmissions are different, the first data transmission is the data transmission with the largest serving cell index among the k data transmissions.

In still other embodiments, in the case where there is only one data transmission with the latest end time among the k data transmissions, the first data transmission is the data transmission with the latest end time among the k data transmissions. That is, when the data transmission with the latest end time among the k data transmissions may be uniquely determined, the first data transmission is the data transmission with the latest end time.

In still other embodiments, in the case where there are at least two data transmissions with the latest end time among the k data transmissions and the subcarrier spacings corresponding to the at least two data transmissions are the same, the first data transmission is the data transmission with the latest end time among the k data transmissions. That is, since the subcarrier spacings corresponding to the at least two data transmissions with the latest end time are the same, the time-domain positions of feed backing the HARQ-ACK information determined based on the at least two data transmissions with the latest end time are the same, and thus, the first data transmission includes all or part of data transmissions among the at least two data transmissions with the latest end time. For example, the first data transmission is any data transmission of the at least two data transmissions with the latest end time.

In some embodiments, the time-domain position of the HARQ-ACK information is determined based on the first data transmission and information carried in the first control information. For example, the time-domain position of the HARQ-ACK information in the uplink transmission is determined based on the first data transmission and a value indicated by the first indicator field in the DCI, where the first indicator field in the DCI is used to indicate timing from the first data transmission to the HARQ-ACK information.

In summary, in the technical solutions provided by the embodiments of the present disclosure, the network device receives the HARQ-ACK information for the k data transmissions, and the time-domain position of the HARQ-ACK information for the k data transmissions is determined based on at least one data transmission of the k data transmissions, so that a way to uniquely determine the time-domain position of the HARQ-ACK information is provided, thereby avoiding the problem that the time-domain positions of the HARQ-ACK information obtained based on different data transmissions are different, and thus ensuring an accurate feedback of the HARQ-ACK information. Furthermore, the consistency in the understanding of the HARQ-ACK feedback between the terminal and the network device is ensured, thereby improving the accuracy and transmission efficiency of the HARQ-ACK feedback.

FIG. 9 illustrates a flowchart of a HARQ-ACK feedback method provided in an embodiment of the present disclosure. The method takes the example in which the data transmission is the PDSCH, and the method may be applied to the communication system as illustrated in FIG. 2 and performed by the network device 10 in FIG. 2. The method may include some operations as follows.

**In operation 620, first control information is transmitted, where the first control information is used to schedule multiple PDSCHs.**

The first control information is control information transmitted by a network device to the terminal for scheduling PDSCHs. For example, the first control information is DCI transmitted by the network device to the terminal for scheduling the PDSCHs.

In some embodiments, the first control information includes a first indicator field, and the first indicator field is used to indicate timing from a first PDSCH to HARQ-ACK information.

In some embodiments, the network device transmits first DCI to the terminal, and the first DCI is used to schedule the multiple PDSCHs; and the first DCI is used to indicate the terminal, in response to receiving the first DCI, to receive the PDSCHs in accordance with a manner indicated by the first DCI.

In some embodiments, the first DCI is further used to indicate an interval time from a PDSCH to a HARQ feedback; for example, an indicator field of PDSCH-to-HARQ feedback timing indicator in the first DCI indicates an interval time from a PDSCH transmission or a PDSCH reception to the HARQ feedback.

In some embodiments, the multiple PDSCHs correspond to at least two carriers.

In some embodiments, the subcarrier spacings of the at least two carriers corresponding to the multiple PDSCHs are different; or the subcarrier spacings of the at least two carriers corresponding to the multiple PDSCHs are the same.

In some embodiments, the multiple PDSCHs correspond to at least three carriers, and part of the subcarrier spacings of the at least three carriers are the same. For example, the subcarrier spacings of the three carriers corresponding to the multiple PDSCHs are 15 Hz, 30 Hz and 30 Hz, respectively.

**In operation 330, the multiple PDSCHs are transmitted.**

In some embodiments, the network device transmits the multiple PDSCHs to the terminal.

In some embodiment, the multiple PDSCHs transmitted by the network device to the terminal are scheduled by the first control information. For example, the first control information indicates resource (e.g., subcarrier, slot, symbol, etc.) allocation of the multiple PDSCHs; and for still another example, the first control information indicates a scheduling period of the multiple PDCHs, and so on.

**In operation 640, HARQ-ACK information for k PDSCHs among the multiple PDSCHs is received, where a time-domain position of the HARQ-ACK information is determined based on a first PDSCH.**

The HARQ-ACK information is feedback information transmitted by the terminal to the network device, and is used to acknowledge that the terminal has received the PDSCH.

In some embodiments, the network device receives the HARQ-ACK information for the k PDSCHs among the multiple PDSCHs transmitted by the terminal. For example, the network device receives the HARQ-ACK information for the k PDSCHs carried in a PUCCH transmission, where k is a positive integer.

In some embodiments, the time-domain position of the HARQ-ACK information is determined based on the first PDSCH and information carried in the first control information. For example, the time-domain position of the HARQ-ACK information in the uplink transmission is determined based on the first PDSCH and a value indicated by an indicator field in the DCI.

The first PDSCH includes at least one PDSCH of the k PDSCHs. That is, the time-domain position of the HARQ-ACK information for the k PDSCHs is determined based on the at least one PDSCH of the k PDSCHs.

It should be noted that the first PDSCH refers to a PDSCH used for determining the time-domain position of the HARQ-ACK information for the k PDSCHs; and the first PDSCH may have different names in different embodiments, such as a reference PDSCH, which is not limited in the embodiments of the present disclosure.

In some embodiments, the first PDSCH is determined based on at least one of the following:
- end times corresponding respectively to all or part of PDSCHs among the k PDSCHs;
- subcarrier spacings corresponding respectively to all or part of PDSCHs among the k PDSCHs;
- serving cell indexes corresponding respectively to all or part of PDSCHs among the k PDSCHs;
- numbers of time-domain units corresponding respectively to all or part of PDSCHs among the k PDSCHs; or
- start times corresponding respectively to all or part of PDSCHs among the k PDSCHs.

Here, an end time of a PDSCH is an end resource position of the PDSCH, a start time of a PDSCH is a start resource position of the PDSCH, and the number of time-domain units of a PDSCH is the number of time-domain resources occupied by the PDSCH.

It should be noted that the first PDSCH is determined based on one of the above-mentioned transmission features; or the first PDSCH is determined by combining at least two of the above-mentioned transmission features. In a case where the first PDSCH is determined by combining the at least two of the above-mentioned transmission features, there is a priority among different transmission features. That is, the first PDSCH is determined first by using a transmission feature with a higher priority, and when the first PDSCH cannot be determined by using the transmission feature with the higher priority, the first PDSCH is further determined by combining a transmission feature with a sub-higher priority. In other words, the first PDSCH is determined by using a multi-level determination manner according to the priority order.

The manners of determining the first PDSCH are explained below.

**Manner I: the first PDSCH is a PDSCH with a latest end time among the k PDSCHs. In a case where there are at least two PDSCHs with the latest end time among the k PDSCHs and the subcarrier spacings corresponding to the at least two PDSCHs are different, the following scheme is adopted to determine the first PDSCH among the at least two PDSCHs.**
- Scheme I-1: the first PDSCH is determined based on the subcarrier spacing (SCS).

That is, in the case where the PDSCH with the latest end time among the k PDSCHs includes at least two PDSCHs and the subcarrier spacings corresponding to the at least two PDSCHs are different, the first PDSCH is determined based on the subcarrier spacings corresponding to the at least two PDSCHs.

In some embodiments, the first PDSCH is a PDSCH with a smallest subcarrier spacing among the at least two PDSCHs. Since a relatively smaller subcarrier spacing means a smaller frequency interval between subcarriers, more subcarrier symbols may be included in a symbol period, and thus, a relatively smaller subcarrier spacing corresponds to a relatively longer symbol period. By selecting a PDSCH corresponding to the smallest subcarrier spacing, the determined time-domain position of the HARQ-ACK information is relatively late, which may ensure that the terminal has enough processing time, where the symbol period is a slot or sub-slot, etc.

In still other embodiments, the first PDSCH is a PDSCH with a largest subcarrier spacing among the at least two PDSCHs. By selecting the PDSCH with the largest subcarrier spacing, the determined time-domain position of the HARQ-ACK information is relatively early, which may ensure that a delay of the HARQ-ACK feedback is short.

For the HARQ-ACK feedback for the PDSCH transmission as illustrated in FIG. 1, there are two PDSCHs with the latest end time, i.e., PDSCH 1 corresponding to DL CC1 (15Hz) and PDSCH 2 corresponding to DL CC2 (30Hz). In the case where the first PDSCH is the PDSCH with the smallest subcarrier spacing (i.e., the PDSCH 1) among the at least two PDSCHs, the HARQ-ACK is fed back on a UL slot 34 of UL CC; and in a case where the first PDSCH is the PDSCH with the largest subcarrier spacing (i.e., the PDSCH 2) among the at least two PDSCHs, the HARQ-ACK is fed back on a UL slot 33 of UL CC.
- Scheme I-2: the first PDSCH is determined based on the serving cell index.

That is, in the case where the PDSCH with the latest end time among the k PDSCHs includes at least two PDSCHs and the subcarrier spacings corresponding to the at least two PDSCHs are different, the first PDSCH is determined based on the serving cell indexes corresponding to the at least two PDSCHs. This scheme is relatively simple and the first PDSCH is determined quickly from the at least two PDSCHs with the latest end time.

In some embodiments, the first PDSCH is a PDSCH with a smallest serving cell index among the at least two PDSCHs.

In still other embodiments, the first PDSCH is a PDSCH with a largest serving cell index among the at least two PDSCHs.

For the HARQ-ACK feedback for the PDSCH transmission as illustrated in FIG. 1, there are two PDSCHs with the latest end time, i.e., the PDSCH 1 corresponding to the DL CC1 (15Hz) and the PDSCH 2 corresponding to the DL CC2 (30Hz). In the case where the first PDSCH is the PDSCH with the smallest serving cell index (i.e., the PDSCH 1) among the at least two PDSCHs, the HARQ-ACK is fed back on the UL slot 34 of UL CC; and in a case where the first PDSCH is the PDSCH with the largest serving cell index (i.e., the PDSCH 2) among the at least two PDSCHs, the HARQ-ACK is fed back on the UL slot 33 of UL CC.
- Scheme I-3: the first PDSCH is determined based on the number of time-domain resources.

That is, in the case where the PDSCH with the latest end time among the k PDSCHs includes at least two PDSCHs and the subcarrier spacings corresponding to the at least two PDSCHs are different, the first PDSCH is determined based on the numbers of time-domain resources corresponding to the at least two PDSCHs. The time-domain resources may include symbols, subframes, slots, etc.

In some embodiments, the first PDSCH is a PDSCH with a greatest number of time-domain resources among the at least two PDSCHs. Taking the time-domain resource being the symbol as an example, the first PDSCH is the PDSCH that occupies the greatest number of symbols among the at least two PDSCHs.

In still other embodiments, the first PDSCH is a PDSCH with a least number of time-domain resources among the at least two PDSCHs. Taking the time-domain resource being the symbol as an example, the first PDSCH is the PDSCH that occupies the least number of symbols among the at least two PDSCHs.
- Scheme I-4: the first PDSCH is determined based on the start time.

That is, in the case where the PDSCH with the latest end time among the k PDSCHs includes at least two PDSCHs and the subcarrier spacings corresponding to the at least two PDSCHs are different, the first PDSCH is determined based on start times corresponding to the at least two PDSCHs.

In some embodiments, the first PDSCH is a PDSCH with an earliest start time among the at least two PDSCHs. That is, the first PDSCH is a PDSCH corresponding to an earliest start resource position (a position where a start symbol is located) among the at least two PDSCHs.

In still other embodiments, the first PDSCH is a PDSCH with a latest start time among the at least two PDSCHs. That is, the first PDSCH is a PDSCH corresponding to a latest start resource position among the at least two PDSCHs.

It should be noted that in Manner I, the first PDSCH is the PDSCH with the latest end time among the k PDSCHs, and schemes I-1 to I-4 list the schemes for determining the first PDSCH when there are at least two PDSCHs with the latest end time among the k PDSCHs and their corresponding subcarrier spacings are different, that is, performing a second selection through other transmission features except the end time. In addition to the transmission features listed in schemes I-1 to I-4, other transmission features may also be used to the determination of the first PDSCH, such as frequency-domain resources of the PDSCH, a modulation mode or a encoding mode of the PDSCH transmission, which are not limited in the present disclosure.

**Manner II: the first PDSCH is the PDSCH with the latest end time among the k PDSCHs. The terminal does not expect that there is more than one PDSCH with the latest end time among the k PDSCHs and that the corresponding subcarrier spacings are different.**
- Scheme II-1: the terminal does not expect that there is more than one PDSCH with the latest end time among the k PDSCHs.

In some embodiments, through a configuration or scheduling limit from the network device, the situation where there is more than one PDSCH with the latest end time can be avoided. That is, in a case where the terminal does not expect that there is more than one PDSCH with the latest end time among the k PDSCHs, the problem that the time-domain position of the HARQ-ACK feedback is ambiguous will not occur.

FIG. 5 illustrates a schematic diagram of PDSCH transmissions provided in an embodiment of the present disclosure. As illustrated in FIG. 5, a piece of DCI schedules three PDSCHs: PDSCH 1, PDSCH 2, and PDSCH 3, and there is only one PDSCH with the latest end time, i.e., the PDSCH 1. Therefore, the first PDSCH is the PDSCH 1, and the time-domain position of the HARQ-ACK feedback determined based on the PDSCH 1 is UL slot 35 of UL CC.
- Scheme II-2: the terminal does not expect that the PDSCH with the latest end time among the k PDSCHs includes at least two PDSCHs, and the terminal does not expect that the subcarrier spacings corresponding to the at least two PDSCHs are different.

In some embodiments, through the configuration or scheduling limit from the network device, the situation where there is more than one PDSCH with the latest end time can be avoided, or the situation where there are at least two PDSCHs with the latest end time and the subcarrier spacings corresponding to the at least two PDSCHs are different can be avoided. That is, the terminal expects that there is only one PDSCH with the latest end time among the k PDSCHs; or the terminal expects that there are at least two PDSCHs with the latest end time and the subcarrier spacings corresponding to the at least two PDSCHs are the same, then the problem that the time-domain position of HARQ-ACK feedback is ambiguous will not occur.

The above-mentioned PDSCH transmission illustrated in FIG. 5 also applies to scheme II-2.

Furthermore, FIG. 6 illustrates another schematic diagram of PDSCH transmissions provided in an embodiment of the present disclosure. As illustrated in the figure, there may be more than one PDSCH among PDSCH 1, PDSCH 2 and PDSCH 3 scheduled by the DCI has the same end time, and all of the more than one PDSCH is latest to end, e.g., the PDSCH 2 and the PDSCH 3. However, since subcarrier spacings corresponding to the PDSCH 2 and PDSCH 3 are the same, the time-domain positions of the HARQ-ACK feedback determined based on the PDSCH 2 and PDSCH 3 are the same, i.e., UL slot 36 of UL CC.

**Manner III: the first PDSCH is determined based on the serving cell indexes corresponding to the k PDSCHs.**
- Scheme III-1: the first PDSCH is determined directly based on the serving cell indexes corresponding to the k PDSCHs.

The first PDSCH is a PDSCH with a smallest serving cell index among the k PDSCHs; or the first PDSCH is a PDSCH with a largest serving cell index among the k PDSCHs.

Through determining the first PDSCH based on the corresponding serving cell index, the determined first PDSCH is unique, so that the time-domain position of the HARQ-ACK information determined based on the first PDSCH is also unique, thereby avoiding the ambiguity problem of the HARQ-ACK feedback and improving the accuracy of the HARQ-ACK feedback. Meanwhile, the problem that the at least two PDSCHs is determined first and a PDSCH is determined later from the at least two PDSCHs in another manner (e.g., the two-level determination manner described in Manner I) is avoided, thereby avoiding the complexity of the two-level determination manner and improving the efficiency of the HARQ-ACK feedback.

In some embodiments, the first PDSCH is the PDSCH with the smallest serving cell index among the k PDSCHs; or the first PDSCH is the PDSCH with the largest serving cell index among the k PDSCHs. That is, the first PDSCH is determined solely based on the serving cell index, without considering other transmission features.

For the HARQ-ACK feedback for the PDSCH transmissions as illustrated in FIG. 1, the determination of the first PDSCH is not related to the end times of the three PDSCHs, instead, the PDSCH 1 with the smallest serving cell index or the PDSCH 3 with the largest serving cell index is directly selected, that is, a first PDSCH is uniquely determined, so that the time-domain position of the HARQ-ACK information is further determined based on the unique first PDSCH.
- Scheme III-2: in a case where there are at least two PDSCHs with the latest end time among the k PDSCHs and the subcarrier spacings corresponding to the at least two PDSCHs are not completely the same, the first PDSCH is determined based on the serving cell indexes corresponding to the k PDSCHs; otherwise, the first PDSCH is the PDSCH with the latest end time.

In some embodiments, in a case where there are at least two PDSCHs with the latest end time among the k PDSCHs and the subcarrier spacings corresponding to the at least two PDSCHs are different, the first PDSCH is the PDSCH with the smallest serving cell index among the k PDSCHs; alternatively, in the case where there are at least two PDSCHs with the latest end time among the k PDSCHs and the subcarrier spacings corresponding to the at least two PDSCHs are different, the first PDSCH is the PDSCH with the largest serving cell index among the k PDSCHs. That is, when there are at least two PDSCHs with the latest end time among the k PDSCHs and the subcarrier spacings corresponding to the at least two PDSCHs are different, the first PDSCH is determined based on the corresponding serving cell index; in other words, when the time-domain position of the HARQ-ACK information cannot be uniquely determined based on the first PDSCH that is determined based on the end time of the PDSCH, the first PDSCH is uniquely determined based on the serving cell index.

In still other embodiments, in the case where there is only one PDSCH with the latest end time among the k PDSCHs, the first PDSCH is the PDSCH with the latest end time among the k PDSCHs. That is, when the PDSCH with the latest end time among the k PDSCHs may be uniquely determined, the first PDSCH is the PDSCH with the latest end time, and there is no need to determine the first PDSCH via the serving cell index.

In still other embodiments, in the case where there are at least two PDSCHs with the latest end time among the k PDSCHs and the subcarrier spacings corresponding to the at least two PDSCHs are the same, the first PDSCH is the PDSCH with the latest end time among the k PDSCHs. That is, since the subcarrier spacings corresponding to the at least two PDSCHs with the latest end time are the same, the time-domain positions of feed backing the HARQ-ACK information determined based on the at least two PDSCHs with the latest end time are the same, and thus, the first PDSCH includes all or part of PDSCHs among the at least two PDSCHs with the latest end time, and there is no need to determine the first PDSCH via the serving cell index.

It should be noted that schemes I-1 to I-4, II-1 to II-2, and III-1 to III-2 in the embodiments as illustrated in FIG. 4 may be implemented as independent embodiments, that is, the first PDSCH may be determined based on different schemes, respectively. Alternatively, different schemes may be combined into an embodiment, for example, when there is only one PDSCH with the latest end time, the first PDSCH is the PDSCH with the latest end time; when there are at least two PDSCHs with the latest end time, the first PDSCH is the PDSCH with the largest serving cell index; for another example, in a case where the terminal does not expect that there is more than one PDSCH with the latest end time among the k PDSCHs, the first PDSCH is determined using the Manner II, otherwise, the first PDSCH is determined using the Manner III, and so on, which is not limited in the present disclosure.

In some embodiments, in a case where a start of a first symbol of a PUCCH carrying the HARQ-ACK, determined according to Manner I or Manner III, is not earlier than a first time after an end symbol (last symbol) of each of the k PDSCHs, the time-domain position of the PUCCH carrying the HARQ-ACK is determined according to Manner I or Manner III; otherwise, the time-domain position of the PUCCH is determined according to Manner II. Alternatively, through the configuration or scheduling limit from the network device, the terminal does not expect that the time-domain position of the PUCCH determined according to Manner I or Manner III not meet a processing time of the PDSCH. The switching or combination of different manners among Manners I to III is not limited in the present disclosure.

In summary, in the technical solutions provided by the embodiments of the present disclosure, the network device receives the HARQ-ACK information for the k data transmissions, and the time-domain position of the HARQ-ACK information for the k data transmissions is determined based on at least one data transmission of the k data transmissions, so that a way to uniquely determine the time-domain position of the HARQ-ACK information is provided, thereby avoiding the problem that the time-domain positions of the HARQ-ACK information obtained based on different PDSCHs are different, and thus ensuring an accurate feedback of the HARQ-ACK information. Furthermore, the consistency in the understanding of the HARQ-ACK feedback between the terminal and the network device is ensured, thereby improving the accuracy and transmission efficiency of the HARQ-ACK feedback.

Furthermore, in the technical solution provided by the Manner I, when there are at least two PDSCHs with the latest end time and their corresponding subcarrier spacings are different, the first PDSCH is determined based on other transmission features, and the time-domain position of the HARQ-ACK information is uniquely determined through the two-level determination manner, thereby avoiding the problem that the different time-domain positions of the HARQ-ACK information are determined caused by the situation where there are at least two PDSCHs with the latest end time, so that the ambiguity of the HARQ-ACK feedback is avoided and the accuracy of the HARQ-ACK feedback is improved.

Furthermore, in the technical solution provided by Scheme I-1 in Manner I, different effects may be achieved by the selection manner of the subcarrier spacing. For example, by selecting the PDSCH with the smallest subcarrier spacing, the determined time-domain position of the HARQ-ACK information is relatively late, which may ensure that the terminal has enough processing time; and by selecting the PDSCH with the largest subcarrier spacing, the determined time-domain position of the HARQ-ACK information is relatively early, which may ensure that a delay of the HARQ-ACK feedback is short.

Furthermore, in the technical solution provided by Manner II, through the configuration or scheduling limit from the network device, the situation where there is more than one PDSCH with the latest end time and the subcarrier spacings corresponding to the PDSCHs are different can be avoided, so that there is no need to determine the first PDSCH through the two-level determination manner, which makes it simpler and more efficient to determine the first PDSCH so as to determine the unique time-domain position of the HARQ-ACK information.

Furthermore, in the technical solution provided by Manner III, the first PDSCH is determined based on the serving cell index, and the first PDSCH determined by this solution is unique, avoiding the ambiguity of the HARQ-ACK feedback and eliminating the complexity of the two-level determination manner, so that the first PDSCH is determined more efficiently and the efficiency of the HARQ-ACK feedback is improved.

Furthermore, in the technical solutions provided by Scheme III-2 in Manner III, the manner of determining the first PDSCH is switched according to the number of PDSCHs with the latest end time, so that the first PDSCH is determined more flexibly, and the flexibility and transmission efficiency of the HARQ-ACK feedback are improved.

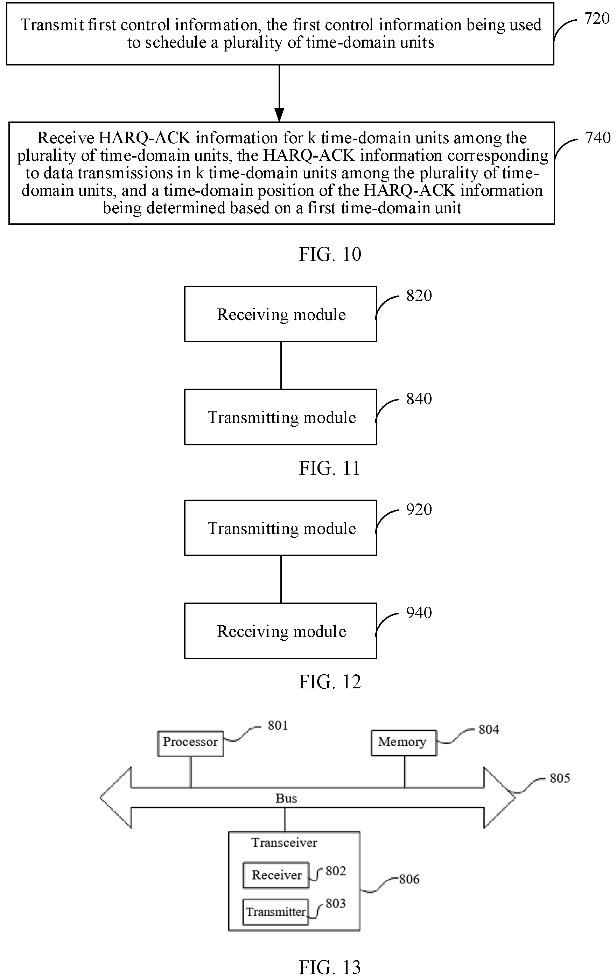

In the embodiments illustrated in FIG. 8 and FIG. 9, the time-domain position of the HARQ-ACK information is determined by the first data transmission, but the time-domain position of the HARQ-ACK information may also be determined by the first time-domain unit. FIG. 10 illustrates a flowchart of a HARQ-ACK feedback method provided in an embodiment of the present disclosure, the method may be applied to the communication system as illustrated in FIG. 2 and performed by the network device 10 in FIG. 2. The method may include some operations as follows.

**In operation 720, first control information is transmitted, where the first control information is used to schedule multiple time-domain units.**

The first control information is control information transmitted by the network device to a terminal for scheduling the time-domain units. For example, the first control information is DCI transmitted by the network device to the terminal for scheduling the time-domain units, and there is data transmission (e.g., PDSCH) in the time-domain unit.

Here, the time-domain unit may be a slot, a sub-slot, a set of symbols, etc.

In some embodiments, the first control information includes a first indicator field, and the first indicator field is used to indicate timing from a time-domain unit to HARQ-ACK information.

In some embodiments, the network device transmits the first control information to the terminal, and the first control information is used to schedule the multiple time-domain units; and the first control information is used to indicate the terminal, after receiving the first control information, to receive data transmissions in the multiple time-domain units in accordance with a manner indicated by the first control information.

In some embodiments, the first control information is received by the terminal in a blind detection manner. For example, the terminal receives the DCI in the blind detection manner.

In some embodiments, the multiple time-domain units correspond to at least two carriers, for example, N data transmissions correspond to N carriers in a one-to-one manner; or N data transmissions correspond to M carriers, and M is less than or equal to N.

In some embodiments, subcarrier spacings of the at least two carriers corresponding to the multiple time-domain units are different; or the subcarrier spacings of the at least two carriers corresponding to the multiple time-domain units are the same.

In some embodiments, the multiple time-domain units correspond to at least three carriers, and part of subcarrier spacings of the at least three carriers are the same. For example, the subcarrier spacings of the three carriers corresponding to the multiple time-domain units are 15 Hz, 30 Hz and 30 Hz, respectively.

**In operation 740, HARQ-ACK information corresponding to k time-domain units among the multiple time-domain units is received, where the HARQ-ACK information corresponds to data transmissions of the k time-domain units among the multiple time-domain units, and a time-domain position of the HARQ-ACK information is determined based on the first time-domain unit.**

The HARQ-ACK information is feedback information transmitted by the terminal to the network device, and is used to acknowledge that the terminal has received the downlink data transmission on the time-domain unit. For example, the terminal feeds back 1 in response to successfully receiving the downlink data transmission, and feeds back 0 in response to unsuccessfully receiving the downlink data transmission. For still another example, the terminal feeds back 0 in response to successfully receiving the downlink data transmission, and feeds back 1 in response to unsuccessfully receiving the downlink data transmission.

In some embodiments, the HARQ-ACK information may also be referred to as HARQ-ACK codebook, which is not limited in the present disclosure.

In some embodiments, the network device receives the HARQ-ACK information for the data transmissions in the k time-domain units among the multiple time-domain units transmitted by the terminal. For example, the terminal provides the HARQ-ACK information for the data transmissions in the k time-domain units in a PUCCH transmission; and the network device receives the HARQ-ACK information carried in the PUCCH; where k is a positive integer.

The first time-domain unit includes at least one time-domain unit of the k time-domain units. That is, the time-domain position of the HARQ-ACK information for the data transmissions in the k time-domain units is determined based on at least one time-domain unit of the k time-domain units.

The first time-domain unit may be one time-domain unit of the k time-domain units, and the time-domain position of the HARQ-ACK information may be uniquely determined based on this time-domain unit. Alternatively, the first time-domain unit may include multiple time-domain units among the k time-domain units, and the time-domain position of the HARQ-ACK information may be uniquely determined based on the multiple time-domain units, for example, the end times of the multiple time-domain units are the same and subcarrier spacings corresponding to the multiple time-domain units are the same.

In some embodiments, the first time-domain unit is determined according to at least one of the following:
end times corresponding respectively to all or part of time-domain units among the k time-domain units;
subcarrier spacings corresponding respectively to all or part of time-domain units among the k time-domain units;
serving cell indexes corresponding respectively to all or part of time-domain units among the k time-domain units;
numbers of time-domain units corresponding respectively to data transmissions in all or part of time-domain units among the k time-domain units; or
start times corresponding respectively to data transmissions in all or part of time-domain units among the k time-domain units.

Here, an end time of a data transmission is an end resource position of the data transmission, a start time of a data transmission is a start resource position of the data transmission, and the number of time-domain units of a data transmission is the number of time-domain resources occupied by the data transmission.

It should be noted that it is a one-to-one correspondence between the time-domain unit or the data transmission in the time-domain unit and the above-mentioned transmission feature; that is, each time-domain unit has its respective corresponding end time, subcarrier spacing, and serving cell index, and the data transmission in each time-domain unit has its respective corresponding number of time-domain units, and start time.

It should be noted that the first time-domain unit is determined according to one of the above-mentioned transmission features; or the first time-domain unit is determined by combining at least two of the above-mentioned transmission features. In a case where the first time-domain unit is determined by combining the at least two of the above-mentioned transmission features, there is a priority among different transmission features. That is, the first time-domain unit is determined first by using a transmission feature with a higher priority, and when the first time-domain unit cannot be determined by using the transmission feature with the higher priority, the first time-domain unit is further determined by combining a transmission feature with a sub-higher priority. In other words, the first time-domain unit is determined in a multi-level determination manner according to the priority order.

In some embodiments, the first time-domain unit is a time-domain unit with a latest end time among the k time-domain units.

In some embodiments, the time-domain unit with the latest end time among the k time-domain units includes at least two time-domain units, that is, the at least two time-domain units end at the same time and all have the latest end time. In a case where the subcarrier spacings corresponding to the at least two time-domain units are the same, the time-domain positions of the HARQ-ACK information determined based on the at least two time-domain unit are the same; and in a case where the subcarrier spacings corresponding to the at least two time-domain units are different, the time-domain positions of the HARQ-ACK information determined based on the at least two time-domain units are different. Therefore, in the case where the subcarrier spacings corresponding to the at least two time-domain units are different, it is necessary to determine the first time-domain unit through other transmission features. In some possible implementations, the first time-domain unit is determined by at least one of the following manners.
- Subcarrier spacing-based: in the case where the time-domain unit with the latest end time among the k time-domain units includes at least two time-domain units, the first time-domain unit is determined based on the subcarrier spacings corresponding to the at least two time-domain units. For example, the first time-domain unit is a time-domain unit with a smallest subcarrier spacing among the at least two time-domain units; or the first time-domain unit is a time-domain unit with a largest subcarrier spacing among the at least two time-domain units.
- Serving cell index-based: in the case where the time-domain unit with the latest end time among the k time-domain units includes at least two time-domain units, the first time-domain unit is determined based on serving cell indexes corresponding to the at least two time-domain units. For example, the first time-domain unit is a time-domain unit with a smallest serving cell index among the at least two time-domain units; or the first data transmission is a time-domain unit with a largest serving cell index among the at least two time-domain units.
- Number of time-domain resources-based: in the case where the time-domain unit with the latest end time among the k time-domain units includes at least two time-domain units, the first time-domain unit is determined based on numbers of time-domain resources corresponding to data transmissions in the at least two time-domain units. For example, the first time-domain unit is a time-domain unit where a data transmission with a greatest number of time-domain resources is located among the at least two time-domain units; or the first time-domain unit is a time-domain unit where a data transmission with a least number of time-domain resources is located among the at least two time-domain units.
- Start time-based: in the case where the time-domain unit with the latest end time among the k time-domain units includes at least two time-domain units, the first time-domain unit is determined based on start times corresponding to data transmissions in the at least two time-domain units. For example, the first time-domain unit is a time-domain unit where a data transmission with an earliest start time is located among the at least two time-domain units; or the first time-domain unit is a time-domain unit where a data transmission with a latest start time is located among the at least two time-domain units.

In still other embodiments, the terminal does not expect that there is more than one time-domain unit with the latest end time among the k time-domain units, that is, the terminal expects that there is only one time-domain unit with the latest end time among the k time-domain units; alternatively, the terminal does not expect that there are at least two time-domain units with the latest end time among the k time-domain units and that the subcarrier spacings corresponding to the at least two time-domain units are different, that is, the terminal expects that there is only one time-domain unit with the latest end time among the k time-domain units, or the terminal expects that there are at least two time-domain units with the latest end time among the k time-domain units and that the subcarrier spacings corresponding to the at least two time-domain units are the same.

That is, through a configuration or scheduling limit from the network device, when the situation where there is more than one time-domain unit where the data transmission with the latest end time is located and the corresponding subcarrier spacings are different is avoided, the problem that the time-domain position of HARQ-ACK feedback is ambiguous will not occur.

It should be noted that the network device would try to avoid the situation where there is more than one data transmission with the latest end time and the corresponding subcarrier spacings are different during the configuration process or scheduling process, but the network device is not bound to avoid the situation where there is more than one data transmission with the latest end time and the corresponding subcarrier spacings are different. The network device may also configure or schedule more than one data transmission with the latest end time according to other factors. The terminal's "non-expectation" may be considered the expected configuration or scheduling of the terminal, and the network device may or may not follow this expectation. However, in most cases, the network device would try to follow this expectation.

In still other embodiments, the first time-domain unit is determined based on serving cell indexes corresponding to the k time-domain units. That is, the first time-domain unit is a time-domain unit with the smallest serving cell index among the k time-domain units; or the first time-domain unit is a time-domain unit with the largest serving cell index among the k time-domain units.

In still other embodiments, in the case where the time-domain unit with the latest end time among the k time-domain units includes at least two time-domain units and the subcarrier spacings corresponding to the at least two time-domain units are different, the first time-domain unit is the time-domain unit with the smallest serving cell index among the k time-domain units; alternatively, in the case where the time-domain unit with the latest end time among the k time-domain units includes at least two time-domain units and the subcarrier spacings corresponding to the at least two time-domain units are different, the first time-domain unit is the time-domain unit with the largest serving cell index among the k time-domain units. That is, when the time-domain position of the HARQ-ACK information cannot be uniquely determined by the time-domain unit that is determined by the end time, the first time-domain unit is determined using the serving cell index.

In still other embodiments, in the case where there is only one time-domain unit with the latest end time among the k time-domain units, the first time-domain unit is the time-domain unit with the latest end time among the k time-domain units. That is, when the time-domain unit with the latest end time among the k time-domain units may be uniquely determined, the first time-domain unit is the time-domain unit with the latest end time.

In still other embodiments, in the case where there are at least two time-domain units with the latest end time among the k time-domain units and the subcarrier spacings corresponding to the at least two time-domain units are the same, the first time-domain unit is the time-domain unit with the latest end time among the k time-domain units. That is, since the subcarrier spacings corresponding to the at least two time-domain units with the latest end time are the same, the time-domain positions of feed backing the HARQ-ACK information determined based on the at least two time-domain units with the latest end time are the same, and thus, the first time-domain unit includes all or part of time-domain units among the at least two time-domain units with the latest end time.

In some embodiments, the time-domain position of the HARQ-ACK information is determined based on the first time-domain unit and information carried in the first control information. For example, the time-domain position of the HARQ-ACK information in the uplink transmission is determined based on the first time-domain unit and a value indicated by the first indicator field in the DCI, where the first indicator field in the DCI is used to indicate timing from the first time-domain unit to the HARQ-ACK information.

In summary, in the technical solutions provided by the embodiments of the present disclosure, the network device receives the HARQ-ACK information for data transmissions in the k time-domain units among the multiple time-domain units, and the HARQ-ACK information is determined based on at least one time-domain unit of the k time-domain units, so that a way to uniquely determine the time-domain position of the HARQ-ACK information is provided, thereby avoiding the problem that the time-domain positions of the HARQ-ACK information obtained based on different time-domain units are different, and thus ensuring an accurate feedback of the HARQ-ACK information. Furthermore, the consistency in the understanding of the HARQ-ACK feedback between the terminal and the network device is ensured, thereby improving the accuracy and transmission efficiency of the HARQ-ACK feedback.

FIG. 11 illustrates a structural block diagram of a HARQ-ACK feedback apparatus provided in an embodiment of the present disclosure. The apparatus has the function to implement the above-mentioned exemplary methods of the terminal, and the function may be achieved by the hardware or by the hardware executing the corresponding software. The apparatus may be the terminal described above, or may be installed in the terminal. As illustrated in FIG. 11, the apparatus may include a receiving module 820 and a transmitting module 840. The receiving module 820 may be implemented by the receiver in the communication device as illustrated in FIG. 13; or the receiving module 820 may be implemented by combining the receiver and the processor in the communication device as illustrated in FIG. 13. The transmitting module 840 may be implemented by the transmitter in the communication device as illustrated in FIG. 13; or the transmitting module 840 may be implemented by combining the transmitter and the processor in the communication device as illustrated in FIG. 13.

**In a possible implementation, the receiving module 820 is configured to receive first control information, and the first control information is used to schedule multiple data transmissions.**

The first control information is control information for scheduling data transmissions transmitted by a network device to the terminal. For example, the first control information is DCI transmitted by the network device to the terminal for scheduling PDSCH transmissions. For another example, the first control information is sidelink control information (SCI) transmitted by a first terminal to a second terminal in a sidelink.

In some embodiments, the first control information includes a first indicator field, and the first indicator field is used to indicate timing from a first data transmission to HARQ-ACK information.

In some embodiments, the receiving module 820 receives the first control information transmitted by the network device, and the first control information is used to schedule the multiple data transmissions; and after receiving first control information, the receiving module 820 receives the multiple data transmissions in accordance with a manner indicated by the first control information.

In some embodiments, the receiving module 820 receives the first control information in a blind detection manner. For example, the receiving module 820 receives the DCI in the blind detection manner.

In some embodiments, the multiple data transmissions correspond to at least two carriers. For example, N data transmissions correspond to N carriers in a one-to-one manner; or N data transmissions correspond to M carriers, and M is less than or equal to N.

In some embodiments, subcarrier spacings of the at least two carriers corresponding to the multiple data transmissions are different; or the subcarrier spacings of the at least two carriers corresponding to the multiple data transmissions are the same.

In some embodiments, the multiple data transmissions correspond to at least three carriers, and part of subcarrier spacings of the at least three carriers are the same. For example, the subcarrier spacings of the three carriers corresponding to the multiple **data transmissions** are 15 Hz, 30 Hz and 30 Hz, respectively.

**The transmitting module 840 is configured to transmit HARQ-ACK information for k data transmissions among the multiple data transmissions, and a time-domain position of the HARQ-ACK information is determined based on a first data transmission.**

The HARQ-ACK information is feedback information transmitted by the terminal to the network device, and is used to acknowledge that the terminal has received the downlink data transmission. For example, the terminal feeds back 1 in response to successfully receiving the downlink data transmission, and feeds back 0 in response to unsuccessfully receiving the downlink data transmission. For another example, the terminal feeds back 0 in response to successfully receiving the downlink data transmission, and feeds back 1 in response to unsuccessfully receiving the downlink data transmission.

In some embodiments, the HARQ-ACK information may also be referred to as HARQ-ACK codebook, which is not limited in the present disclosure.

In some embodiments, after the receiving module 820 receives the multiple data transmissions, the transmitting module 840 transmits the HARQ-ACK information for the k data transmissions among the multiple data transmissions to the network device. For example, the transmitting module 840 provides the HARQ-ACK information for the k data transmissions in a PUCCH transmission, where k is a positive integer.

The first data transmission includes at least one data transmission of the k data transmissions. That is, the time-domain position of the HARQ-ACK information for the k data transmissions is determined based on the at least one data transmission of the k data transmissions.

The first data transmission may be one data transmission of the k data transmissions, and the time-domain position of the HARQ-ACK information may be uniquely determined based on this data transmission. Alternatively, the first data transmission may include multiple data transmissions among the k data transmissions, and the time-domain position of the HARQ-ACK information may be uniquely determined based on the multiple data transmissions, for example, the end times of the multiple data transmissions are the same and subcarrier spacings corresponding to the multiple data transmissions are the same.

In some embodiments, the first data transmission is determined according to at least one of the following:
- end times corresponding respectively to all or part of data transmissions among the k data transmissions;
- subcarrier spacings corresponding respectively to all or part of data transmissions among the k data transmissions;
- serving cell indexes corresponding respectively to all or part of data transmissions among the k data transmissions;
- numbers of time-domain units corresponding respectively to all or part of data transmissions among the k data transmissions; or
- start times corresponding respectively to all or part of data transmissions among the k data transmissions.

Here, an end time of a data transmission is an end resource position of the data transmission, a start time of a data transmission is a start resource position of the data transmission, and the number of time-domain units of a data transmission is the number of time-domain resources occupied by the data transmission.

It should be noted that it is a one-to-one correspondence between the data transmission and the above-mentioned transmission feature; that is, each data transmission has its respective corresponding end time, subcarrier spacing, serving cell index, number of time-domain units, and start time.

It should be noted that the first data transmission is determined according to one of the above-mentioned transmission features; or the first data transmission is determined by combining at least two of the above-mentioned transmission features. In a case where the first data transmission is determined by combining the at least two of the above-mentioned transmission features, there is a priority among different transmission features. That is, the first data transmission is determined first by using a transmission feature with a higher priority, and when the first data transmission cannot be determined by using the transmission feature with the higher priority, the first data transmission is further determined by combining a transmission feature with a sub-higher priority. In other words, the first data transmission is determined in a multi-level determination manner according to the priority order.

In some embodiments, the first data transmission is a data transmission with a latest end time among the k data transmissions.

In some embodiments, the data transmission with the latest end time among the k data transmissions includes at least two data transmissions, that is, the at least two data transmissions end at the same time and all have the latest end time. In a case where the subcarrier spacings corresponding to the at least two data transmissions are the same, the time-domain positions of the HARQ-ACK information determined based on the at least two data transmissions are the same; and in a case where the subcarrier spacings corresponding to the at least two data transmissions are different, the time-domain positions of the HARQ-ACK information determined based on the at least two data transmissions are different. Therefore, in the case where the subcarrier spacings corresponding to the at least two data transmissions are different, it is necessary to determine the first data transmission through other transmission features. In some possible implementations, the first data transmission is determined by at least one of the following manners.
- Subcarrier spacing-based: in the case where the data transmission with the latest end time among the k data transmissions includes at least two data transmissions, the first data transmission is determined based on the subcarrier spacings corresponding to the at least two data transmissions. For example, the first data transmission is a data transmission with a smallest subcarrier spacing among the at least two data transmissions; or the first data transmission is a data transmission with a largest subcarrier spacing among the at least two data transmissions.
- Serving cell index-based: in the case where the data transmission with the latest end time among the k data transmissions includes at least two data transmissions, the first data transmission is determined based on serving cell indexes corresponding to the at least two data transmissions. For example, the first data transmission is a data transmission with a smallest serving cell index among the at least two data transmissions; or the first data transmission is a data transmission with a largest serving cell index among the at least two data transmissions.
- Number of time-domain resources-based: in the case where the data transmission with the latest end time among the k data transmissions includes at least two data transmissions, the first data transmission is determined based on numbers of time-domain resources corresponding to the at least two data transmissions. For example, the first data transmission is a data transmission with a greatest number of time-domain resources among the at least two data transmissions; or the first data transmission is a data transmission with a least number of time-domain resources among the at least two data transmissions.
- Start time-based: in the case where the data transmission with the latest end time among the k data transmissions includes at least two data transmissions, the first data transmission is determined based on start times of the at least two data transmissions. For example, the first data transmission is a data transmission with an earliest start time among the at least two data transmissions; or the first data transmission is a data transmission with a latest start time among the at least two data transmissions.

In still other embodiments, the terminal does not expect that there is more than one data transmission with the latest end time among the k data transmissions, that is, the terminal expects that there is only one data transmission with the latest end time among the k data transmissions; alternatively, the terminal does not expect that there are at least two data transmissions with the latest end time among the k data transmissions and that the subcarrier spacings corresponding to the at least two data transmissions are different, that is, the terminal expects that there is only one data transmission with the latest end time among the k data transmissions, or the terminal expects that there are at least two data transmissions with the latest end time among the k data transmissions and that the subcarrier spacings corresponding to the at least two data transmissions are the same.

That is, through a configuration or scheduling limit from the network device, when the situation where there is more than one data transmission with the latest end time and the corresponding subcarrier spacings are different is avoided, the problem that the time-domain position of HARQ-ACK feedback is ambiguous will not occur.

It should be noted that the network device would try to avoid the situation where there is more than one data transmission with the latest end time and the corresponding subcarrier spacings are different during the configuration process or scheduling process, but the network device is not bound to avoid the situation where there is more than one data transmission with the latest end time and the corresponding subcarrier spacings are different. The network device may also configure or schedule more than one data transmission with the latest end time according to other factors. The terminal's "non-expectation" may be considered the expected configuration or scheduling of the terminal, and the network device may or may not follow this expectation. However, in most cases, the network device would try to follow this expectation.

In still other embodiments, the first data transmission is determined based on serving cell indexes corresponding to the k data transmissions. That is, the first data transmission is a data transmission with the smallest serving cell index among the k data transmissions; or the first data transmission is a data transmission with the largest serving cell index among the k data transmissions.

In still other embodiments, in the case where the data transmission with the latest end time among the k data transmissions includes at least two data transmissions and the subcarrier spacings corresponding to the at least two data transmissions are different, the first data transmission is the data transmission with the smallest serving cell index among the k data transmissions; alternatively, in the case where the data transmission with the latest end time among the k data transmissions includes at least two data transmissions and the subcarrier spacings corresponding to the at least two data transmissions are different, the first data transmission is the data transmission with the largest serving cell index among the k data transmissions.

In still other embodiments, in the case where there is only one data transmission with the latest end time among the k data transmissions, the first data transmission is the data transmission with the latest end time among the k data transmissions. That is, when the data transmission with the latest end time among the k data transmissions may be uniquely determined, the first data transmission is the data transmission with the latest end time.

In still other embodiments, in the case where there are at least two data transmissions with the latest end time among the k data transmissions and the subcarrier spacings corresponding to the at least two data transmissions are the same, the first data transmission is the data transmission with the latest end time among the k data transmissions. That is, since the subcarrier spacings corresponding to the at least two data transmissions with the latest end time are the same, the time-domain positions of feed backing the HARQ-ACK information determined based on the at least two data transmissions with the latest end time are the same, and thus, the first data transmission includes all or part of data transmissions among the at least two data transmissions with the latest end time. For example, the first data transmission is any data transmission of the at least two data transmissions with the latest end time.

In some embodiments, the time-domain position of the HARQ-ACK information is determined based on the first data transmission and information carried in the first control information. For example, the time-domain position of the HARQ-ACK information in the uplink transmission is determined based on the first data transmission and a value indicated by the first indicator field in the DCI, where the first indicator field in the DCI is used to indicate timing from the first data transmission to the HARQ-ACK information.

**In another possible implementation, the receiving module 820 is configured to receive the first control information, where the first control information is used to schedule multiple PDSCHs.**

The first control information is control information transmitted by a network device to the terminal for scheduling PDSCHs. For example, the first control information is DCI transmitted by the network device to the terminal for scheduling the PDSCHs.

In some embodiments, the first control information includes a first indicator field, and the first indicator field is used to indicate timing from a first PDSCH to HARQ-ACK information.

In some embodiments, the receiving module 820 receives first DCI transmitted by the network device, and the first DCI is used to schedule the multiple PDSCHs; and after receiving the first DCI, the receiving module 820 receives the PDSCHs in accordance with a manner indicated by the first DCI.

In some embodiments, the first DCI is further used to indicate an interval time from a PDSCH to a HARQ feedback; for example, an indicator field of PDSCH-to-HARQ_feedback timing indicator in the first DCI indicates an interval time from a PDSCH transmission or a PDSCH reception to the HARQ feedback.

In some embodiments, the multiple PDSCHs correspond to at least two carriers.

In some embodiments, the subcarrier spacings of the at least two carriers corresponding to the multiple PDSCHs are different; or the subcarrier spacings of the at least two carriers corresponding to the multiple PDSCHs are the same.

In some embodiments, the multiple PDSCHs correspond to at least three carriers, and part of the subcarrier spacings of the at least three carriers are the same. For example, the subcarrier spacings of the three carriers corresponding to the multiple PDSCHs are 15 Hz, 30 Hz and 30 Hz, respectively.

**The receiving module 820 is configured to receive the multiple PDSCHs.**

In some embodiments, the receiving module 820 receives the multiple PDSCHs according to an indication of the first control information.

For example, the receiving module 820 receives a PDSCH on a corresponding resource block according to an indication of resource (e.g., subcarrier, slot, symbol, etc.) allocation in the first control information; and for still another example, the receiving module 820 receives the PDSCH at a corresponding time according to an indication of scheduling period information in the first control information, and so on.

**The transmitting module 840 is configured to transmit HARQ-ACK information for k PDSCHs among the multiple PDSCHs, and a time-domain position of the HARQ-ACK information is determined based on a first PDSCH.**

The HARQ-ACK information is feedback information transmitted by the terminal to the network device, and is used to acknowledge that the terminal has received the PDSCH.

In some embodiments, after the receiving module 820 receives the multiple PDSCHs, the transmitting module 840 transmits the HARQ-ACK information for the k PDSCHs among the multiple PDSCHs to the network device. For example, the transmitting module 840 provides the HARQ-ACK information for the k PDSCHs in a PUCCH transmission, where k is a positive integer.

In some embodiments, the time-domain position of the HARQ-ACK information is determined based on the first PDSCH and information carried in the first control information. For example, the time-domain position of the HARQ-ACK information in the uplink transmission is determined based on the first PDSCH and a value indicated by an indicator field in the DCI.

The first PDSCH includes at least one PDSCH of the k PDSCHs. That is, the time-domain position of the HARQ-ACK information for the k PDSCHs is determined based on the at least one PDSCH of the k PDSCHs.

It should be noted that the first PDSCH refers to a PDSCH used for determining the time-domain position of the HARQ-ACK information for the k PDSCHs; and the first PDSCH may have different names in different embodiments, such as a reference PDSCH, which is not limited in the embodiments of the present disclosure.

In some embodiments, the first PDSCH is determined based on at least one of the following:
- end times corresponding respectively to all or part of PDSCHs among the k PDSCHs;
- subcarrier spacings corresponding respectively to all or part of PDSCHs among the k PDSCHs;
- serving cell indexes corresponding respectively to all or part of PDSCHs among the k PDSCHs;
- numbers of time-domain units corresponding respectively to all or part of PDSCHs among the k PDSCHs; or
- start times corresponding respectively to all or part of PDSCHs among the k PDSCHs.

Here, an end time of a PDSCH is an end resource position of the PDSCH, a start time of a PDSCH is a start resource position of the PDSCH, and the number of time-domain units of a PDSCH is the number of time-domain resources occupied by the PDSCH.

It should be noted that the first PDSCH is determined based on one of the above-mentioned transmission features; or the first PDSCH is determined by combining at least two of the above-mentioned transmission features. In a case where the first PDSCH is determined by combining the at least two of the above-mentioned transmission features, there is a priority among different transmission features. That is, the first PDSCH is determined first by using a transmission feature with a higher priority, and when the first PDSCH cannot be determined by using the transmission feature with the higher priority, the first PDSCH is further determined by combining a transmission feature with a sub-higher priority. In other words, the first PDSCH is determined by using a multi-level determination manner according to the priority order.

The manners of determining the first PDSCH are explained below.

**Manner I: the first PDSCH is a PDSCH with a latest end time among the k PDSCHs. In a case where there are at least two PDSCHs with the latest end time among the k PDSCHs and the subcarrier spacings corresponding to the at least two PDSCHs are different, the following scheme is adopted to determine the first PDSCH among the at least two PDSCHs.**
- Scheme I-1: the first PDSCH is determined based on the subcarrier spacing (SCS).

That is, in the case where the PDSCH with the latest end time among the k PDSCHs includes at least two PDSCHs and the subcarrier spacings corresponding to the at least two PDSCHs are different, the first PDSCH is determined based on the subcarrier spacings corresponding to the at least two PDSCHs.

In some embodiments, the first PDSCH is a PDSCH with a smallest subcarrier spacing among the at least two PDSCHs. Since a relatively smaller subcarrier spacing means a smaller frequency interval between subcarriers, more subcarrier symbols may be included in a symbol period, and thus, a relatively smaller subcarrier spacing corresponds to a relatively longer symbol period. By selecting a PDSCH corresponding to the smallest subcarrier spacing, the determined time-domain position of the HARQ-ACK information is relatively late, which may ensure that the terminal has enough processing time, where the symbol period is a slot or sub-slot, etc.

In still other embodiments, the first PDSCH is a PDSCH with a largest subcarrier spacing among the at least two PDSCHs. By selecting the PDSCH with the largest subcarrier spacing, the determined time-domain position of the HARQ-ACK information is relatively early, which may ensure that a delay of the HARQ-ACK feedback is short.

For the HARQ-ACK feedback for the PDSCH transmission as illustrated in FIG. 1, there are two PDSCHs with the latest end time, i.e., PDSCH 1 corresponding to DL CC1 (15Hz) and PDSCH 2 corresponding to DL CC2 (30Hz). In the case where the first PDSCH is the PDSCH with the smallest subcarrier spacing (i.e., the PDSCH 1) among the at least two PDSCHs, the HARQ-ACK is fed back on a UL slot 34 of UL CC; and in a case where the first PDSCH is the PDSCH with the largest subcarrier spacing (i.e., the PDSCH 2) among the at least two PDSCHs, the HARQ-ACK is fed back on a UL slot 33 of UL CC.
- Scheme I-2: the first PDSCH is determined based on the serving cell index.

That is, in the case where the PDSCH with the latest end time among the k PDSCHs includes at least two PDSCHs and the subcarrier spacings corresponding to the at least two PDSCHs are different, the first PDSCH is determined based on the serving cell indexes corresponding to the at least two PDSCHs. This scheme is relatively simple and the first PDSCH is determined quickly from the at least two PDSCHs with the latest end time.

In some embodiments, the first PDSCH is a PDSCH with a smallest serving cell index among the at least two PDSCHs.

In still other embodiments, the first PDSCH is a PDSCH with a largest serving cell index among the at least two PDSCHs.

For the HARQ-ACK feedback for the PDSCH transmission as illustrated in FIG. 1, there are two PDSCHs with the latest end time, i.e., the PDSCH 1 corresponding to the DL CC1 (15Hz) and the PDSCH 2 corresponding to the DL CC2 (30Hz). In the case where the first PDSCH is the PDSCH with the smallest serving cell index (i.e., the PDSCH 1) among the at least two PDSCHs, the HARQ-ACK is fed back on the UL slot 34 of UL CC; and in a case where the first PDSCH is the PDSCH with the largest serving cell index (i.e., the PDSCH 2) among the at least two PDSCHs, the HARQ-ACK is fed back on the UL slot 33 of UL CC.
- Scheme I-3: the first PDSCH is determined based on the number of time-domain resources.

That is, in the case where the PDSCH with the latest end time among the k PDSCHs includes at least two PDSCHs and the subcarrier spacings corresponding to the at least two PDSCHs are different, the first PDSCH is determined based on the numbers of time-domain resources corresponding to the at least two PDSCHs. The time-domain resources may include symbols, subframes, slots, etc.

In some embodiments, the first PDSCH is a PDSCH with a greatest number of time-domain resources among the at least two PDSCHs. Taking the time-domain resource being the symbol as an example, the first PDSCH is the PDSCH that occupies the greatest number of symbols among the at least two PDSCHs.

In still other embodiments, the first PDSCH is a PDSCH with a least number of time-domain resources among the at least two PDSCHs. Taking the time-domain resource being the symbol as an example, the first PDSCH is the PDSCH that occupies the least number of symbols among the at least two PDSCHs.
- Scheme I-4: the first PDSCH is determined based on the start time.

That is, in the case where the PDSCH with the latest end time among the k PDSCHs includes at least two PDSCHs and the subcarrier spacings corresponding to the at least two PDSCHs are different, the first PDSCH is determined based on start times corresponding to the at least two PDSCHs.

In some embodiments, the first PDSCH is a PDSCH with an earliest start time among the at least two PDSCHs. That is, the first PDSCH is a PDSCH corresponding to an earliest start resource position (a position where a start symbol is located) among the at least two PDSCHs.

In still other embodiments, the first PDSCH is a PDSCH with a latest start time among the at least two PDSCHs. That is, the first PDSCH is a PDSCH corresponding to a latest start resource position among the at least two PDSCHs.

It should be noted that in Manner I, the first PDSCH is the PDSCH with the latest end time among the k PDSCHs, and schemes I-1 to I-4 list the schemes for determining the first PDSCH when there are at least two PDSCHs with the latest end time among the k PDSCHs and their corresponding subcarrier spacings are different, that is, performing a second selection through other transmission features except the end time. In addition to the transmission features listed in schemes I-1 to I-4, other transmission features may also be used to the determination of the first PDSCH, such as frequency-domain resources of the PDSCH, a modulation mode or a encoding mode of the PDSCH transmission, which are not limited in the present disclosure.

**Manner II: the first PDSCH is the PDSCH with the latest end time among the k PDSCHs. The terminal does not expect that there is more than one PDSCH with the latest end time among the k PDSCHs and that the corresponding subcarrier spacings are different.**
- Scheme II-1: the terminal does not expect that there is more than one PDSCH with the latest end time among the k PDSCHs.

In some embodiments, through a configuration or scheduling limit from the network device, the situation where there is more than one PDSCH with the latest end time can be avoided. That is, in a case where the terminal does not expect that there is more than one PDSCH with the latest end time among the k PDSCHs, the problem that the time-domain position of the HARQ-ACK feedback is ambiguous will not occur.

FIG. 5 illustrates a schematic diagram of PDSCH transmissions provided in an embodiment of the present disclosure. As illustrated in FIG. 5, a piece of DCI schedules three PDSCHs: PDSCH 1, PDSCH 2, and PDSCH 3, and there is only one PDSCH with the latest end time, i.e., the PDSCH 1. Therefore, the first PDSCH is the PDSCH 1, and the time-domain position of the HARQ-ACK feedback determined based on the PDSCH 1 is UL slot 35 of UL CC.
- Scheme II-2: the terminal does not expect that the PDSCH with the latest end time among the k PDSCHs includes at least two PDSCHs, and the terminal does not expect that the subcarrier spacings corresponding to the at least two PDSCHs are different.

In some embodiments, through the configuration or scheduling limit from the network device, the situation where there is more than one PDSCH with the latest end time can be avoided, or the situation where there are at least two PDSCHs with the latest end time and the subcarrier spacings corresponding to the at least two PDSCHs are different can be avoided. That is, the terminal expects that there is only one PDSCH with the latest end time among the k PDSCHs; or the terminal expects that there are at least two PDSCHs with the latest end time and the subcarrier spacings corresponding to the at least two PDSCHs are the same, then the problem that the time-domain position of HARQ-ACK feedback is ambiguous will not occur.

The above-mentioned PDSCH transmission illustrated in FIG. 5 also applies to scheme II-2.

Furthermore, FIG. 6 illustrates another schematic diagram of PDSCH transmissions provided in an embodiment of the present disclosure. As illustrated in the figure, there may be more than one PDSCH among PDSCH 1, PDSCH 2 and PDSCH 3 scheduled by the DCI has the same end time, and all of the more than one PDSCH is latest to end, e.g., the PDSCH 2 and the PDSCH 3. However, since subcarrier spacings corresponding to the PDSCH 2 and PDSCH 3 are the same, the time-domain positions of the HARQ-ACK feedback determined based on the PDSCH 2 and PDSCH 3 are the same, i.e., UL slot 36 of UL CC.

**Manner III: the first PDSCH is determined based on the serving cell indexes corresponding to the k PDSCHs.**
- Scheme III-1: the first PDSCH is determined directly based on the serving cell indexes corresponding to the k PDSCHs.

The first PDSCH is a PDSCH with a smallest serving cell index among the k PDSCHs; or the first PDSCH is a PDSCH with a largest serving cell index among the k PDSCHs.

Through determining the first PDSCH based on the corresponding serving cell index, the determined first PDSCH is unique, so that the time-domain position of the HARQ-ACK information determined based on the first PDSCH is also unique, thereby avoiding the ambiguity problem of the HARQ-ACK feedback and improving the accuracy of the HARQ-ACK feedback. Meanwhile, the problem that the at least two PDSCHs is determined first and a PDSCH is determined later from the at least two PDSCHs in another manner (e.g., the two-level determination manner described in Manner I) is avoided, thereby avoiding the complexity of the two-level determination manner and improving the efficiency of the HARQ-ACK feedback.

In some embodiments, the first PDSCH is the PDSCH with the smallest serving cell index among the k PDSCHs; or the first PDSCH is the PDSCH with the largest serving cell index among the k PDSCHs. That is, the first PDSCH is determined solely based on the serving cell index, without considering other transmission features.

For the HARQ-ACK feedback for the PDSCH transmissions as illustrated in FIG. 1, the determination of the first PDSCH is not related to the end times of the three PDSCHs, instead, the PDSCH 1 with the smallest serving cell index or the PDSCH 3 with the largest serving cell index is directly selected, that is, a first PDSCH is uniquely determined, so that the time-domain position of the HARQ-ACK information is further determined based on the unique first PDSCH.
- Scheme III-2: in a case where there are at least two PDSCHs with the latest end time among the k PDSCHs and the subcarrier spacings corresponding to the at least two PDSCHs are not completely the same, the first PDSCH is determined based on the serving cell indexes corresponding to the k PDSCHs; otherwise, the first PDSCH is the PDSCH with the latest end time.

In some embodiments, in a case where there are at least two PDSCHs with the latest end time among the k PDSCHs and the subcarrier spacings corresponding to the at least two PDSCHs are different, the first PDSCH is the PDSCH with the smallest serving cell index among the k PDSCHs; alternatively, in the case where there are at least two PDSCHs with the latest end time among the k PDSCHs and the subcarrier spacings corresponding to the at least two PDSCHs are different, the first PDSCH is the PDSCH with the largest serving cell index among the k PDSCHs. That is, when there are at least two PDSCHs with the latest end time among the k PDSCHs and the subcarrier spacings corresponding to the at least two PDSCHs are different, the first PDSCH is determined based on the corresponding serving cell index; in other words, when the time-domain position of the HARQ-ACK information cannot be uniquely determined based on the first PDSCH that is determined based on the end time of the PDSCH, the first PDSCH is uniquely determined based on the serving cell index.

In still other embodiments, in the case where there is only one PDSCH with the latest end time among the k PDSCHs, the first PDSCH is the PDSCH with the latest end time among the k PDSCHs. That is, when the PDSCH with the latest end time among the k PDSCHs may be uniquely determined, the first PDSCH is the PDSCH with the latest end time, and there is no need to determine the first PDSCH via the serving cell index.

In still other embodiments, in the case where there are at least two PDSCHs with the latest end time among the k PDSCHs and the subcarrier spacings corresponding to the at least two PDSCHs are the same, the first PDSCH is the PDSCH with the latest end time among the k PDSCHs. That is, since the subcarrier spacings corresponding to the at least two PDSCHs with the latest end time are the same, the time-domain positions of feed backing the HARQ-ACK information determined based on the at least two PDSCHs with the latest end time are the same, and thus, the first PDSCH includes all or part of PDSCHs among the at least two PDSCHs with the latest end time, and there is no need to determine the first PDSCH via the serving cell index.

It should be noted that schemes I-1 to I-4, II-1 to II-2, and III-1 to III-2 in the embodiments as illustrated in FIG. 4 may be implemented as independent embodiments, that is, the first PDSCH may be determined based on different schemes, respectively. Alternatively, different schemes may be combined into an embodiment, for example, when there is only one PDSCH with the latest end time, the first PDSCH is the PDSCH with the latest end time; when there are at least two PDSCHs with the latest end time, the first PDSCH is the PDSCH with the largest serving cell index; for another example, in a case where the terminal does not expect that there is more than one PDSCH with the latest end time among the k PDSCHs, the first PDSCH is determined using the Manner II, otherwise, the first PDSCH is determined using the Manner III, and so on, which is not limited in the present disclosure.

In some embodiments, in a case where a start of a first symbol of a PUCCH carrying the HARQ-ACK, determined according to Manner I or Manner III, is not earlier than a first time after an end symbol (last symbol) of each of the k PDSCHs, the time-domain position of the PUCCH carrying the HARQ-ACK is determined according to Manner I or Manner III; otherwise, the time-domain position of the PUCCH is determined according to Manner II. Alternatively, through the configuration or scheduling limit from the network device, the terminal does not expect that the time-domain position of the PUCCH determined according to Manner I or Manner III not meet a processing time of the PDSCH. The switching or combination of different manners among Manners I to III is not limited in the present disclosure.

**In another possible implementation, the receiving module 820 is configured to receive first control information, and the first control information is used to schedule multiple time-domain units.**

The first control information is the control information transmitted by the network device to the terminal for scheduling time-domain units. For example, the first control information is a DCI transmitted by the network device to the terminal for scheduling the time-domain units, and there is data transmission (e.g., PDSCH) in the time-domain unit. For another example, the first control information is SCI transmitted by a first terminal to a second terminal in a sidelink.

Here, the time-domain unit may be a slot, a sub-slot, a set of symbols, etc.

In some embodiments, the first control information includes a first indicator field, and the first indicator field is used to indicate timing from a time-domain unit to HARQ-ACK information.

In some embodiments, the receiving module 820 receives the first control information transmitted by the network device, and the first control information is used to schedule the multiple time-domain units; and after receiving the first control information, the receiving module 820 receives data transmissions in the multiple time-domain units in accordance with a manner indicated by the first control information.

In some embodiments, the receiving module 820 receives the first control information in a blind detection manner. For example, the receiving module 820 receives the DCI in the blind detection manner.

In some embodiments, the multiple time-domain units correspond to at least two carriers, for example, N data transmissions correspond to N carriers in a one-to-one manner; or N data transmissions correspond to M carriers, and M is less than or equal to N.

In some embodiments, subcarrier spacings of the at least two carriers corresponding to the multiple time-domain units are different; or the subcarrier spacings of the at least two carriers corresponding to the multiple time-domain units are the same.

In some embodiments, the multiple time-domain units correspond to at least three carriers, and part of subcarrier spacings of the at least three carriers are the same. For example, the subcarrier spacings of the three carriers corresponding to the multiple time-domain units are 15 Hz, 30 Hz and 30 Hz, respectively.

**The transmitting module 840 is configured to transmit HARQ-ACK information corresponding to k time-domain units among the multiple time-domain units, where the HARQ-ACK information corresponds to data transmissions of the k time-domain units among the multiple time-domain units, and a time-domain position of the HARQ-ACK information is determined based on the first time-domain unit.**

The HARQ-ACK information is feedback information transmitted by the terminal to the network device, and is used to acknowledge that the terminal has received the downlink data transmission on the time-domain unit. For example, the terminal feeds back 1 in response to successfully receiving the downlink data transmission, and feeds back 0 in response to unsuccessfully receiving the downlink data transmission. For still another example, the terminal feeds back 0 in response to successfully receiving the downlink data transmission, and feeds back 1 in response to unsuccessfully receiving the downlink data transmission.

In some embodiments, the HARQ-ACK information may also be referred to as HARQ-ACK codebook, which is not limited in the present disclosure.

In some embodiments, after the receiving module 820 receives the data transmissions in the multiple time-domain units, the transmitting module 840 transmits the HARQ-ACK information for the data transmissions in the k time-domain units among the multiple time-domain units to the network device. For example, the transmitting module 840 provides the HARQ-ACK information for the data transmissions in the k time-domain units in a PUCCH transmission; where k is a positive integer.

The first time-domain unit includes at least one time-domain unit of the k time-domain units. That is, the time-domain position of the HARQ-ACK information for the data transmissions in the k time-domain units is determined based on at least one time-domain unit of the k time-domain units.

The first time-domain unit may be one time-domain unit of the k time-domain units, and the time-domain position of the HARQ-ACK information may be uniquely determined based on this time-domain unit. Alternatively, the first time-domain unit may include multiple time-domain units among the k time-domain units, and the time-domain position of the HARQ-ACK information may be uniquely determined based on the multiple time-domain units, for example, the end times of the multiple time-domain units are the same and subcarrier spacings corresponding to the multiple time-domain units are the same.

In some embodiments, the first time-domain unit is determined according to at least one of the following:
end times corresponding respectively to all or part of time-domain units among the k time-domain units;
subcarrier spacings corresponding respectively to all or part of time-domain units among the k time-domain units;
serving cell indexes corresponding respectively to all or part of time-domain units among the k time-domain units;
numbers of time-domain units corresponding respectively to data transmissions in all or part of time-domain units among the k time-domain units; or
start times corresponding respectively to data transmissions in all or part of time-domain units among the k time-domain units.
Here, an end time of a data transmission is an end resource position of the data transmission, a start time of a data transmission is a start resource position of the data transmission, and the number of time-domain units of a data transmission is the number of time-domain resources occupied by the data transmission.

It should be noted that it is a one-to-one correspondence between the time-domain unit or the data transmission in the time-domain unit and the above-mentioned transmission feature; that is, each time-domain unit has its respective corresponding end time, subcarrier spacing, and serving cell index, and the data transmission in each time-domain unit has its respective corresponding number of time-domain units, and start time.

It should be noted that the first time-domain unit is determined according to one of the above-mentioned transmission features; or the first time-domain unit is determined by combining at least two of the above-mentioned transmission features. In a case where the first time-domain unit is determined by combining the at least two of the above-mentioned transmission features, there is a priority among different transmission features. That is, the first time-domain unit is determined first by using a transmission feature with a higher priority, and when the first time-domain unit cannot be determined by using the transmission feature with the higher priority, the first time-domain unit is further determined by combining a transmission feature with a sub-higher priority. In other words, the first time-domain unit is determined in a multi-level determination manner according to the priority order.

In some embodiments, the first time-domain unit is a time-domain unit with a latest end time among the k time-domain units.

In some embodiments, the time-domain unit with the latest end time among the k time-domain units includes at least two time-domain units, that is, the at least two time-domain units end at the same time and all have the latest end time. In a case where the subcarrier spacings corresponding to the at least two time-domain units are the same, the time-domain positions of the HARQ-ACK information determined based on the at least two time-domain unit are the same; and in a case where the subcarrier spacings corresponding to the at least two time-domain units are different, the time-domain positions of the HARQ-ACK information determined based on the at least two time-domain units are different. Therefore, in the case where the subcarrier spacings corresponding to the at least two time-domain units are different, it is necessary to determine the first time-domain unit through other transmission features. In some possible implementations, the first time-domain unit is determined by at least one of the following manners.
- Subcarrier spacing-based: in the case where the time-domain unit with the latest end time among the k time-domain units includes at least two time-domain units, the first time-domain unit is determined based on the subcarrier spacings corresponding to the at least two time-domain units. For example, the first time-domain unit is a time-domain unit with a smallest subcarrier spacing among the at least two time-domain units; or the first time-domain unit is a time-domain unit with a largest subcarrier spacing among the at least two time-domain units.
- Serving cell index-based: in the case where the time-domain unit with the latest end time among the k time-domain units includes at least two time-domain units, the first time-domain unit is determined based on serving cell indexes corresponding to the at least two time-domain units. For example, the first time-domain unit is a time-domain unit with a smallest serving cell index among the at least two time-domain units; or the first data transmission is a time-domain unit with a largest serving cell index among the at least two time-domain units.
- Number of time-domain resources-based: in the case where the time-domain unit with the latest end time among the k time-domain units includes at least two time-domain units, the first time-domain unit is determined based on numbers of time-domain resources corresponding to data transmissions in the at least two time-domain units. For example, the first time-domain unit is a time-domain unit where a data transmission with a greatest number of time-domain resources is located among the at least two time-domain units; or the first time-domain unit is a time-domain unit where a data transmission with a least number of time-domain resources is located among the at least two time-domain units.
- Start time-based: in the case where the time-domain unit with the latest end time among the k time-domain units includes at least two time-domain units, the first time-domain unit is determined based on start times corresponding to data transmissions in the at least two time-domain units. For example, the first time-domain unit is a time-domain unit where a data transmission with an earliest start time is located among the at least two time-domain units; or the first time-domain unit is a time-domain unit where a data transmission with a latest start time is located among the at least two time-domain units.

In still other embodiments, the terminal does not expect that there is more than one time-domain unit with the latest end time among the k time-domain units, that is, the terminal expects that there is only one time-domain unit with the latest end time among the k time-domain units; alternatively, the terminal does not expect that there are at least two time-domain units with the latest end time among the k time-domain units and that the subcarrier spacings corresponding to the at least two time-domain units are different, that is, the terminal expects that there is only one time-domain unit with the latest end time among the k time-domain units, or the terminal expects that there are at least two time-domain units with the latest end time among the k time-domain units and that the subcarrier spacings corresponding to the at least two time-domain units are the same.

That is, through a configuration or scheduling limit from the network device, when the situation where there is more than one time-domain unit where the data transmission with the latest end time is located and the corresponding subcarrier spacings are different is avoided, the problem that the time-domain position of HARQ-ACK feedback is ambiguous will not occur.

It should be noted that the network device would try to avoid the situation where there is more than one data transmission with the latest end time and the corresponding subcarrier spacings are different during the configuration process or scheduling process, but the network device is not bound to avoid the situation where there is more than one data transmission with the latest end time and the corresponding subcarrier spacings are different. The network device may also configure or schedule more than one data transmission with the latest end time according to other factors. The terminal's "non-expectation" may be considered the expected configuration or scheduling of the terminal, and the network device may or may not follow this expectation. However, in most cases, the network device would try to follow this expectation.

In still other embodiments, the first time-domain unit is determined based on serving cell indexes corresponding to the k time-domain units. That is, the first time-domain unit is a time-domain unit with the smallest serving cell index among the k time-domain units; or the first time-domain unit is a time-domain unit with the largest serving cell index among the k time-domain units.

In still other embodiments, in the case where the time-domain unit with the latest end time among the k time-domain units includes at least two time-domain units and the subcarrier spacings corresponding to the at least two time-domain units are different, the first time-domain unit is the time-domain unit with the smallest serving cell index among the k time-domain units; alternatively, in the case where the time-domain unit with the latest end time among the k time-domain units includes at least two time-domain units and the subcarrier spacings corresponding to the at least two time-domain units are different, the first time-domain unit is the time-domain unit with the largest serving cell index among the k time-domain units. That is, when the time-domain position of the HARQ-ACK information cannot be uniquely determined by the time-domain unit that is determined by the end time, the first time-domain unit is determined using the serving cell index.

In still other embodiments, in the case where there is only one time-domain unit with the latest end time among the k time-domain units, the first time-domain unit is the time-domain unit with the latest end time among the k time-domain units. That is, when the time-domain unit with the latest end time among the k time-domain units may be uniquely determined, the first time-domain unit is the time-domain unit with the latest end time.

In still other embodiments, in the case where there are at least two time-domain units with the latest end time among the k time-domain units and the subcarrier spacings corresponding to the at least two time-domain units are the same, the first time-domain unit is the time-domain unit with the latest end time among the k time-domain units. That is, since the subcarrier spacings corresponding to the at least two time-domain units with the latest end time are the same, the time-domain positions of feed backing the HARQ-ACK information determined based on the at least two time-domain units with the latest end time are the same, and thus, the first time-domain unit includes all or part of time-domain units among the at least two time-domain units with the latest end time.

In some embodiments, the time-domain position of the HARQ-ACK information is determined based on the first time-domain unit and information carried in the first control information. For example, the time-domain position of the HARQ-ACK information in the uplink transmission is determined based on the first time-domain unit and a value indicated by the first indicator field in the DCI, where the first indicator field in the DCI is used to indicate timing from the first time-domain unit to the HARQ-ACK information.

It should be noted that the receiving module 820 may be implemented as a separate apparatus, such as implemented as a receiving apparatus of the first control information; and the transmitting module 840 may be implemented as a separate apparatus, such as implemented as a transmitting apparatus of the HARQ-ACK; which are not limited in the present disclosure.

FIG. 12 illustrates a structural block diagram of a HARQ-ACK feedback apparatus provided in an embodiment of the present disclosure. The apparatus has the function to implement the above-mentioned exemplary methods of the network device, and the function may be achieved by the hardware or by the hardware executing the corresponding software. The apparatus may be the network device described above, or may be installed in the network device. As illustrated in FIG. 12, the apparatus may include a transmitting module 920 and a receiving module 940. The transmitting module 920 may be implemented by the transmitter in the communication device as illustrated in FIG. 13; or the transmitting module 920 may be implemented by combining the receiver and the processor in the communication device as illustrated in FIG. 13. The receiving module 940 may be implemented by the receiver in the communication device as illustrated in FIG. 13; or the receiving module 940 may be implemented by combining the receiver and the processor in the communication device as illustrated in FIG. 13.

**In a possible implementation, the transmitting module 920 is configured to transmit first control information, and the first control information is used to schedule multiple data transmissions.**

The first control information is control information transmitted by the network device to a terminal for scheduling data transmissions. For example, the first control information is DCI transmitted by the network device to the terminal for scheduling PDSCH transmissions.

In some embodiments, the first control information includes a first indicator field, and the first indicator field is used to indicate timing from a first data transmission to HARQ-ACK information.

In some embodiments, the transmitting module 920 transmits the first control information the terminal, and the first control information is used to schedule the multiple data transmissions; and the first control information is used to indicate the terminal, after receiving first control information, to receive the multiple data transmissions in accordance with a manner indicated by the first control information.

In some embodiments, the first control information is received by the terminal in a blind detection manner. For example, the terminal receives the DCI in the blind detection manner.

In some embodiments, the multiple data transmissions correspond to at least two carriers. For example, N data transmissions correspond to N carriers in a one-to-one manner; or N data transmissions correspond to M carriers, and M is less than or equal to N.

In some embodiments, subcarrier spacings of the at least two carriers corresponding to the multiple data transmissions are different; or the subcarrier spacings of the at least two carriers corresponding to the multiple data transmissions are the same.

In some embodiments, the multiple data transmissions correspond to at least three carriers, and part of subcarrier spacings of the at least three carriers are the same. For example, the subcarrier spacings of the three carriers corresponding to the multiple **data** transmissions are 15 Hz, 30 Hz and 30 Hz, respectively.

**The receiving module 940 is configured to receive HARQ-ACK information for k data transmissions among the multiple data transmissions, and a time-domain position of the HARQ-ACK information is determined based on a first data transmission.**

The HARQ-ACK information is feedback information transmitted by the terminal to the network device, and is used to acknowledge that the terminal has received the downlink data transmission. For example, the terminal feeds back 1 in response to successfully receiving the downlink data transmission, and feeds back 0 in response to unsuccessfully receiving the downlink data transmission. For another example, the terminal feeds back 0 in response to successfully receiving the downlink data transmission, and feeds back 1 in response to unsuccessfully receiving the downlink data transmission.

In some embodiments, the HARQ-ACK information may also be referred to as HARQ-ACK codebook, which is not limited in the present disclosure.

In some embodiments, the receiving module 940 receives the HARQ-ACK information for the k data transmissions among the multiple data transmissions transmitted by the terminal. For example, the terminal provides the HARQ-ACK information for the k data transmissions in a PUCCH transmission; and the receiving module 940 receives the HARQ-ACK information carried in the PUCCH, where k is a positive integer.

The first data transmission may include at least one data transmission of the k data transmissions. That is, the time-domain position of the HARQ-ACK information for the k data transmissions is determined based on the at least one data transmission of the k data transmissions.

The first data transmission may be one data transmission of the k data transmissions, and the time-domain position of the HARQ-ACK information may be uniquely determined based on this data transmission. Alternatively, the first data transmission may include multiple data transmissions among the k data transmissions, and the time-domain position of the HARQ-ACK information may be uniquely determined based on the multiple data transmissions, for example, the end times of the multiple data transmissions are the same and subcarrier spacings corresponding to the multiple data transmissions are the same.

In some embodiments, the first data transmission is determined according to at least one of the following:
- end times corresponding respectively to all or part of data transmissions among the k data transmissions;
- subcarrier spacings corresponding respectively to all or part of data transmissions among the k data transmissions;
- serving cell indexes corresponding respectively to all or part of data transmissions among the k data transmissions;
- numbers of time-domain units corresponding respectively to all or part of data transmissions among the k data transmissions; or
- start times corresponding respectively to all or part of data transmissions among the k data transmissions.

Here, an end time of a data transmission is an end resource position of the data transmission, a start time of a data transmission is a start resource position of the data transmission, and the number of time-domain units of a data transmission is the number of time-domain resources occupied by the data transmission.

It should be noted that it is a one-to-one correspondence between the data transmission and the above-mentioned transmission feature; that is, each data transmission has its respective corresponding end time, subcarrier spacing, serving cell index, number of time-domain units, and start time.

It should be noted that the first data transmission is determined according to one of the above-mentioned transmission features; or the first data transmission is determined by combining at least two of the above-mentioned transmission features. In a case where the first data transmission is determined by combining the at least two of the above-mentioned transmission features, there is a priority among different transmission features. That is, the first data transmission is determined first by using a transmission feature with a higher priority, and when the first data transmission cannot be determined by using the transmission feature with the higher priority, the first data transmission is further determined by combining a transmission feature with a sub-higher priority. In other words, the first data transmission is determined in a multi-level determination manner according to the priority order.

In some embodiments, the first data transmission is a data transmission with a latest end time among the k data transmissions.

In some embodiments, the data transmission with the latest end time among the k data transmissions includes at least two data transmissions, that is, the at least two data transmissions end at the same time and all have the latest end time. In a case where the subcarrier spacings corresponding to the at least two data transmissions are the same, the time-domain positions of the HARQ-ACK information determined based on the at least two data transmissions are the same; and in a case where the subcarrier spacings corresponding to the at least two data transmissions are different, the time-domain positions of the HARQ-ACK information determined based on the at least two data transmissions are different. Therefore, in the case where the subcarrier spacings corresponding to the at least two data transmissions are different, it is necessary to determine the first data transmission through other transmission features. In some possible implementations, the first data transmission is determined by at least one of the following manners.
- Subcarrier spacing-based: in the case where the data transmission with the latest end time among the k data transmissions includes at least two data transmissions, the first data transmission is determined based on the subcarrier spacings corresponding to the at least two data transmissions. For example, the first data transmission is a data transmission with a smallest subcarrier spacing among the at least two data transmissions; or the first data transmission is a data transmission with a largest subcarrier spacing among the at least two data transmissions.
- Serving cell index-based: in the case where the data transmission with the latest end time among the k data transmissions includes at least two data transmissions, the first data transmission is determined based on serving cell indexes corresponding to the at least two data transmissions. For example, the first data transmission is a data transmission with a smallest serving cell index among the at least two data transmissions; or the first data transmission is a data transmission with a largest serving cell index among the at least two data transmissions.
- Number of time-domain resources-based: in the case where the data transmission with the latest end time among the k data transmissions includes at least two data transmissions, the first data transmission is determined based on numbers of time-domain resources corresponding to the at least two data transmissions. For example, the first data transmission is a data transmission with a greatest number of time-domain resources among the at least two data transmissions; or the first data transmission is a data transmission with a least number of time-domain resources among the at least two data transmissions.
- Start time-based: in the case where the data transmission with the latest end time among the k data transmissions includes at least two data transmissions, the first data transmission is determined based on start times of the at least two data transmissions. For example, the first data transmission is a data transmission with an earliest start time among the at least two data transmissions; or the first data transmission is a data transmission with a latest start time among the at least two data transmissions.

In still other embodiments, the terminal does not expect that there is more than one data transmission with the latest end time among the k data transmissions, that is, the terminal expects that there is only one data transmission with the latest end time among the k data transmissions; alternatively, the terminal does not expect that there are at least two data transmissions with the latest end time among the k data transmissions and that the subcarrier spacings corresponding to the at least two data transmissions are different, that is, the terminal expects that there is only one data transmission with the latest end time among the k data transmissions, or the terminal expects that there are at least two data transmissions with the latest end time among the k data transmissions and that the subcarrier spacings corresponding to the at least two data transmissions are the same.

That is, through a configuration or scheduling limit from the network device, when the situation where there is more than one data transmission with the latest end time and the corresponding subcarrier spacings are different is avoided, the problem that the time-domain position of HARQ-ACK feedback is ambiguous will not occur.

It should be noted that the network device would try to avoid the situation where there is more than one data transmission with the latest end time and the corresponding subcarrier spacings are different during the configuration process or scheduling process, but the network device is not bound to avoid the situation where there is more than one data transmission with the latest end time and the corresponding subcarrier spacings are different. The network device may also configure or schedule more than one data transmission with the latest end time according to other factors. The terminal's "non-expectation" may be considered the expected configuration or scheduling of the terminal, and the network device may or may not follow this expectation. However, in most cases, the network device would try to follow this expectation.

In still other embodiments, the first data transmission is determined based on serving cell indexes corresponding to the k data transmissions. That is, the first data transmission is a data transmission with the smallest serving cell index among the k data transmissions; or the first data transmission is a data transmission with the largest serving cell index among the k data transmissions.

In still other embodiments, in the case where the data transmission with the latest end time among the k data transmissions includes at least two data transmissions and the subcarrier spacings corresponding to the at least two data transmissions are different, the first data transmission is the data transmission with the smallest serving cell index among the k data transmissions; alternatively, in the case where the data transmission with the latest end time among the k data transmissions includes at least two data transmissions and the subcarrier spacings corresponding to the at least two data transmissions are different, the first data transmission is the data transmission with the largest serving cell index among the k data transmissions.

In still other embodiments, in the case where there is only one data transmission with the latest end time among the k data transmissions, the first data transmission is the data transmission with the latest end time among the k data transmissions. That is, when the data transmission with the latest end time among the k data transmissions may be uniquely determined, the first data transmission is the data transmission with the latest end time.

In still other embodiments, in the case where there are at least two data transmissions with the latest end time among the k data transmissions and the subcarrier spacings corresponding to the at least two data transmissions are the same, the first data transmission is the data transmission with the latest end time among the k data transmissions. That is, since the subcarrier spacings corresponding to the at least two data transmissions with the latest end time are the same, the time-domain positions of feed backing the HARQ-ACK information determined based on the at least two data transmissions with the latest end time are the same, and thus, the first data transmission includes all or part of data transmissions among the at least two data transmissions with the latest end time. For example, the first data transmission is any data transmission of the at least two data transmissions with the latest end time.

In some embodiments, the time-domain position of the HARQ-ACK information is determined based on the first data transmission and information carried in the first control information. For example, the time-domain position of the HARQ-ACK information in the uplink transmission is determined based on the first data transmission and a value indicated by the first indicator field in the DCI, where the first indicator field in the DCI is used to indicate timing from the first data transmission to the HARQ-ACK information.

**In another possible implementation, the transmitting module 920 is configured to transmit the first control** inf**ormation, where the first control information is used to schedule multiple PDSCHs.**

The first control information is control information transmitted by a network device to the terminal for scheduling PDSCHs. For example, the first control information is DCI transmitted by the network device to the terminal for scheduling the PDSCHs.

In some embodiments, the first control information includes a first indicator field, and the first indicator field is used to indicate timing from a first PDSCH to HARQ-ACK information.

In some embodiments, the transmitting module 920 transmits first DCI to the terminal, and the first DCI is used to schedule the multiple PDSCHs; and the first DCI is used to indicate the terminal, in response to receiving the first DCI, to receive the PDSCHs in accordance with a manner indicated by the first DCI.

In some embodiments, the first DCI is further used to indicate an interval time from a PDSCH to a HARQ feedback; for example, an indicator field of PDSCH-to-HARQ_feedback timing indicator in the first DCI indicates an interval time from a PDSCH transmission or a PDSCH reception to the HARQ feedback.

In some embodiments, the multiple PDSCHs correspond to at least two carriers.

In some embodiments, the subcarrier spacings of the at least two carriers corresponding to the multiple PDSCHs are different; or the subcarrier spacings of the at least two carriers corresponding to the multiple PDSCHs are the same.

In some embodiments, the multiple PDSCHs correspond to at least three carriers, and part of the subcarrier spacings of the at least three carriers are the same. For example, the subcarrier spacings of the three carriers corresponding to the multiple PDSCHs are 15 Hz, 30 Hz and 30 Hz, respectively.

**The transmitting module 920 is configured to transmit the multiple PDSCHs.**

In some embodiments, the transmitting module 920 transmits the multiple PDSCHs to the terminal.

In some embodiments, the multiple PDSCHs transmitted by the transmitting module 920 to the terminal are scheduled by the first control information. For example, the first control information indicates resource (e.g., subcarrier, slot, symbol, etc.) allocation of the multiple PDSCHs; and for still another example, the first control information indicates a scheduling period of the multiple PDSCHs, and so on.

**The receiving module 940 is configured to receive HARQ-ACK information for k PDSCHs among the multiple PDSCHs, and a time-domain position of the HARQ-ACK information is determined based on a first PDSCH.**

The HARQ-ACK information is feedback information transmitted by the terminal to the network device, and is used to acknowledge that the terminal has received the PDSCH.

In some embodiments, the receiving module 940 receives the HARQ-ACK information for the k PDSCHs among the multiple PDSCHs transmitted by the terminal. For example, the receiving module 940 receives the HARQ-ACK information for the k PDSCHs carried in a PUCCH transmission, where k is a positive integer.

In some embodiments, the time-domain position of the HARQ-ACK information is determined based on the first PDSCH and information carried in the first control information. For example, the time-domain position of the HARQ-ACK information in the uplink transmission is determined based on the first PDSCH and a value indicated by an indicator field in the DCI.

The first PDSCH includes at least one PDSCH of the k PDSCHs. That is, the time-domain position of the HARQ-ACK information for the k PDSCHs is determined based on the at least one PDSCH of the k PDSCHs.

It should be noted that the first PDSCH refers to a PDSCH used for determining the time-domain position of the HARQ-ACK information for the k PDSCHs; and the first PDSCH may have different names in different embodiments, such as a reference PDSCH, which is not limited in the embodiments of the present disclosure.

In some embodiments, the first PDSCH is determined based on at least one of the following:
- end times corresponding respectively to all or part of PDSCHs among the k PDSCHs;
- subcarrier spacings corresponding respectively to all or part of PDSCHs among the k PDSCHs;
- serving cell indexes corresponding respectively to all or part of PDSCHs among the k PDSCHs;
- numbers of time-domain units corresponding respectively to all or part of PDSCHs among the k PDSCHs; or
- start times corresponding respectively to all or part of PDSCHs among the k PDSCHs.

Here, an end time of a PDSCH is an end resource position of the PDSCH, a start time of a PDSCH is a start resource position of the PDSCH, and the number of time-domain units of a PDSCH is the number of time-domain resources occupied by the PDSCH.

It should be noted that the first PDSCH is determined based on one of the above-mentioned transmission features; or the first PDSCH is determined by combining at least two of the above-mentioned transmission features. In a case where the first PDSCH is determined by combining the at least two of the above-mentioned transmission features, there is a priority among different transmission features. That is, the first PDSCH is determined first by using a transmission feature with a higher priority, and when the first PDSCH cannot be determined by using the transmission feature with the higher priority, the first PDSCH is further determined by combining a transmission feature with a sub-higher priority. In other words, the first PDSCH is determined by using a multi-level determination manner according to the priority order.

The manners of determining the first PDSCH are explained below.

**Manner I: the first PDSCH is a PDSCH with a latest end time among the k PDSCHs. In a case where there are at least two PDSCHs with the latest end time among the k PDSCHs and the subcarrier spacings corresponding to the at least two PDSCHs are different, the following scheme is adopted to determine the first PDSCH among the at least two PDSCHs.**
- Scheme I-1: the first PDSCH is determined based on the subcarrier spacing (SCS).

That is, in the case where the PDSCH with the latest end time among the k PDSCHs includes at least two PDSCHs and the subcarrier spacings corresponding to the at least two PDSCHs are different, the first PDSCH is determined based on the subcarrier spacings corresponding to the at least two PDSCHs.

In some embodiments, the first PDSCH is a PDSCH with a smallest subcarrier spacing among the at least two PDSCHs. Since a relatively smaller subcarrier spacing means a smaller frequency interval between subcarriers, more subcarrier symbols may be included in a symbol period, and thus, a relatively smaller subcarrier spacing corresponds to a relatively longer symbol period. By selecting a PDSCH corresponding to the smallest subcarrier spacing, the determined time-domain position of the HARQ-ACK information is relatively late, which may ensure that the terminal has enough processing time, where the symbol period is a slot or sub-slot, etc.

In still other embodiments, the first PDSCH is a PDSCH with a largest subcarrier spacing among the at least two PDSCHs. By selecting the PDSCH with the largest subcarrier spacing, the determined time-domain position of the HARQ-ACK information is relatively early, which may ensure that a delay of the HARQ-ACK feedback is short.

For the HARQ-ACK feedback for the PDSCH transmission as illustrated in FIG. 1, there are two PDSCHs with the latest end time, i.e., PDSCH 1 corresponding to DL CC1 (15Hz) and PDSCH 2 corresponding to DL CC2 (30Hz). In the case where the first PDSCH is the PDSCH with the smallest subcarrier spacing (i.e., the PDSCH 1) among the at least two PDSCHs, the HARQ-ACK is fed back on a UL slot 34 of UL CC; and in a case where the first PDSCH is the PDSCH with the largest subcarrier spacing (i.e., the PDSCH 2) among the at least two PDSCHs, the HARQ-ACK is fed back on a UL slot 33 of UL CC.
- Scheme I-2: the first PDSCH is determined based on the serving cell index.

That is, in the case where the PDSCH with the latest end time among the k PDSCHs includes at least two PDSCHs and the subcarrier spacings corresponding to the at least two PDSCHs are different, the first PDSCH is determined based on the serving cell indexes corresponding to the at least two PDSCHs. This scheme is relatively simple and the first PDSCH is determined quickly from the at least two PDSCHs with the latest end time.

In some embodiments, the first PDSCH is a PDSCH with a smallest serving cell index among the at least two PDSCHs.

In still other embodiments, the first PDSCH is a PDSCH with a largest serving cell index among the at least two PDSCHs.

For the HARQ-ACK feedback for the PDSCH transmission as illustrated in FIG. 1, there are two PDSCHs with the latest end time, i.e., the PDSCH 1 corresponding to the DL CC1 (15Hz) and the PDSCH 2 corresponding to the DL CC2 (30Hz). In the case where the first PDSCH is the PDSCH with the smallest serving cell index (i.e., the PDSCH 1) among the at least two PDSCHs, the HARQ-ACK is fed back on the UL slot 34 of UL CC; and in a case where the first PDSCH is the PDSCH with the largest serving cell index (i.e., the PDSCH 2) among the at least two PDSCHs, the HARQ-ACK is fed back on the UL slot 33 of UL CC.
- Scheme I-3: the first PDSCH is determined based on the number of time-domain resources.

That is, in the case where the PDSCH with the latest end time among the k PDSCHs includes at least two PDSCHs and the subcarrier spacings corresponding to the at least two PDSCHs are different, the first PDSCH is determined based on the numbers of time-domain resources corresponding to the at least two PDSCHs. The time-domain resources may include symbols, subframes, slots, etc.

In some embodiments, the first PDSCH is a PDSCH with a greatest number of time-domain resources among the at least two PDSCHs. Taking the time-domain resource being the symbol as an example, the first PDSCH is the PDSCH that occupies the greatest number of symbols among the at least two PDSCHs.

In still other embodiments, the first PDSCH is a PDSCH with a least number of time-domain resources among the at least two PDSCHs. Taking the time-domain resource being the symbol as an example, the first PDSCH is the PDSCH that occupies the least number of symbols among the at least two PDSCHs.
- Scheme I-4: the first PDSCH is determined based on the start time.

That is, in the case where the PDSCH with the latest end time among the k PDSCHs includes at least two PDSCHs and the subcarrier spacings corresponding to the at least two PDSCHs are different, the first PDSCH is determined based on start times corresponding to the at least two PDSCHs.

In some embodiments, the first PDSCH is a PDSCH with an earliest start time among the at least two PDSCHs. That is, the first PDSCH is a PDSCH corresponding to an earliest start resource position (a position where a start symbol is located) among the at least two PDSCHs.

In still other embodiments, the first PDSCH is a PDSCH with a latest start time among the at least two PDSCHs. That is, the first PDSCH is a PDSCH corresponding to a latest start resource position among the at least two PDSCHs.

It should be noted that in Manner I, the first PDSCH is the PDSCH with the latest end time among the k PDSCHs, and schemes I-1 to I-4 list the schemes for determining the first PDSCH when there are at least two PDSCHs with the latest end time among the k PDSCHs and their corresponding subcarrier spacings are different, that is, performing a second selection through other transmission features except the end time. In addition to the transmission features listed in schemes I-1 to I-4, other transmission features may also be used to the determination of the first PDSCH, such as frequency-domain resources of the PDSCH, a modulation mode or a encoding mode of the PDSCH transmission, which are not limited in the present disclosure.

**Manner II: the first PDSCH is the PDSCH with the latest end time among the k PDSCHs. The terminal does not expect that there is more than one PDSCH with the latest end time among the k PDSCHs and that the corresponding subcarrier spacings are different.**
- Scheme II-1: the terminal does not expect that there is more than one PDSCH with the latest end time among the k PDSCHs.

In some embodiments, through a configuration or scheduling limit from the network device, the situation where there is more than one PDSCH with the latest end time can be avoided. That is, in a case where the terminal does not expect that there is more than one PDSCH with the latest end time among the k PDSCHs, the problem that the time-domain position of the HARQ-ACK feedback is ambiguous will not occur.

FIG. 5 illustrates a schematic diagram of PDSCH transmissions provided in an embodiment of the present disclosure. As illustrated in FIG. 5, a piece of DCI schedules three PDSCHs: PDSCH 1, PDSCH 2, and PDSCH 3, and there is only one PDSCH with the latest end time, i.e., the PDSCH 1. Therefore, the first PDSCH is the PDSCH 1, and the time-domain position of the HARQ-ACK feedback determined based on the PDSCH 1 is UL slot 35 of UL CC.
- Scheme II-2: the terminal does not expect that the PDSCH with the latest end time among the k PDSCHs includes at least two PDSCHs, and the terminal does not expect that the subcarrier spacings corresponding to the at least two PDSCHs are different.

In some embodiments, through the configuration or scheduling limit from the network device, the situation where there is more than one PDSCH with the latest end time can be avoided, or the situation where there are at least two PDSCHs with the latest end time and the subcarrier spacings corresponding to the at least two PDSCHs are different can be avoided. That is, the terminal expects that there is only one PDSCH with the latest end time among the k PDSCHs; or the terminal expects that there are at least two PDSCHs with the latest end time and the subcarrier spacings corresponding to the at least two PDSCHs are the same, then the problem that the time-domain position of HARQ-ACK feedback is ambiguous will not occur.

The above-mentioned PDSCH transmission illustrated in FIG. 5 also applies to scheme II-2.

Furthermore, FIG. 6 illustrates another schematic diagram of PDSCH transmissions provided in an embodiment of the present disclosure. As illustrated in the figure, there may be more than one PDSCH among PDSCH 1, PDSCH 2 and PDSCH 3 scheduled by the DCI has the same end time, and all of the more than one PDSCH is latest to end, e.g., the PDSCH 2 and the PDSCH 3. However, since subcarrier spacings corresponding to the PDSCH 2 and PDSCH 3 are the same, the time-domain positions of the HARQ-ACK feedback determined based on the PDSCH 2 and PDSCH 3 are the same, i.e., UL slot 36 of UL CC.

**Manner III: the first PDSCH is determined based on the serving cell indexes corresponding to the k PDSCHs.**
- Scheme III-1: the first PDSCH is determined directly based on the serving cell indexes corresponding to the k PDSCHs.

The first PDSCH is a PDSCH with a smallest serving cell index among the k PDSCHs; or the first PDSCH is a PDSCH with a largest serving cell index among the k PDSCHs.

Through determining the first PDSCH based on the corresponding serving cell index, the determined first PDSCH is unique, so that the time-domain position of the HARQ-ACK information determined based on the first PDSCH is also unique, thereby avoiding the ambiguity problem of the HARQ-ACK feedback and improving the accuracy of the HARQ-ACK feedback. Meanwhile, the problem that the at least two PDSCHs is determined first and a PDSCH is determined later from the at least two PDSCHs in another manner (e.g., the two-level determination manner described in Manner I) is avoided, thereby avoiding the complexity of the two-level determination manner and improving the efficiency of the HARQ-ACK feedback.

In some embodiments, the first PDSCH is the PDSCH with the smallest serving cell index among the k PDSCHs; or the first PDSCH is the PDSCH with the largest serving cell index among the k PDSCHs. That is, the first PDSCH is determined solely based on the serving cell index, without considering other transmission features.

For the HARQ-ACK feedback for the PDSCH transmissions as illustrated in FIG. 1, the determination of the first PDSCH is not related to the end times of the three PDSCHs, instead, the PDSCH 1 with the smallest serving cell index or the PDSCH 3 with the largest serving cell index is directly selected, that is, a first PDSCH is uniquely determined, so that the time-domain position of the HARQ-ACK information is further determined based on the unique first PDSCH.
- Scheme III-2: in a case where there are at least two PDSCHs with the latest end time among the k PDSCHs and the subcarrier spacings corresponding to the at least two PDSCHs are not completely the same, the first PDSCH is determined based on the serving cell indexes corresponding to the k PDSCHs; otherwise, the first PDSCH is the PDSCH with the latest end time.

In some embodiments, in a case where there are at least two PDSCHs with the latest end time among the k PDSCHs and the subcarrier spacings corresponding to the at least two PDSCHs are different, the first PDSCH is the PDSCH with the smallest serving cell index among the k PDSCHs; alternatively, in the case where there are at least two PDSCHs with the latest end time among the k PDSCHs and the subcarrier spacings corresponding to the at least two PDSCHs are different, the first PDSCH is the PDSCH with the largest serving cell index among the k PDSCHs. That is, when there are at least two PDSCHs with the latest end time among the k PDSCHs and the subcarrier spacings corresponding to the at least two PDSCHs are different, the first PDSCH is determined based on the corresponding serving cell index; in other words, when the time-domain position of the HARQ-ACK information cannot be uniquely determined based on the first PDSCH that is determined based on the end time of the PDSCH, the first PDSCH is uniquely determined based on the serving cell index.

In still other embodiments, in the case where there is only one PDSCH with the latest end time among the k PDSCHs, the first PDSCH is the PDSCH with the latest end time among the k PDSCHs. That is, when the PDSCH with the latest end time among the k PDSCHs may be uniquely determined, the first PDSCH is the PDSCH with the latest end time, and there is no need to determine the first PDSCH via the serving cell index.

In still other embodiments, in the case where there are at least two PDSCHs with the latest end time among the k PDSCHs and the subcarrier spacings corresponding to the at least two PDSCHs are the same, the first PDSCH is the PDSCH with the latest end time among the k PDSCHs. That is, since the subcarrier spacings corresponding to the at least two PDSCHs with the latest end time are the same, the time-domain positions of feed backing the HARQ-ACK information determined based on the at least two PDSCHs with the latest end time are the same, and thus, the first PDSCH includes all or part of PDSCHs among the at least two PDSCHs with the latest end time, and there is no need to determine the first PDSCH via the serving cell index.

It should be noted that schemes I-1 to I-4, II-1 to II-2, and III-1 to III-2 in the embodiments as illustrated in FIG. 4 may be implemented as independent embodiments, that is, the first PDSCH may be determined based on different schemes, respectively. Alternatively, different schemes may be combined into an embodiment, for example, when there is only one PDSCH with the latest end time, the first PDSCH is the PDSCH with the latest end time; when there are at least two PDSCHs with the latest end time, the first PDSCH is the PDSCH with the largest serving cell index; for another example, in a case where the terminal does not expect that there is more than one PDSCH with the latest end time among the k PDSCHs, the first PDSCH is determined using the Manner II, otherwise, the first PDSCH is determined using the Manner III, and so on, which is not limited in the present disclosure.

In some embodiments, in a case where a start of a first symbol of a PUCCH carrying the HARQ-ACK, determined according to Manner I or Manner III, is not earlier than a first time after an end symbol (last symbol) of each of the k PDSCHs, the time-domain position of the PUCCH carrying the HARQ-ACK is determined according to Manner I or Manner III; otherwise, the time-domain position of the PUCCH is determined according to Manner II. Alternatively, through the configuration or scheduling limit from the network device, the terminal does not expect that the time-domain position of the PUCCH determined according to Manner I or Manner III not meet a processing time of the PDSCH. The switching or combination of different manners among Manners I to III is not limited in the present disclosure.

**In another possible implementation, the transmitting module 920 is configured to transmit first control information, and the first control information is used to schedule multiple time-domain units.**

The first control information is the control information transmitted by the network device to the terminal for scheduling time-domain units. For example, the first control information is a DCI transmitted by the network device to the terminal for scheduling the time-domain units, and there is data transmission (e.g., PDSCH) in the time-domain unit.

Here, the time-domain unit may be a slot, a sub-slot, a set of symbols, etc.

In some embodiments, the first control information includes a first indicator field, and the first indicator field is used to indicate timing from a time-domain unit to HARQ-ACK information.

In some embodiments, the transmitting module 920 transmits the first control information to the terminal, and the first control information is used to schedule the multiple time-domain units; and the first control information is used to indicate the terminal, after receiving the first control information, to receive data transmissions in the multiple time-domain units in accordance with a manner indicated by the first control information.

In some embodiments, the first control information is received by the terminal in a blind detection manner. For example, the terminal receives the DCI in the blind detection manner.

In some embodiments, the multiple time-domain units correspond to at least two carriers, for example, N data transmissions correspond to N carriers in a one-to-one manner; or N data transmissions correspond to M carriers, and M is less than or equal to N.

In some embodiments, subcarrier spacings of the at least two carriers corresponding to the multiple time-domain units are different; or the subcarrier spacings of the at least two carriers corresponding to the multiple time-domain units are the same.

In some embodiments, the multiple time-domain units correspond to at least three carriers, and part of subcarrier spacings of the at least three carriers are the same. For example, the subcarrier spacings of the three carriers corresponding to the multiple time-domain units are 15 Hz, 30 Hz and 30 Hz, respectively.

**The receiving module 840 is configured to receive HARQ-ACK information corresponding to k time-domain units among the multiple time-domain units, where the HARQ-ACK information corresponds to data transmissions of the k time-domain units among the multiple time-domain units, and a time-domain position of the HARQ-ACK information is determined based on the first time-domain unit.**

The HARQ-ACK information is feedback information transmitted by the terminal to the network device, and is used to acknowledge that the terminal has received the downlink data transmission on the time-domain unit. For example, the terminal feeds back 1 in response to successfully receiving the downlink data transmission, and feeds back 0 in response to unsuccessfully receiving the downlink data transmission. For still another example, the terminal feeds back 0 in response to successfully receiving the downlink data transmission, and feeds back 1 in response to unsuccessfully receiving the downlink data transmission.

In some embodiments, the HARQ-ACK information may also be referred to as HARQ-ACK codebook, which is not limited in the present disclosure.

In some embodiments, the receiving module 940 receives the HARQ-ACK information for the data transmissions in the k time-domain units among the multiple time-domain units transmitted by the terminal. For example, the terminal provides the HARQ-ACK information for the data transmissions in the k time-domain units in a PUCCH transmission; and the receiving module 940 receives the HARQ-ACK information carried in the PUCCH; where k is a positive integer.

The first time-domain unit includes at least one time-domain unit of the k time-domain units. That is, the time-domain position of the HARQ-ACK information for the data transmissions in the k time-domain units is determined based on at least one time-domain unit of the k time-domain units.

The first time-domain unit may be one time-domain unit of the k time-domain units, and the time-domain position of the HARQ-ACK information may be uniquely determined based on this time-domain unit. Alternatively, the first time-domain unit may include multiple time-domain units among the k time-domain units, and the time-domain position of the HARQ-ACK information may be uniquely determined based on the multiple time-domain units, for example, the end times of the multiple time-domain units are the same and subcarrier spacings corresponding to the multiple time-domain units are the same.

In some embodiments, the first time-domain unit is determined according to at least one of the following:
end times corresponding respectively to all or part of time-domain units among the k time-domain units;
subcarrier spacings corresponding respectively to all or part of time-domain units among the k time-domain units;
serving cell indexes corresponding respectively to all or part of time-domain units among the k time-domain units;
numbers of time-domain units corresponding respectively to data transmissions in all or part of time-domain units among the k time-domain units; or
start times corresponding respectively to data transmissions in all or part of time-domain units among the k time-domain units.

Here, an end time of a data transmission is an end resource position of the data transmission, a start time of a data transmission is a start resource position of the data transmission, and the number of time-domain units of a data transmission is the number of time-domain resources occupied by the data transmission.

It should be noted that it is a one-to-one correspondence between the time-domain unit or the data transmission in the time-domain unit and the above-mentioned transmission feature; that is, each time-domain unit has its respective corresponding end time, subcarrier spacing, and serving cell index, and the data transmission in each time-domain unit has its respective corresponding number of time-domain units, and start time.

It should be noted that the first time-domain unit is determined according to one of the above-mentioned transmission features; or the first time-domain unit is determined by combining at least two of the above-mentioned transmission features. In a case where the first time-domain unit is determined by combining the at least two of the above-mentioned transmission features, there is a priority among different transmission features. That is, the first time-domain unit is determined first by using a transmission feature with a higher priority, and when the first time-domain unit cannot be determined by using the transmission feature with the higher priority, the first time-domain unit is further determined by combining a transmission feature with a sub-higher priority. In other words, the first time-domain unit is determined in a multi-level determination manner according to the priority order.

In some embodiments, the first time-domain unit is a time-domain unit with a latest end time among the k time-domain units.

In some embodiments, the time-domain unit with the latest end time among the k time-domain units includes at least two time-domain units, that is, the at least two time-domain units end at the same time and all have the latest end time. In a case where the subcarrier spacings corresponding to the at least two time-domain units are the same, the time-domain positions of the HARQ-ACK information determined based on the at least two time-domain unit are the same; and in a case where the subcarrier spacings corresponding to the at least two time-domain units are different, the time-domain positions of the HARQ-ACK information determined based on the at least two time-domain units are different. Therefore, in the case where the subcarrier spacings corresponding to the at least two time-domain units are different, it is necessary to determine the first time-domain unit through other transmission features. In some possible implementations, the first time-domain unit is determined by at least one of the following manners.
- Subcarrier spacing-based: in the case where the time-domain unit with the latest end time among the k time-domain units includes at least two time-domain units, the first time-domain unit is determined based on the subcarrier spacings corresponding to the at least two time-domain units. For example, the first time-domain unit is a time-domain unit with a smallest subcarrier spacing among the at least two time-domain units; or the first time-domain unit is a time-domain unit with a largest subcarrier spacing among the at least two time-domain units.
- Serving cell index-based: in the case where the time-domain unit with the latest end time among the k time-domain units includes at least two time-domain units, the first time-domain unit is determined based on serving cell indexes corresponding to the at least two time-domain units. For example, the first time-domain unit is a time-domain unit with a smallest serving cell index among the at least two time-domain units; or the first data transmission is a time-domain unit with a largest serving cell index among the at least two time-domain units.
- Number of time-domain resources-based: in the case where the time-domain unit with the latest end time among the k time-domain units includes at least two time-domain units, the first time-domain unit is determined based on numbers of time-domain resources corresponding to data transmissions in the at least two time-domain units. For example, the first time-domain unit is a time-domain unit where a data transmission with a greatest number of time-domain resources is located among the at least two time-domain units; or the first time-domain unit is a time-domain unit where a data transmission with a least number of time-domain resources is located among the at least two time-domain units.
- Start time-based: in the case where the time-domain unit with the latest end time among the k time-domain units includes at least two time-domain units, the first time-domain unit is determined based on start times corresponding to data transmissions in the at least two time-domain units. For example, the first time-domain unit is a time-domain unit where a data transmission with an earliest start time is located among the at least two time-domain units; or the first time-domain unit is a time-domain unit where a data transmission with a latest start time is located among the at least two time-domain units.

In still other embodiments, the terminal does not expect that there is more than one time-domain unit with the latest end time among the k time-domain units, that is, the terminal expects that there is only one time-domain unit with the latest end time among the k time-domain units; alternatively, the terminal does not expect that there are at least two time-domain units with the latest end time among the k time-domain units and that the subcarrier spacings corresponding to the at least two time-domain units are different, that is, the terminal expects that there is only one time-domain unit with the latest end time among the k time-domain units, or the terminal expects that there are at least two time-domain units with the latest end time among the k time-domain units and that the subcarrier spacings corresponding to the at least two time-domain units are the same.

That is, through a configuration or scheduling limit from the network device, when the situation where there is more than one time-domain unit where the data transmission with the latest end time is located and the corresponding subcarrier spacings are different is avoided, the problem that the time-domain position of HARQ-ACK feedback is ambiguous will not occur.

It should be noted that the network device would try to avoid the situation where there is more than one data transmission with the latest end time and the corresponding subcarrier spacings are different during the configuration process or scheduling process, but the network device is not bound to avoid the situation where there is more than one data transmission with the latest end time and the corresponding subcarrier spacings are different. The network device may also configure or schedule more than one data transmission with the latest end time according to other factors. The terminal's "non-expectation" may be considered the expected configuration or scheduling of the terminal, and the network device may or may not follow this expectation. However, in most cases, the network device would try to follow this expectation.

In still other embodiments, the first time-domain unit is determined based on serving cell indexes corresponding to the k time-domain units. That is, the first time-domain unit is a time-domain unit with the smallest serving cell index among the k time-domain units; or the first time-domain unit is a time-domain unit with the largest serving cell index among the k time-domain units.

In still other embodiments, in the case where the time-domain unit with the latest end time among the k time-domain units includes at least two time-domain units and the subcarrier spacings corresponding to the at least two time-domain units are different, the first time-domain unit is the time-domain unit with the smallest serving cell index among the k time-domain units; alternatively, in the case where the time-domain unit with the latest end time among the k time-domain units includes at least two time-domain units and the subcarrier spacings corresponding to the at least two time-domain units are different, the first time-domain unit is the time-domain unit with the largest serving cell index among the k time-domain units. That is, when the time-domain position of the HARQ-ACK information cannot be uniquely determined by the time-domain unit that is determined by the end time, the first time-domain unit is determined using the serving cell index.

In still other embodiments, in the case where there is only one time-domain unit with the latest end time among the k time-domain units, the first time-domain unit is the time-domain unit with the latest end time among the k time-domain units. That is, when the time-domain unit with the latest end time among the k time-domain units may be uniquely determined, the first time-domain unit is the time-domain unit with the latest end time.

In still other embodiments, in the case where there are at least two time-domain units with the latest end time among the k time-domain units and the subcarrier spacings corresponding to the at least two time-domain units are the same, the first time-domain unit is the time-domain unit with the latest end time among the k time-domain units. That is, since the subcarrier spacings corresponding to the at least two time-domain units with the latest end time are the same, the time-domain positions of feed backing the HARQ-ACK information determined based on the at least two time-domain units with the latest end time are the same, and thus, the first time-domain unit includes all or part of time-domain units among the at least two time-domain units with the latest end time.

In some embodiments, the time-domain position of the HARQ-ACK information is determined based on the first time-domain unit and information carried in the first control information. For example, the time-domain position of the HARQ-ACK information in the uplink transmission is determined based on the first time-domain unit and a value indicated by the first indicator field in the DCI, where the first indicator field in the DCI is used to indicate timing from the first time-domain unit to the HARQ-ACK information.

It should be noted that the transmitting module 920 may be implemented as a separate apparatus, such as implemented as a transmitting apparatus of the first control information; and the receiving module 940 may be implemented as a separate apparatus, such as implemented as a receiving apparatus of the HARQ-ACK; which are not limited in the present disclosure.

It should be noted that the apparatus provided in the above embodiments is only illustrated by the division of the above functional modules when implementing its functions, in the actual application, the above-mentioned functions may be assigned to different function modules according to the actual need, that is, the content structure of the device may be divided into different function modules to complete all or part of the above-mentioned functions.

Regarding the apparatus in the above embodiments, the specific manner in which various modules perform the operations has been described specifically in the embodiments related to the method, and will not be elaborated here.

Please refer to FIG. 13, which illustrates a schematic structural diagram of a communication device (a terminal or a network device) provided in an embodiment of the present disclosure. The communication device may include: a processor 801, a receiver 802, a transmitter 803, a memory 804, and a bus 805.

The processor 801 includes one or more processing cores. The processor 801 executes various functional applications and information processing by running the software program(s) and module(s). In some embodiments, the processor 801 may be configured to implement the determination of the time-domain position of the HARQ-ACK information in the above-mentioned transmitting module 840 or receiving module 940.

The receiver 802 and the transmitter 803 may be implemented as a transceiver 806, and the transceiver 806 may be a communication chip. The receiver 802 may be configured to implement the functions and operations of the above-mentioned receiving module 820 and the receiving module 940; and the transmitter 803 may be configured to implement the functions and operations of the above-mentioned transmitting module 840 and the transmitting module 920.

The memory 804 is connected to the processor 801 via the bus 805. The memory 804 may be configured to store computer programs, and the processor 801 is configured to execute the computer programs to implement the various steps performed by the terminal or the network device in the above-mentioned method embodiments.

Furthermore, the memory 804 may be implemented by any type of volatile or non-volatile storage device or a combination thereof, and the volatile or non-volatile storage device includes but is not limited to: a random access memory (RAM), a read-only memory (ROM), an erasable programmable read-only memory (EPROM), an electrically erasable programmable read-only memory (EEPROM), a flash memory or other solid-state storage technologies, a compact disc read-only memory (CD-ROM), a digital video disc (DVD, high-density digital video disc) or other optical storage, a magnetic tape cassette, a magnetic tape, a disk storage or other magnetic storage devices.

When the communication device is implemented as the terminal, the processor and transceiver involved in the embodiments of the present disclosure may execute the operations performed by the terminal in any of the above-mentioned methods as illustrated in FIG. 3 to FIG. 5, which will not be repeated here.

In a possible implementation, when the communication device is implemented as the terminal, the receiver 802 is configured to receive first control information, the first control information being used to schedule multiple data transmissions; and the transmitter 803 is configured to transmit HARQ-ACK information for k data transmissions among the multiple data transmissions, a time-domain position of the HARQ-ACK information being determined based on a first data transmission, where the first data transmission includes at least one data transmission of the k data transmissions, k being a positive integer.

In a possible implementation, when the communication device is implemented as the terminal, the receiver 802 is configured to receive first control information, the first control information being used to schedule multiple time-domain units; and the transmitter 803 is configured to transmit HARQ-ACK information, the HARQ-ACK information corresponding to data transmissions in k time-domain units among the multiple time-domain units, and a time-domain position of the HARQ-ACK information being determined based on a first time-domain unit; where the first time-domain unit includes at least one time-domain unit of the k time-domain units, k being a positive integer.

When the communication device is implemented as the network device, the processor and transceiver involved in the embodiments of the present disclosure may execute the operations performed by the network device in any of the above-mentioned methods as illustrated in FIG. 8 to FIG. 10, which will not be repeated here.

In a possible implementation, when the communication device is implemented as the network device, the transmitter 803 is configured to transmit first control information, the first control information being used to schedule multiple data transmissions; and the receiver 802 is configured to receive HARQ-ACK information for k data transmissions among the multiple data transmissions, a time-domain position of the HARQ-ACK information being determined based on a first data transmission, where the first data transmission includes at least one data transmission of the k data transmissions, k being a positive integer.

In a possible implementation, when the communication device is implemented as the network device, the transmitter 803 is configured to transmit first control information, the first control information being used to schedule multiple time-domain units; and the receiver 802 is configured to receive HARQ-ACK information, the HARQ-ACK information corresponding to data transmissions in k time-domain units among the multiple time-domain units, and a time-domain position of the HARQ-ACK information being determined based on a first time-domain unit; where the first time-domain unit includes at least one time-domain unit of the k time-domain units, k being a positive integer.

The embodiments of the present disclosure further provide a computer-readable storage medium storing computer programs, and the computer programs are executed by a processor of a terminal or a network device to implement the above-mentioned transmitting method of an uplink message or receiving method of an uplink message.

In some embodiments, the computer-readable storage medium may include a read-only memory (ROM), a random-access memory (RAM), a solid state drive (SSD), or optical disc, etc. The random access memory may include a resistance random access memory (ReRAM) and a dynamic random access memory (DRAM).

The embodiments of the present disclosure further provide a chip, which includes programmable logic circuits and/or program instructions, and the chip, when run on a terminal or a network device, implements the HARQ-ACK feedback method.

The embodiments of the present disclosure further provide a computer program product or a computer program, where the computer program product or the computer program includes computer instructions, and the computer instructions are stored in a computer-readable storage medium. The processor of a terminal or a network device reads and executes the computer instructions from the computer-readable storage medium to implement the above-mentioned HARQ-ACK feedback method.

Those skilled in the art will recognize that, in one or more of the above-mentioned examples, the functions described in the embodiments of the present disclosure may be implemented using the hardware, the software, the firmware, or any combination thereof. When implemented using the software, these functions may be stored in a computer-readable medium or transmitted as one or more instructions or codes on a computer-readable medium. The computer-readable medium includes a computer storage medium and a communication medium, and the communication medium includes any medium that facilitates the transfer of computer programs from one place to another. The storage medium may be any available medium that may be accessed by a general-purpose or dedicated-purpose computer.

The above description is merely exemplary embodiments of the present disclosure and is not intended to limit the present disclosure. Any modifications, equivalent substitutions, improvements, etc., made within the spirit and principle of the present disclosure should be included within the protection scope of the present disclosure.

## Claims

1. A hybrid automatic repeat request acknowledgement (HARQ-ACK) feedback method, performed by a terminal and comprising:
receiving first control information, the first control information being used to schedule a plurality of data transmissions; and
transmitting HARQ-ACK information for k data transmissions among the plurality of data transmissions, a time-domain position of the HARQ-ACK information being determined based on a first data transmission,
wherein the first data transmission comprises at least one data transmission of the k data transmissions, k being a positive integer.

2. The method according to claim 1, wherein the first data transmission is determined according to at least one of:
end times corresponding respectively to all or part of data transmissions among the k data transmissions;
subcarrier spacings corresponding respectively to all or part of data transmissions among the k data transmissions;
serving cell indexes corresponding respectively to all or part of data transmissions among the k data transmissions;
numbers of time-domain units corresponding respectively to all or part of data transmissions among the k data transmissions; or
start times corresponding respectively to all or part of data transmissions among the k data transmissions.

3. The method according to claim 2, wherein
the first data transmission is a data transmission with a latest end time among the k data transmissions.

4. The method according to claim 2 or 3, wherein in a case where a data transmission with a latest end time among the k data transmissions comprises at least two data transmissions, the first data transmission is determined based on subcarrier spacings corresponding to the at least two data transmissions.

5. The method according to claim 4, wherein
the first data transmission is a data transmission with a smallest subcarrier spacing among the at least two data transmissions; or
the first data transmission is a data transmission with a largest subcarrier spacing among the at least two data transmissions.

6. The method according to claim 2 or 3, wherein in a case where a data transmission with a latest end time among the k data transmissions comprises at least two data transmissions, the first data transmission is determined based on serving cell indexes corresponding to the at least two data transmissions.

7. The method according to claim 6, wherein
the first data transmission is a data transmission with a smallest serving cell index among the at least two data transmissions; or
the first data transmission is a data transmission with a largest serving cell index among the at least two data transmissions.

8. The method according to claim 2 or 3, wherein in a case where a data transmission with a latest end time among the k data transmissions comprises at least two data transmissions, the first data transmission is determined based on numbers of time-domain resources corresponding to the at least two data transmissions.

9. The method according to claim 8, wherein
the first data transmission is a data transmission with a greatest number of time-domain resources among the at least two data transmissions; or
the first data transmission is a data transmission with a least number of time-domain resources among the at least two data transmissions.

10. The method according to claim 2 or 3, wherein in a case where a data transmission with a latest end time among the k data transmissions comprises at least two data transmissions, the first data transmission is determined based on start times corresponding to the at least two data transmissions.

11. The method according to claim 10, wherein
the first data transmission is a data transmission with an earliest start time among the at least two data transmissions; or
the first data transmission is a data transmission with a latest start time among the at least two data transmissions.

12. The method according to any one of claims 4, 6, 8 or 10, wherein the subcarrier spacings corresponding to the at least two data transmissions with the latest end time are different.

13. The method according to claim 2 or 3, wherein the terminal does not expect that there is more than one data transmission with a latest end time among the k data transmissions.

14. The method according to claim 2 or 3, wherein the terminal does not expect that a data transmission with a latest end time among the k data transmissions comprises at least two data transmissions, and that subcarrier spacings corresponding to the at least two data transmissions are different.

15. The method according to claim 2, wherein
the first data transmission is a data transmission with a smallest serving cell index among the k data transmissions; or
the first data transmission is a data transmission with a largest serving cell index among the k data transmissions.

16. The method according to claim 2, 3 or 15, wherein
in a case where a data transmission with a latest end time among the k data transmissions comprises at least two data transmissions and subcarrier spacings corresponding to the at least two data transmissions are different, the first data transmission is a data transmission with a smallest serving cell index among the k data transmissions; or
in a case where a data transmission with a latest end time among the k data transmissions comprises at least two data transmissions and subcarrier spacings corresponding to the at least two data transmissions are different, the first data transmission is a data transmission with a largest serving cell index among the k data transmissions.

17. The method according to claim 2 or 3, wherein
in a case where there is only one data transmission with a latest end time among the k data transmissions, the first data transmission is the data transmission with the latest end time among the k data transmissions.

18. The method according to claim 2 or 3, wherein
in a case where there are at least two data transmissions with a latest end time among the k data transmissions and subcarrier spacings corresponding to the at least two data transmissions are same, the first data transmission is a data transmission with the latest end time among the k data transmissions.

19. A hybrid automatic repeat request acknowledgement (HARQ-ACK) feedback method, performed by a terminal and comprising:
receiving first control information, the first control information being used to schedule a plurality of time-domain units; and
transmitting HARQ-ACK information, the HARQ-ACK information corresponding to data transmissions in k time-domain units among the plurality of time-domain units, and a time-domain position of the HARQ-ACK information being determined based on a first time-domain unit,
wherein the first time-domain unit comprises at least one time-domain unit of the k time-domain units, k being a positive integer.

20. The method according to claim 19, wherein the first time-domain unit is determined according to at least one of:
end times corresponding respectively to all or part of time-domain units among the k time-domain units;
subcarrier spacings corresponding respectively to all or part of time-domain units among the k time-domain units;
serving cell indexes corresponding respectively to all or part of time-domain units among the k time-domain units;
numbers of time-domain units corresponding respectively to data transmissions in all or part of time-domain units among the k time-domain units; or
start times corresponding respectively to data transmissions in all or part of time-domain units among the k time-domain units.

21. The method according to claim 20, wherein
the first time-domain unit is a time-domain unit with a latest end time among the k time-domain units.

22. The method according to claim 20 or 21, wherein in a case where a time-domain unit with a latest end time among the k time-domain units comprises at least two time-domain units, the first time-domain unit is determined based on subcarrier spacings corresponding to the at least two time-domain units.

23. The method according to claim 22, wherein
the first time-domain unit is a time-domain unit with a smallest subcarrier spacing among the at least two time-domain units; or
the first time-domain unit is a time-domain unit with a largest subcarrier spacing among the at least two time-domain units.

24. The method according to claim 20 or 21, wherein in a case where a time-domain unit with a latest end time among the k time-domain units comprises at least two time-domain units, the first time-domain unit is determined based on serving cell indexes corresponding to the at least two time-domain units.

25. The method according to claim 24, wherein
the first time-domain unit is a time-domain unit with a smallest serving cell index among the at least two time-domain units; or
the first time-domain unit is a time-domain unit with a largest serving cell index among the at least two time-domain units.

26. The method according to claim 20 or 21, wherein in a case where a time-domain unit with a latest end time among the k time-domain units comprises at least two time-domain units, the first time-domain unit is determined based on numbers of time-domain resources corresponding to data transmissions in the at least two time-domain units.

27. The method according to claim 26, wherein
the first time-domain unit is a time-domain unit where a data transmission with a greatest number of time-domain resources is located among the at least two time-domain units; or
the first time-domain unit is a time-domain unit where a data transmission with a least number of time-domain resources is located among the at least two time-domain units.

28. The method according to claim 20 or 21, wherein in a case where a time-domain unit with a latest end time among the k time-domain units comprises at least two time-domain units, the first time-domain unit is determined based on start times corresponding to data transmissions in the at least two time-domain units.

29. The method according to claim 28, wherein
the first time-domain unit is a time-domain unit where a data transmission with an earliest start time is located among the at least two time-domain units; or
the first time-domain unit is a time-domain unit where a data transmission with a latest start time is located among the at least two time-domain units.

30. The method according to any one of claims 22, 24, 26 or 28, wherein the subcarrier spacings corresponding to the at least two time-domain units with the latest end time are different.

31. The method according to claim 20 or 21, wherein the terminal does not expect that there is more than one time-domain unit with a latest end time among the k time-domain units.

32. The method according to claim 20 or 21, wherein the terminal does not expect that a time-domain unit with a latest end time among the k time-domain units comprises at least two time-domain units, and that subcarrier spacings corresponding to the at least two time-domain units are different.

33. The method according to claim 20, wherein
the first time-domain unit is a time-domain unit with a smallest serving cell index among the k time-domain units; or
the first time-domain unit is a time-domain unit with a largest serving cell index among the k time-domain units.

34. The method according to claim 20, 21 or 33, wherein
in a case where a time-domain unit with a latest end time among the k time-domain units comprises at least two time-domain units and subcarrier spacings corresponding to the at least two time-domain units are different, the first time-domain unit is a time-domain units with a smallest serving cell index among the k time-domain units; or
in a case where a time-domain unit with a latest end time among the k time-domain units comprises at least two time-domain units and subcarrier spacings corresponding to the at least two time-domain units are different, the first time-domain unit is a time-domain unit with a largest serving cell index among the k time-domain units.

35. The method according to claim 20 or 21, wherein
in a case where there is only one time-domain unit with a latest end time among the k time-domain units, the first time-domain unit is the time-domain unit with the latest end time among the k time-domain units.

36. The method according to claim 20 or 21, wherein
in a case where there are at least two time-domain units with a latest end time among the k time-domain units and subcarrier spacings corresponding to the at least two time-domain units are same, the first time-domain unit is a time-domain unit with the latest end time among the k time-domain units.

37. A hybrid automatic repeat request acknowledgement (HARQ-ACK) feedback method, performed by a network device and comprising:
transmitting first control information, the first control information being used to schedule a plurality of data transmissions; and
receiving HARQ-ACK information for k data transmissions among the plurality of data transmissions, a time-domain position of the HARQ-ACK information being determined based on a first data transmission,
wherein the first data transmission comprises at least one data transmission of the k data transmissions, k being a positive integer.

38. The method according to claim 37, wherein the first data transmission is determined according to at least one of:
end times corresponding respectively to all or part of data transmissions among the k data transmissions;
subcarrier spacings corresponding respectively to all or part of data transmissions among the k data transmissions;
serving cell indexes corresponding respectively to all or part of data transmissions among the k data transmissions;
numbers of time-domain units corresponding respectively to all or part of data transmissions among the k data transmissions; or
start times corresponding respectively to all or part of data transmissions among the k data transmissions.

39. The method according to claim 38, wherein
the first data transmission is a data transmission with a latest end time among the k data transmissions.

40. The method according to claim 38 or 39, wherein in a case where a data transmission with a latest end time among the k data transmissions comprises at least two data transmissions, the first data transmission is determined based on subcarrier spacings corresponding to the at least two data transmissions.

41. The method according to claim 40, wherein
the first data transmission is a data transmission with a smallest subcarrier spacing among the at least two data transmissions; or
the first data transmission is a data transmission with a largest subcarrier spacing among the at least two data transmissions.

42. The method according to claim 38 or 39, wherein in a case where a data transmission with a latest end time among the k data transmissions comprises at least two data transmissions, the first data transmission is determined based on serving cell indexes corresponding to the at least two data transmissions.

43. The method according to claim 42, wherein
the first data transmission is a data transmission with a smallest serving cell index among the at least two data transmissions; or
the first data transmission is a data transmission with a largest serving cell index among the at least two data transmissions.

44. The method according to claim 38 or 39, wherein in a case where a data transmission with a latest end time among the k data transmissions comprises at least two data transmissions, the first data transmission is determined based on numbers of time-domain resources corresponding to the at least two data transmissions.

45. The method according to claim 44, wherein
the first data transmission is a data transmission with a greatest number of time-domain resources among the at least two data transmissions; or
the first data transmission is a data transmission with a least number of time-domain resources among the at least two data transmissions.

46. The method according to claim 38 or 39, wherein in a case where a data transmission with a latest end time among the k data transmissions comprises at least two data transmissions, the first data transmission is determined based on start times corresponding to the at least two data transmissions.

47. The method according to claim 46, wherein
the first data transmission is a data transmission with an earliest start time among the at least two data transmissions; or
the first data transmission is a data transmission with a latest start time among the at least two data transmissions.

48. The method according to any one of claims 40, 42, 44 or 46, wherein the subcarrier spacings corresponding to the at least two data transmissions with the latest end time are different.

49. The method according to claim 38 or 39, wherein a terminal does not expect that there is more than one data transmission with a latest end time among the k data transmissions.

50. The method according to claim 38 or 39, wherein a terminal does not expect that a data transmission with a latest end time among the k data transmissions comprises at least two data transmissions, and that subcarrier spacings corresponding to the at least two data transmissions are different.

51. The method according to claim 38, wherein
the first data transmission is a data transmission with a smallest serving cell index among the k data transmissions; or
the first data transmission is a data transmission with a largest serving cell index among the k data transmissions.

52. The method according to claim 38, 39 or 51, wherein
in a case where a data transmission with a latest end time among the k data transmissions comprises at least two data transmissions and subcarrier spacings corresponding to the at least two data transmissions are different, the first data transmission is a data transmission with a smallest serving cell index among the k data transmissions; or
in a case where a data transmission with a latest end time among the k data transmissions comprises at least two data transmissions and subcarrier spacings corresponding to the at least two data transmissions are different, the first data transmission is a data transmission with a largest serving cell index among the k data transmissions.

53. The method according to claim 38 or 39, wherein
in a case where there is only one data transmission with a latest end time among the k data transmissions, the first data transmission is the data transmission with the latest end time among the k data transmissions.

54. The method according to claim 38 or 39, wherein
in a case where there are at least two data transmissions with a latest end time among the k data transmissions and subcarrier spacings corresponding to the at least two data transmissions are same, the first data transmission is a data transmission with the latest end time among the k data transmissions.

55. A hybrid automatic repeat request acknowledgement (HARQ-ACK) feedback method, performed by a network device and comprising:
transmitting first control information, the first control information being used to schedule a plurality of time-domain units; and
receiving HARQ-ACK information, the HARQ-ACK information corresponding to data transmissions in k time-domain units among the plurality of time-domain units, and a time-domain position of the HARQ-ACK information being determined based on a first time-domain unit,
wherein the first time-domain unit comprises at least one time-domain unit of the k time-domain units, k being a positive integer.

56. The method according to claim 55, wherein the first time-domain unit is determined according to at least one of:
end times corresponding respectively to all or part of time-domain units among the k time-domain units;
subcarrier spacings corresponding respectively to all or part of time-domain units among the k time-domain units;
serving cell indexes corresponding respectively to all or part of time-domain units among the k time-domain units;
numbers of time-domain units corresponding respectively to data transmissions in all or part of time-domain units among the k time-domain units; or
start times corresponding respectively to data transmissions in all or part of time-domain units among the k time-domain units.

57. The method according to claim 56, wherein
the first time-domain unit is a time-domain unit with a latest end time among the k time-domain units.

58. The method according to claim 56 or 57, wherein in a case where a time-domain unit with a latest end time among the k time-domain units comprises at least two time-domain units, the first time-domain unit is determined based on subcarrier spacings corresponding to the at least two time-domain units.

59. The method according to claim 58, wherein
the first time-domain unit is a time-domain unit with a smallest subcarrier spacing among the at least two time-domain units; or
the first time-domain unit is a time-domain unit with a largest subcarrier spacing among the at least two time-domain units.

60. The method according to claim 56 or 57, wherein in a case where a time-domain unit with a latest end time among the k time-domain units comprises at least two time-domain units, the first time-domain unit is determined based on serving cell indexes corresponding to the at least two time-domain units.

61. The method according to claim 60, wherein
the first time-domain unit is a time-domain unit with a smallest serving cell index among the at least two time-domain units; or
the first time-domain unit is a time-domain unit with a largest serving cell index among the at least two time-domain units.

62. The method according to claim 56 or 57, wherein in a case where a time-domain unit with a latest end time among the k time-domain units comprises at least two time-domain units, the first time-domain unit is determined based on numbers of time-domain resources corresponding to data transmissions in the at least two time-domain units.

63. The method according to claim 62, wherein
the first time-domain unit is a time-domain unit where a data transmission with a greatest number of time-domain resources is located among the at least two time-domain units; or
the first time-domain unit is a time-domain unit where a data transmission with a least number of time-domain resources is located among the at least two time-domain units.

64. The method according to claim 56 or 57, wherein in a case where a time-domain unit with a latest end time among the k time-domain units comprises at least two time-domain units, the first time-domain unit is determined based on start times corresponding to data transmissions in the at least two time-domain units.

65. The method according to claim 64, wherein
the first time-domain unit is a time-domain unit where a data transmission with an earliest start time is located among the at least two time-domain units; or
the first time-domain unit is a time-domain unit where a data transmission with a latest start time is located among the at least two time-domain units.

66. The method according to any one of claims 58, 60, 62 or 64, wherein the subcarrier spacings corresponding to the at least two time-domain units with the latest end time are different.

67. The method according to claim 56 or 57, wherein a terminal does not expect that there is more than one time-domain unit with a latest end time among the k time-domain units.

68. The method according to claim 56 or 57, wherein a terminal does not expect that a time-domain unit with a latest end time among the k time-domain units comprises at least two time-domain units, and that subcarrier spacings corresponding to the at least two time-domain units are different.

69. The method according to claim 56, wherein
the first time-domain unit is a time-domain unit with a smallest serving cell index among the k time-domain units; or
the first time-domain unit is a time-domain unit with a largest serving cell index among the k time-domain units.

70. The method according to claim 56, 57 or 69, wherein
in a case where a time-domain unit with a latest end time among the k time-domain units comprises at least two time-domain units and subcarrier spacings corresponding to the at least two time-domain units are different, the first time-domain unit is a time-domain units with a smallest serving cell index among the k time-domain units; or
in a case where a time-domain unit with a latest end time among the k time-domain units comprises at least two time-domain units and subcarrier spacings corresponding to the at least two time-domain units are different, the first time-domain unit is a time-domain unit with a largest serving cell index among the k time-domain units.

71. The method according to claim 56 or 57, wherein
in a case where there is only one time-domain unit with a latest end time among the k time-domain units, the first time-domain unit is the time-domain unit with the latest end time among the k time-domain units.

72. The method according to claim 56 or 57, wherein
in a case where there are at least two time-domain units with a latest end time among the k time-domain units and subcarrier spacings corresponding to the at least two time-domain units are same, the first time-domain unit is a time-domain unit with the latest end time among the k time-domain units.

73. A hybrid automatic repeat request acknowledgement (HARQ-ACK) feedback apparatus, applied in a terminal and comprising:
a receiving module, configured to receive first control information, the first control information being used to schedule a plurality of data transmissions; and
a transmitting module, configured to transmit HARQ-ACK information for k data transmissions among the plurality of data transmissions, a time-domain position of the HARQ-ACK information being determined based on a first data transmission,
wherein the first data transmission comprises at least one data transmission of the k data transmissions, k being a positive integer.

74. A hybrid automatic repeat request acknowledgement (HARQ-ACK) feedback apparatus, applied in a terminal and comprising:
a receiving module, configured to receive first control information, the first control information being used to schedule a plurality of time-domain units; and
a transmitting module, configured to transmit HARQ-ACK information, the HARQ-ACK information corresponding to data transmissions in k time-domain units among the plurality of time-domain units, and a time-domain position of the HARQ-ACK information being determined based on a first time-domain unit,
wherein the first time-domain unit comprises at least one time-domain unit of the k time-domain units, k being a positive integer.

75. A hybrid automatic repeat request acknowledgement (HARQ-ACK) feedback apparatus, applied in a network device and comprising:
a transmitting module, configured to transmit first control information, the first control information being used to schedule a plurality of data transmissions; and
a receiving module, configured to receive HARQ-ACK information for k data transmissions among the plurality of data transmissions, a time-domain position of the HARQ-ACK information being determined based on a first data transmission,
wherein the first data transmission comprises at least one data transmission of the k data transmissions, k being a positive integer.

76. A hybrid automatic repeat request acknowledgement (HARQ-ACK) feedback apparatus, applied in a network device and comprising:
a transmitting module, configured to transmit first control information, the first control information being used to schedule a plurality of time-domain units; and
a receiving module, configured to receive HARQ-ACK information, the HARQ-ACK information corresponding to data transmissions in k time-domain units among the plurality of time-domain units, and a time-domain position of the HARQ-ACK information being determined based on a first time-domain unit,
wherein the first time-domain unit comprises at least one time-domain unit of the k time-domain units, k being a positive integer.

77. A terminal, comprising: a processor, a receiver connected to the processor, and a transmitter connected to the processor;
wherein the receiver is configured to receive first control information, the first control information being used to schedule a plurality of data transmissions; and
the transmitter is configured to transmit HARQ-ACK information for k data transmissions among the plurality of data transmissions, a time-domain position of the HARQ-ACK information being determined based on a first data transmission,
wherein the first data transmission comprises at least one data transmission of the k data transmissions, k being a positive integer.

78. A terminal, comprising: a processor, a receiver connected to the processor, and a transmitter connected to the processor;
wherein the receiver is configured to receive first control information, the first control information being used to schedule a plurality of time-domain units; and
the transmitter is configured to transmit HARQ-ACK information, the HARQ-ACK information corresponding to data transmissions in k time-domain units among the plurality of time-domain units, and a time-domain position of the HARQ-ACK information being determined based on a first time-domain unit,
wherein the first time-domain unit comprises at least one time-domain unit of the k time-domain units, k being a positive integer.

79. A network device, comprising: a processor, a receiver transmitter connected to the processor, and a transmitter connected to the processor;
wherein the transmitter is configured to transmit first control information, the first control information being used to schedule a plurality of data transmissions; and
the receiver is configured to receive HARQ-ACK information for k data transmissions among the plurality of data transmissions, a time-domain position of the HARQ-ACK information being determined based on a first data transmission,
wherein the first data transmission comprises at least one data transmission of the k data transmissions, k being a positive integer.

80. A network device, comprising: a processor, a receiver connected to the processor, and a transmitter connected to the processor;
wherein the transmitter is configured to transmit first control information, the first control information being used to schedule a plurality of time-domain units; and
the receiver is configured to receive HARQ-ACK information, the HARQ-ACK information corresponding to data transmissions in k time-domain units among the plurality of time-domain units, and a time-domain position of the HARQ-ACK information being determined based on a first time-domain unit,
wherein the first time-domain unit comprises at least one time-domain unit of the k time-domain units, k being a positive integer.

81. A computer-readable storage medium, wherein the computer-readable storage medium stores a computer program, and the computer program is executed by a processor to implement the HARQ-ACK feedback method according to any one of claims 1 to 17, or to enable a computer device to implement the HARQ-ACK feedback method according to any one of claims 18 to 34, or to enable the computer device to implement the HARQ-ACK feedback method according to any one of claims 35 to 51, or to enable the computer device to implement the HARQ-ACK feedback method according to any one of claims 52 to 68.

82. A chip, comprising a circuit structure, wherein the chip is configured to operate in a computer device to enable the computer device to perform the HARQ-ACK feedback method according to any one of claims 1 to 17, or to implement the HARQ-ACK feedback method according to any one of claims 18 to 34, or to implement the HARQ-ACK feedback method according to any one of claims 35 to 51, or to implement the HARQ-ACK feedback method according to any one of claims 52 to 68.

83. A computer program product, comprising computer instructions, wherein the computer instructions are stored in a computer-readable storage medium, a processor of a computer device reads the computer instructions from the computer-readable storage medium and executes the computer instructions, to enable the computer device to perform the HARQ-ACK feedback method according to any one of claims 1 to 17, or to enable the computer device to implement the HARQ-ACK feedback method according to any one of claims 18 to 34, or to enable the computer device to implement the HARQ-ACK feedback method according to any one of claims 35 to 51, or to enable the computer device to implement the HARQ-ACK feedback method according to any one of claims 52 to 68.

84. A computer program, wherein the computer program is executed by a processor of a computer device to implement the HARQ-ACK feedback method according to any one of claims 1 to 17, or to enable the computer device to implement the HARQ-ACK feedback method according to any one of claims 18 to 34, or to enable the computer device to implement the HARQ-ACK feedback method according to any one of claims 35 to 51, or to enable the computer device to implement the HARQ-ACK feedback method according to any one of claims 52 to 68.
